# EUROPEAN PATENT APPLICATION

(11) **EP 1 703 279 A1**
(43) Date of publication of application: **20.09.2006**
(21) Application number: 04807259.9
(22) Date of filing: 17.12.2004
(51) Int. Cl.: G01N 27/62

(54) **METHOD OF IDENTIFYING PROTEIN WITH THE USE OF MASS SPECTROMETRY**

(30) Priority: 19.12.2003 JP 2003422781
(71) Applicant: NEC CORPORATION, Minato-ku, Tokyo 108-8001 (JP)
(72) Inventor: TORII, Hiroaki, c/o NEC Corporation, Tokyo 108-8001 (JP); MIYAZAKI, Kenji, c/o NEC Corporation, Tokyo 108-8001 (JP); KAMIJO, Kenichi, c/o NEC Corporation, Tokyo 108-8001 (JP); TSUGITA, Akira, c/o NEC Corporation, Tokyo 108-8001 (JP)
(74) Representative: MacLean, Martin Robert
(86) International application number: PCT/JP2004/018901
(87) International publication number: WO 2005/062034

(57) **Abstract**

The present invention provides an approach for identifying with high accuracy, a known protein or a variant of the known protein derived from the same genomic gene as in a target protein to be analyzed, based on a mass spectrometric result of a plurality of peptide fragments obtained from site-specific enzymatic digestion of the target protein to be analyzed by referring to nucleotide sequences of genes encoding known proteins on a database and to deduced full-length amino acid sequences thereof. In the approach of the present invention, a candidate known protein of identification is specified with high accuracy by such a process comprising steps of comparing actually measured molecular weight values of the peptide fragments derived from the target protein to be analyzed, which are obtained with the use of peptide fragmentation by the site-specific proteolytic treatment, with predicted molecular weight values of peptide fragments predicted from the deduced full-length amino acid sequences of the known proteins and making comparison in terms of the numbers of matching fragments, the consecutiveness of amino acid sequences of matching fragments of the known protein, and the prediction of variation in a mismatching fragment.

## Description

### Technical Field

The present invention relates to a method for identifying a protein with the use of mass spectrometry. More particularly, the present invention relates to an analysis method available in the identification of a protein having post-translational modification, a splicing variant-type protein, or a variant protein having a different phenotype derived from single nucleotide polymorphism.

### Background Art

When naturally collected peptides and proteins are studied for their biological properties, for example their *in-vivo* functions and roles, the identification of the amino acid sequences thereof and of the presence or absence of a variety of modifications is indispensable. For many peptides and proteins, deduced amino acid sequences of translated peptide chains are now determined based on corresponding genetic information, that is, nucleotide sequences of genomic genes encoding their peptides or of cDNAs prepared from mRNAs thereof. Particularly, as genomic gene analysis proceeds, information about nucleotide sequences of coding genes and about amino acid sequences deduced from reading frames is accumulated for target peptide and protein derived from a variety of organisms and recorded in a variety of databases.

For a variety of peptides and proteins encoded on genomic genes, their genetic information is transcribed to precursor RNA chains on the basis of their gene DNAs. In the subsequent precursor RNA splicing process, endogenous intron sequences in the precursor RNA chains are removed to produce mRNAs where nucleotide sequences of exon regions are linked together. According to such a coding sequence in mRNA, the mRNA is translated to a corresponding peptide chain.

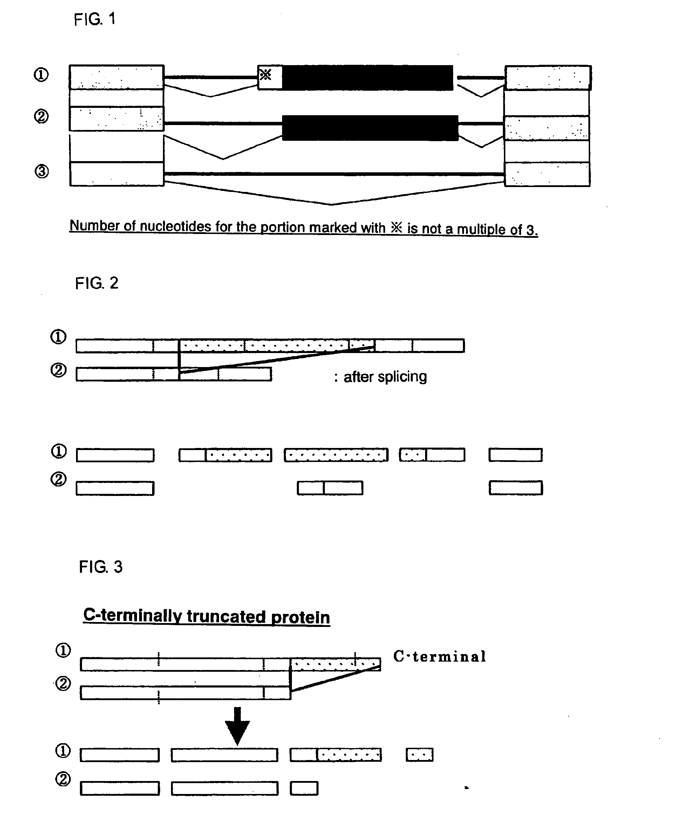

In the precursor RNA splicing process, which removes intron sequences, a plurality of splicing forms are sometimes generated as shown in Figure 1 to produce plural types of mRNAs respectively exhibiting partial difference in the structures of the exon regions forming the whole coding sequences. This phenomenon is called "alternative splicing", and peptide chains translated according to these plural types of mRNAs have amino acid sequence portions partially differing in accordance with the difference in the constructions of the exon regions. Proteins having the partially differing amino acid sequence portions attributed to this alternative splicing are in the relationship of variants with each other and can be called "splicing variants" (splicing variant-type proteins). Alternatively, the precursor RNA splicing process brings about not the "alternative splicing" but a phenomenon called "protein splicing" in which after a peptide chain is translated according to mRNA, a portion thereof is removed, and then amino acid sequences flanking on both ends of the partially removed amino acid sequence are connected and converted to a peptide chain. Proteins having amino acid sequence portions partially differing due to this "protein splicing" are in the relationship of variants with each other, and particularly the variants from which the amino acid sequence is partially removed can be called protein splicing variant-type proteins.

On the other hand, there exists a protein that undergoes post-translational "processing" in which after a peptide chain is translated according to mRNA, for example a pre-protein having a signal peptide at the N-terminus thereof is converted to a mature protein by the signal peptidase cleavage of the signal peptide portion. Furthermore, a protein sometimes undergo a variety of amino acid side chain modifications associated concomitantly with an activation or inactivation process, which is related with the expression of function of the protein itself. For example, in the nuclear import mechanism of a transcription factor protein, phosphorylation by kinase and dephosphorylation by phosphatase are known to serve as principal steps of carrying regulation thereof. In addition, a mechanism has also been proposed, in which the transcription factor protein, after preactivated, undergoes the cleavage of a nuclear import signal portion located at, for example the C terminus and is converted to a nuclear-localized protein. These proteins that have undergone a variety of "processings" or modifications can be called proteins having "post-translational modification".

All of the splicing variant-type proteins or protein splicing variant-type proteins illustrated above have no variation in the genomic genes encoding them. However, the final product proteins themselves are variants exhibiting difference in the amino acid sequences. The proteins having "post-translational modification" also have no variation in the genomic genes encoding them. However, their specific structures themselves have the deletion of a portion of the N-terminus or C-terminus or the introduction of a variety of modifying groups to the amino acid side chain in the translated peptide chains.

On the other hand, there is a case in which the presence of variation in a genomic gene itself results in variation in an amino acid sequence encoded thereby. A phenomenon called "single nucleotide polymorphism" in which only 1 of 3 nucleotides constituting 1 codon is converted to another nucleotide is known as one form of variation found in a gene nucleotide sequence. Even when this "single nucleotide polymorphism" is present, an amino acid sequence itself of a translated peptide chain is often preserved. However, the type of an amino acid encoded by the codon associated with the "single nucleotide polymorphism" often varies, with the result that variation occurs in an amino acid sequence of a translated peptide chain to produce a so-called variant protein having a different "phenotype". For the variant protein having a different "phenotype", alteration (change) may also occur in the function and physiological property of the original protein without variation, and some variant proteins having a different phenotype have been shown to be the causes of diseases having a variety of genetic factors.

### Disclosure of the Invention

For a protein contained in a biological sample, one approach for isolating and identifying the protein is, for example an approach comprising utilizing the origin thereof, the apparent molecular weight observed in electrophoresis separation, and fragmentary information about the partially obtained amino acid sequence to compare them with a variety of data recorded in a database on proteins previously reported, selecting a candidate protein that satisfies the fragmentary information, followed by further analysis, and judging whether or not the target protein to be analyzed matches to the known protein candidate. Specifically, a site-specific proteolytic enzyme selectively cleaving a peptide chain at a particular amino acid or amino acid sequence is allowed to act on the isolated protein. Respective molecular weights of a group of generated peptide fragments are measured and compared with respective molecular weights of a group of peptide fragments generated by allowing the same site-specific proteolytic enzyme to act on a candidate known protein. If a complete match is obtained between them, the isolated protein can be identified with considerable reliability to be the known protein selected as a candidate. Namely, for proteins identical to each other, respective groups of peptide fragments generated by allowing the same site-specific proteolytic enzyme to act on the proteins are identical in principle, and measurement results of respective molecular weights of these groups of peptide fragments also completely match to each other. An identification method called PMF method utilizing this principle is known.

Today, in regard to a peptide fragment up to a certain number of amino acid residues, the use of mass spectrometry, for example MALDI-TOF-MS (Matrix Assisted Laser Desorption Ionization Time-of-Flight Mass Spectrometry) method allows for the measurement with high precision of a molecular weight (M+H/Z; Z=1) of a monovalent "parent cation species" not fragmented in the ionization process and a molecular weight (M-H/Z; Z=1) of a monovalent "parent anion species" not fragmented in the ionization process, which correspond to a molecular weight (M) of the peptide fragment. In addition, it is also possible to analyze with high accuracy, the C-terminal partial amino acid sequence of a peptide chain of a protein itself by mass spectrometry by utilizing, for example an approach of "METHOD OF ANALYZING PEPTIDE FOR DETERMINING C-TERMINAL AMINO ACID SEQUENCE" disclosed in the pamphlet of international publication WO 03/081255A1. Thus, if a standard sample of a known protein candidate is obtainable, actually measured data on respective molecular weights of a group of peptide fragments to be compared is also available. Therefore, it is possible to judge with considerable reliability whether or not the target protein to be analyzed and the known protein candidate are identical, based on information obtained in the mass spectrometry.

In reality, a standard sample of each protein recorded in a database on known proteins previously reported is less available, and information of the disclosed amino acid sequences thereof is mostly made up of deduced amino acid sequence information of translated peptide chains from corresponding genetic information, that is, nucleotide sequences of genomic genes encoding their peptides or of cDNAs prepared from mRNAs thereof. The database on known proteins often contains proteins for which only the partially incomplete information of their amino acid sequences is disclosed, such as information from which, for example concerning a protein that undergoes post-translational "processing" for conversion to a mature protein, details of a partial amino acid sequence of a signal peptide portion actually cleaved by signal peptidase are unavailable.

Therefore, the development and research of an approach are currently energetically pushed forward, which comprises: instead of utilizing actually measured data on respective molecular weights of a group of peptide fragments generated by allowing the site-specific proteolytic enzyme to act on each of known protein candidates, utilizing as a reference standard, respective formula weights (predicted molecular weights) corresponding to amino acid sequence portions of a group of peptide fragments presumptively generated by site-specific proteolytic enzyme digestion, based on deduced amino acid sequence information of translated peptide chains from corresponding genetic information, that is, nucleotide sequences of genomic genes encoding their full-length peptide chains or of cDNAs prepared from mRNAs thereof; comparing the predicted molecular weights with respective molecular weights of a group of peptide fragments actually measured in mass spectrometry of the target protein to be analyzed, and judging with considerable reliability whether or not the target protein to be analyzed and the known protein candidate are identical, based on whether or not they exhibit a high match.

Particularly when a target protein to be analyzed is the protein having the above described "post-translational modification", the splicing variant-type protein, or the protein splicing variant-type protein, deduced amino acid sequence information of translated peptide chains from nucleotide sequences of genomic genes encoding them or of cDNAs prepared from mRNAs thereof is for ideal full-length peptide chains. Accordingly, there exist peptide fragments exhibiting a mismatch in comparing respective formula weights (predicted molecular weights) as a reference standard corresponding to amino acid sequence portions of a group of peptide fragments presumptively generated by site-specific proteolytic enzyme digestion with respective molecular weights of a group of peptide fragments actually measured in mass spectrometry of the target protein to be analyzed. Alternatively, when a target protein to be analyzed is a so-called variant protein having a different "phenotype" in which variation derived from "single nucleotide polymorphism" occurs in the amino acid sequence of a translated peptide chain, there also exist peptide fragments exhibiting a mismatch in comparing respective formula weights (predicted molecular weights) corresponding to amino acid sequence portions of a group of peptide fragments expected from "standard" amino acid sequence information of each of known protein candidates previously reported with respective molecular weights of a group of peptide fragments actually measured in mass spectrometry of the target protein to be analyzed.

In other words, in the case where a considerable number of peptide fragments have a match between actually measured molecular weights (Mex) and predicted molecular weights (Mref) in comparing the respective formula weights (predicted molecular weights) corresponding to amino acid sequence portions of a group of peptide fragments expected from "standard" amino acid sequence information of each of known protein candidates previously reported with the respective molecular weights of a group of peptide fragments actually measured in mass spectrometry of the target protein to be analyzed, the rational prediction of a factor causing a mismatch for the peptide fragments exhibiting a mismatch allows for the identification of the target protein to be analyzed, that is, the identification of a known protein candidate to be translated from the gene encoding it, and for the deduction of the factor causing the mismatch with high probability. Namely, when the target protein to be analyzed corresponds to, for example a protein having "post-translational modification", or a splicing variant or "single nucleotide polymorphism" variant of a certain known protein, it is possible to identify with high probability, a "known protein candidate" to be used as a reference in analyzing the "post-translational modification" or the variation in the amino acid sequence, which is the factor bringing about the peptide fragments exhibiting a mismatch.

In the present invention, in addition to "known proteins" in a narrow sense, of which existence is actually confirmed and reported, "known proteins" in a wide sense for which nucleotide sequence information of coding genes and deduced amino acid sequence information of translated peptide chains are recorded in a database and known, including "proteins whose expression is known" for which their existence itself is not actually confirmed but the existence of mRNA utilized in translation thereof is confirmed and reported and "proteins whose coding genes are known" for which the existence of mRNA is not confirmed but coding genes capable of transcription to precursor RNA and subsequent translation from mRNA to a full-length peptide chain are predicted as a result of genomic gene analysis and recorded in a database, are all called "known proteins." Thus, for example when nucleotide sequence information of coding genes on the genome and deduced amino acid sequence information of peptide chains translated from mRNA are reported, such as "proteins whose coding genes are known" for which splicing variant-type proteins that are products of an identical known gene on the genome are actually confirmed and their coding genes are recorded in a database, these splicing variant-type proteins are also included in the "known proteins".

The present invention has been achieved for solving the problems, and an object of the present invention is to provide a novel analysis approach for identifying a protein with the use of mass spectrometry, comprising: obtaining a measurement result of respective molecular weights actually measured by mass spectrometry for a group of peptide fragments derived from the target protein to be analyzed generated by isolating the target protein to be analyzed and subjecting the isolated target protein to be analyzed to site-specific proteolytic treatment that selectively cleaves a peptide-chain at a particular amino acid or amino acid sequence; in regard to known proteins, referring to an available database on nucleotide sequence information of genomic genes encoding them and of cDNAs prepared form mRNAs thereof and on deduced amino acid sequence information of full-length peptide chains translated according to the coding nucleotide sequences, and utilizing as a reference standard, respective formula weights (predicted molecular weights) corresponding to amino acid sequence portions of a group of peptide fragments presumptively generated by subjecting a full-length peptide chain having the deduced amino acid sequence to the site-specific proteolytic treatment; and utilizing as a first judgment criterion, the numbers of peptide fragments having a match between the actually measured molecular weights (Mex) and the predicted molecular weights (Mref) as a reference standard, thereby allowing for the identification of a known protein candidate to be translated from the gene encoding it and for the identification of a known gene candidate to express the identified known protein candidate as a gene product, and if peptide fragments exhibiting a mismatch are found, allowing for the deduction of a factor causing the mismatch with high probability. To be more specific, an object of the present invention is to provide an analysis approach whereby when the target protein to be analyzed corresponds to a protein having post-translational modification, a splicing variant-type protein, or a variant protein having a different phenotype derived from single nucleotide polymorphism relative to the known protein candidate selected based on the first judgment criterion from the database on nucleotide sequence information of known genomic genes and of cDNAs prepared from mRNAs thereof and on deduced amino acid sequence information of full-length peptide chains translated according to the coding nucleotide sequences, a factor causing a mismatch for peptide fragments exhibiting a mismatch between the actually measured molecular weights (Mex) actually found and the predicted molecular weights (Mref) as a reference standard can be deduced with high probability to be the protein having post-translational modification, the splicing variant-type protein, or the variant protein having a different phenotype derived from single nucleotide polymorphism.

The present inventors have conducted diligent studies for attaining the objects. For example, a target protein to be analyzed to be identified is isolated from an original sample with the use of separation means such as electrophoresis.

Folding of the target protein to be analyzed is unfolded, while interchain and intrachain Cys-Cys bonds in peptide chains constituting the target protein to be analyzed are subjected, as required, to reduction treatment to cleave the disulfide (S-S) bond.

The peptide chains constituting the target protein to be analyzed are thereby linearized, and a plurality of linearized peptide chains constituting the target protein to be analyzed are respectively separated and collected.

Subsequently, each of the linearized peptide chains can be subjected to site-specific proteolytic treatment that selectively cleaves a peptide chain at a particular amino acid or amino acid sequence to thereby selectively prepare peptide fragments derived from the peptide chains constituting the target protein to be analyzed.

Consequently, it has been confirmed that the use of mass spectrometry such as MALDI-TOF-MS suitable for peptide analysis allows for the determination of actually measured mass values (Mex) of the plurality of observed peptide fragments, based on a result measured with high precision for masses of the plurality of generated peptide fragments as molecular weights (M+H/Z; Z=1) of corresponding monovalent "parent cation species" and molecular weights (M-H/Z; Z=1) of corresponding monovalent "parent anion species".

On the other hand, in regard to each protein recorded in a database on known proteins previously reported, for example based on sequence information about a nucleotide sequence of a genomic gene encoding a full-length amino acid sequence of a peptide chain constituting the each protein, about a nucleotide sequence of a reading frame in mRNA enabling translation of the full-length amino acid sequence, and about a (deduced) full-length amino acid sequence encoded by the nucleotide sequence, predicted molecular weights (Mref) of a plurality of presumptively generated peptide fragments for a peptide chain constituting the known protein in subjecting the peptide chain having the full-length amino acid sequence at the time of translation thereof to the linearizing treatment and the site-specific proteolytic treatment, that is, to pretreatment that reduces Cys-Cys bond contained in the peptide chain having the full-length amino acid sequence to a sulfanyl (-SH) group on the Cys side chain and linearizes the peptide chain and to the site-specific proteolytic treatment that selectively cleaves a peptide chain at a particular amino acid or amino acid sequence, can be calculated.

A data set of the predicted molecular weights (Mref) of the plurality of peptide fragments presumptively generated from the each known protein, which are calculated based on the sequence information on the each known protein recorded in the database, is a used as a reference standard and compared with a data set of actually measured molecular weights (Mex) of the plurality of peptide fragments determined for the target protein to be analyzed.

Thereby, the numbers of peptide fragments judged as having a substantial match in consideration of a measurement error attributed to the utilized mass spectrometry itself are determined each individually for the known proteins as a reference standard. In this first comparison operation, the number of the "actually measured" peptide fragments judged as having a "match" to the each known protein and the number of the "actually measured" peptide fragments not judged as having a "match" to the each known protein are sorted out, and known proteins are selected in decreasing order of the number of the "actually measured" peptide fragments judged as having a "match" and can be classified into a group of "first candidate known protein(s)" as a candidate of identification for the target protein to be analyzed.

It has been revealed that at the stage of this first comparison operation,
in a case (A) in which the number of the "actually measured" peptide fragments that is not judged as having a "match" is zero or in which in referring to the full-length amino acid sequence of the selected "first candidate known protein" and arranging the "actually measured" peptide fragments that are judged as having a "match" in positions to be occupied by the corresponding "predicted" peptide fragments derived from the "first candidate known protein", it is judged that a group of the "actually measured" peptide fragments that are judged as having a "match" constitutes consecutive amino acid sequences, the target protein to be analyzed can be identified with high accuracy to be equivalent to the selected "first candidate known protein".

Alternatively, in the case where there remain the "actually measured" peptide fragments not judged as having a "match", it has been revealed that in a case (B-1) in which in referring to the full-length amino acid sequence of the selected "first candidate known protein" and arranging the "actually measured" peptide fragments judged as having a "match" in positions to be occupied by the corresponding "predicted" peptide fragments derived from the "first candidate known protein", it is judged that a group of the "actually measured" peptide fragments judged as having a "match" constitutes consecutive amino acid sequences, the target protein to be analyzed can be identified with high accuracy to be equivalent to the selected "first candidate known protein" or to be a product of a gene encoding the selected "first candidate known protein".

In this case (B-1), it has been revealed that when in regard to the "actually measured" peptide fragments not judged as having a "match", it is deduced from a group of unidentified "predicted peptide fragments which are derived from the primarily identified "first candidate known protein" and which are linked to the "consecutive amino acid sequence" portions identified in the judgment that there remain the "actually measured" peptide fragments not judged as having a "match" by any reason of:
(B-1-1) the generation of "actually measured" peptide fragments having actually measured mass values (Mex) differing from the predicted molecular weights (Mref) of the unidentified "predicted" peptide fragments due to post-translational modification;
(B-1-2) the generation of "actually measured" peptide fragments having actually measured mass values (Mex) differing from the predicted molecular weights (Mref) of the unidentified "predicted" peptide fragments due to the development of splicing differing from a possible splicing process in "the first candidate known protein"; and
(B-1-3) the generation of "actually measured" peptide fragments having actually measured mass values (Mex) differing from the predicted molecular weights (Mref) of the unidentified "predicted" peptide fragments due to the development of amino acid substitution associated with "single nucleotide polymorphism" in the (deduced) full-length amino acid sequence and the group of the unidentified "predicted" peptide fragments in the "first candidate known protein",
the target protein to be analyzed can be identified with higher accuracy to be equivalent to the selected "first candidate known protein" or to be a product of a gene encoding the selected "first candidate known protein".

Additionally, in the case where there remain the "actually measured" peptide fragments not judged as having a "match", it has been revealed that in a case (B-2) in which in referring to the full-length amino acid sequence of the selected "first candidate known protein" and arranging the "actually measured" peptide fragments judged as having a "match" in positions to be occupied by the corresponding "predicted" peptide fragments derived from the "first candidate known protein", it is judged that a group of the "actually measured" peptide fragments judged as having a "match" constitutes consecutive amino acid sequences except for positions to be occupied by some "predicted" peptide fragments, the target protein to be analyzed can be identified with relatively high accuracy to be equivalent to the selected "first candidate known protein".

In this case (B-2), it has been revealed that when in regard to the "actually measured" peptide fragments not judged as having a "match", it is deduced for a group of "predicted" peptide fragments which are derived from the primarily identified "first candidate known protein", which are unidentified by the "actually measured" peptide fragments having a "match" within the "consecutive amino acid sequences" identified in the judgment, and which correspond to the internal unidentified region that there remain the "actually measured" peptide fragments not judged as having a "match" by any reason of:
(B-2-1) the generation of "actually measured" peptide fragments having actually measured mass values (Mex) differing from the predicted molecular weights (Mref) of the "predicted" peptide fragments in the internal unidentified region due to post-translational modification;
(B-2-2) the generation of "actually measured" peptide fragments having actually measured mass values (Mex) differing from the predicted molecular weights (Mref) of the "predicted" peptide fragments in the internal unidentified region due to the development of splicing differing from a possible splicing process in "the first candidate known protein"; and
(B-2-3) the generation of "actually measured" peptide fragments having actually measured mass values (Mex) differing from the predicted molecular weights (Mref) of the "predicted" peptide fragments in the internal unidentified region due to the development of amino acid substitution associated with "single nucleotide polymorphism" in the (deduced) full-length amino acid sequence and the group of the unidentified "predicted" peptide fragments in the "first candidate known protein",
the target protein to be analyzed can be identified with higher accuracy to be equivalent to the selected "first candidate known protein" or to be a product derived from a gene encoding the selected "first candidate known protein". The present inventors have completed that present invention on the basis of a series of findings described above.

Namely, the method for identifying a protein with the use of mass spectrometry according to the present invention is
a method for identifying a protein with the use of mass spectrometry, characterized in that
the method is a method in which by referring to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence in regard to known individual proteins, which information is recorded in a database on known proteins, one of the known proteins recorded in the database which is assessed to correspond to a target protein to be analyzed is selected therefor , based on a mass spectrometric result actually measured for the target protein to be analyzed,
wherein
(1) the mass spectrometric result actually measured for the target protein is a result obtained from mass spectrometric analysis comprising at least a set of respective actually measured mass values (Mex) of a plurality of peptide fragments determined by
   subjecting a peptide chain isolated in advance that constitutes the target protein to be analyzed to reduction treatment capable of cleaving disulfide
   (S-S) bond in Cys-Cys bond present therein and to treatment that unfolds folding of the target protein to linearize the peptide chain constituting the target protein,
   further carrying out treatment for site-specific proteolysis that selectively cleaves a peptide chain at a particular amino acid or amino acid sequence to evenly and selectively prepare a plurality of peptide fragments derived from the linearized peptide chain collected from the target protein, and
   determining the respective actually measured mass values (Mex) of the plurality of peptide fragments, based on a result for masses (M) of the plurality of the peptide fragments produced that is measured by mass spectrometry as molecular weights (M+H/Z; Z=1) of corresponding monovalent "parent cation species" or as molecular weights (M-H/Z; Z=1) of corresponding monovalent "parent anion species";
(2) in regard to known individual proteins recorded in said database on known proteins, referring to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence,
   calculating predicted molecular weights (Mref) of a plurality of peptide fragments derived from a peptide chain having said full-length amino acid sequence, presumably produced by subjecting the peptide chain having the full-length amino acid sequence that is translated according to the genomic gene encoding the known protein to the reduction treatment for a sulfanyl (-SH) group on a Cys side chain and to the treatment of site-specific proteolysis to create a set of the predicted molecular weights (Mref) of the plurality of predicted peptide fragments derived from the known protein, and
   employing as a reference standard database, a data set of the predicted molecular weights (Mref) of the plurality of peptide fragments, wherein the data set is composed of total sets of the predicted molecular weights (Mref) of the plurality of known protein-derived predicted peptide fragments calculated for all the known individual proteins recorded in the database on known proteins;
(3) performing a first comparison operation whereby the set of the respective actually measured mass values (Mex) of the plurality of peptide fragments determined for the target protein to be analyzed is compared with each of the sets of the predicted molecular weights (Mref) of the plurality of known protein-derived predicted peptide fragments calculated for the known individual proteins recorded in the database on known proteins, and
   the number of the actually measured peptide fragments derived from the target protein to be analyzed and the number of the known protein-derived predicted peptide fragments judged as having a substantial match between the respective actually measured mass values (Mex) and the predicted molecular weights (Mref) of the plurality of predicted peptide fragments in each of the sets derived from the known proteins in consideration of a measurement error attributed to the utilized mass spectrometry itself are determined each individually for the known proteins comprised in the reference standard database, and
   selecting from among the known proteins determined in the first comparison operation, known proteins in decreasing order of the number of the actually measured peptide fragments derived from the target protein to be analyzed and the number of the known protein-derived predicted peptide fragments judged as having a match to classify a known protein exhibiting the highest number of the match into a group of first candidate known protein(s) as a candidate of identification for the target protein to be analyzed; and
(4) when the group of the first candidate known protein(s) comprises one type of known protein, judging the one type of known protein selected from the database as being a single candidate of identification for the target protein to be analyzed.

In this method,
in the case where in referring to sequence information about the selected known protein judged in the step (4) as being a single candidate of identification for the target protein to be analyzed,
the number of actually measured peptide fragments that are derived from the target protein to be analyzed, which are not judged in the first comparison operation of the step (3) as having a match to the predicted molecular weights (Mref) of the plurality of predicted peptide fragments in the set derived from the known protein judged as being a candidate of identification, is zero,
the selected known protein judged in the step (4) as being a single candidate of identification for the target protein to be analyzed may be judged as being a highly accurate single candidate of identification.

Alternatively, in the method,
in the case where in referring to sequence information about the selected known protein judged in the step (4) as being a single candidate of identification for the target protein to be analyzed,
when arranging the plurality of the actually measured peptide fragments derived from the target protein to be analyzed that are judged in the first comparison operation of the step (3) as having a match to the predicted molecular weights (Mref) of the plurality of predicted peptide fragments in the set derived from the known protein judged as being a candidate of identification, in positions to be occupied by the corresponding predicted peptide fragments derived from the known protein, a group of the actually measured peptide fragments that are judged as having a match constitutes consecutive amino acid sequences that is contained in the full-length amino acid sequence of the known protein,
the selected known protein judged in the step (4) as being a single candidate of identification for the target protein to be analyzed may be judged as being a highly accurate single candidate of identification.

Additionally, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, there would exist post-translational modification attributed to modifying group addition to a side chain of an amino acid residue present in the unidentified predicted peptide fragments, calculating predicted molecular weights (Mref) of predicted peptide fragments having the post-translational modification attributed to modifying group addition to a side chain of an amino acid residue; and
performing a second comparison operation whereby the presence or absence of the unidentified actually measured peptide fragment having the actually measured mass value (Mex) matching to any of the predicted molecular weights (Mref) of the predicted peptide fragments having the post-translational modification attributed to modifying group addition is judged, wherein
when at least one unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is selected,
the selected known protein judged in the step (4) as being a single candidate of identification for the target protein to be analyzed may be judged as being a highly accurate single candidate of identification.

Alternatively, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for an N-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of N-terminal truncation would occur to convert the known protein to a mature protein, calculating predicted molecular weights (Mref) of a plurality of predicted peptide fragments derived from the post-translational N-terminal processing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the post-translational N-terminal processing is judged, wherein
when at least one unidentified actually measured peptide fragment derived from the target protein to be analyzed having the actually measured mass value (Mex) matching to any of the predicted molecular weights (Mref) of the predicted peptide fragments derived from the post-translational N-terminal processing is selected,
the selected known protein judged in the step (4) as being a single candidate of identification for the target protein to be analyzed may be judged as being a highly accurate single candidate of identification.

Likewise, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a C-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of C-terminal truncation would occur to convert the known protein to a C-terminally truncated protein, calculating predicted molecular weights (Mref) of a plurality of predicted peptide fragments derived from the post-translational processing of C-terminal truncation, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the post-translational processing of C-terminal truncation is judged, wherein
when at least one unidentified actually measured peptide fragment derived from the target protein to be analyzed having the actually measured mass value (Mex) matching to any of the predicted molecular weights (Mref) of the predicted peptide fragments derived from the post-translational C-terminal processing is selected,
the selected known protein judged in the step (4) as being a single candidate of identification for the target protein to be analyzed may be judged as being a highly accurate single candidate of identification.

Moreover, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in genomic gene portions encoding portions of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, splicing different from presumable RNA splicing in a plurality of exons contained in the genomic gene portions would occur, calculating predicted molecular weights (Mref) of a plurality of predicted peptide fragments derived from the alternative splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the alternative splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the alternative splicing is selected,
the selected known protein judged in the step (4) as being a single candidate of identification for the target protein to be analyzed may be judged as being a highly accurate single candidate of identification.

Alternatively, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in portions of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, protein splicing that removes a portion of an amino acid sequence thereof would occur, calculating predicted molecular weights (Mref) of a plurality of predicted peptide fragments derived from the protein splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the protein splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the protein splicing is selected,
the selected known protein judged in the step (4) as being a single candidate of identification for the target protein to be analyzed may be judged as being a highly accurate single candidate of identification.

Additionally, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for genomic gene portions encoding a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, one replacement of a translated amino acid attributed to single nucleotide polymorphism would occur in an exon contained in the genomic gene portions, calculating predicted molecular weights (Mref) of a plurality of predicted peptide fragments derived from the amino acid replacement of single nucleotide polymorphism, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is judged, wherein
when at least one unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is selected,
the selected known protein judged in the step (4) as being a single candidate of identification for the target protein to be analyzed may be judged as being a highly accurate single candidate of identification.

On the other hand, in the method,
in the case where in referring to sequence information about the selected known protein judged in the step (4) as being a single candidate of identification for the target protein to be analyzed, and
arranging the plurality of the actually measured peptide fragments derived from the target protein to be analyzed that are judged in the first comparison operation of the step (3) as having a match to the predicted molecular weights (Mref) of the plurality of predicted peptide fragments in the set derived from the known protein judged as being a candidate of identification, in positions to be occupied by the corresponding predicted peptide fragments derived from the known protein,
a group of the actually measured peptide fragments that is judged as having a match constitutes consecutive amino acid sequences contained in the full-length amino acid sequence of the known protein except for positions to be occupied by some predicted peptide fragments,
the selected known protein judged in the step (4) as being a single candidate of identification for the target protein to be analyzed may be judged as being a highly accurate single candidate of identification.

In this method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a group of predicted peptide fragments which are located within the consecutive amino acid sequences portions contained in the full-length amino acid sequence of the known protein, which are derived from the known protein judged as being a candidate of identification, and which are unidentified by the corresponding actually measured peptide fragments, there would exist post-translational modification attributed to modifying group addition to a side chain of an amino acid residue present in the unidentified predicted peptide fragments, calculating predicted molecular weights (Mref) of predicted peptide fragments having the post-translational modification attributed to modifying group addition to a side chain of an amino acid residue; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is judged, wherein
when at least one unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is selected,
the selected known protein judged in the step (4) as being a single candidate of identification for the target protein to be analyzed may be judged as being a highly accurate single candidate of identification.

Moreover, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in genomic gene portions encoding portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, splicing different from presumable RNA splicing in a plurality of exons contained in the genomic gene portions would occur, calculating predicted molecular weights (Mref) of a plurality of predicted peptide fragments derived from the alternative splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the different splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the alternative splicing is selected,
the selected known protein judged in the step (4) as being a single candidate of identification for the target protein to be analyzed may be judged as being a highly accurate single candidate of identification.

Alternatively, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, protein splicing that removes a portion of an amino acid sequence thereof would occur, calculating predicted molecular weights (Mref) of a plurality of predicted peptide fragments derived from the protein splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the protein splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the protein splicing is selected,
the selected known protein judged in the step (4) as being a single candidate of identification for the target protein to be analyzed may be judged as being a highly accurate single candidate of identification.

Additionally, in the method,
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for genomic gene portions encoding respective portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, one substitution of a translated amino acid attributed to single nucleotide polymorphism would occur in an exon contained in the genomic gene portions, calculating predicted molecular weights (Mref) of a plurality of predicted peptide fragments derived from the amino acid substitution of single nucleotide polymorphism, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the amino acid substitution of single nucleotide polymorphism is judged, wherein
when at least one unidentified actually measured peptide fragment derived from the target protein to be analyzed having the actually measured mass value (Mex) matching to any of the predicted molecular weights (Mref) of the predicted peptide fragments derived from the amino acid substitution of single nucleotide polymorphism is selected,
the selected known protein judged in the step (4) as being a single candidate of identification for the target protein to be analyzed may be judged as being a highly accurate single candidate of identification.

The method further comprises: at least in the second comparison operation,
utilizing as the mass spectrometric result actually measured for the target protein to be analyzed,
in addition to the set of the respective actually measured mass values (Mex) of the plurality of peptide fragments that are determined based on a result for masses (M) of the plurality of generated peptide fragments measured by mass spectrometry as molecular weights (M+H/Z; Z=1) of corresponding monovalent "parent cation species" or as molecular weights (M-H/Z; Z=1) of corresponding monovalent "parent anion species",
also at least a result of molecular weights of fragmented derivative ion species measured by MS/MS analysis for the actually measured peptide fragment derived from the target protein to be analyzed that is judged in the first comparison operation as being the unidentified actually measured peptide fragment derived from the target protein to be analyzed as "daughter ion species" derived from the "parent cation species" of the peptide fragment or as "daughter ion species" derived from the "parent anion species" of the peptide fragment;
in regard to the actually measured peptide fragment derived from the target protein to be analyzed newly selected in the second comparison operation as being the unidentified actually measured peptide fragment derived from the target protein to be analyzed having the actually measured mass value (Mex) matching to any of the predicted molecular weights (Mref) of the predicted peptide fragments,
performing comparison whereby molecular weights of fragmented derivative ion species presumably generated in MS/MS analysis due to the assumed amino acid sequence and additional modification group constituting the corresponding predicted peptide fragment are also compared with the actually measured result of the molecular weights of the fragmented derivative ion species for the actually measured peptide fragment derived from the target protein to be analyzed; and
when correspondence relationship is also confirmed at least between the actually measured result of the molecular weights of the fragmented derivative ion species for the actually measured peptide fragment derived from the target protein to be analyzed and the predicted values of the molecular weights of the predicted fragmented derivative ion species for the corresponding predicted peptide fragment,
regarding as judgment with high accuracy, the judgment of the actually measured peptide fragment derived from the target protein to be analyzed selected in the second comparison operation, wherein
the selected known protein judged in the step (4) as being a single candidate of identification for the target protein to be analyzed may be judged as being a highly accurate single candidate of identification.

The method of the present invention further comprises prior to the site-specific proteolytic treatment, performing on the linearized peptide chain, selective introduction of a protecting group for the sulfanyl (-SH) group on the Cys side chain, to prepare the resulting linearized peptide chain having the protected Cys. In this case, predicted molecular weights of the predicted peptide fragments are calculated under the assumption that this selective introduction of a protecting group for the sulfanyl group on the Cys side chain is performed on the predicted peptide fragments.

Particularly in the case where the peptide chain constituting the target protein to be analyzed exhibits specific mass change attributed to a variety of factors described below when compared with a peptide chain having a full-length amino acid sequence encoded on the corresponding genomic gene recorded in a database, the method for identifying a protein with the use of mass spectrometry according to the present invention also serves as a method which in regard to known individual proteins recorded in a database on known proteins, refers to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence, and selects with high accuracy, one of the known proteins recorded in the database which is assessed to correspond to a target protein to be analyzed, based on information obtained in mass spectrometry for the target protein to be analyzed. In other words, when the target protein to be analyzed corresponds to, for example a protein having "post-translational modification", or a splicing variant or "single nucleotide polymorphism" variant of a certain known protein, the method according to the present invention serves as means capable of identifying with high probability, a "known protein candidate" to be used as a reference in analyzing the "post-translational modification" or the variation in the amino acid sequence, which is the factor bringing about the peptide fragments exhibiting a mismatch.

### Brief Description of the Drawings

Figure 1 is a drawing schematically showing two types of splicing variants translated from an identical genomic gene through an alternative splicing process and a coding region of a peptide chain actually translated when there is an identification error of an exon region;
Figure 2 is a drawing schematically showing post-translational partial removal of a peptide chain attributed to a protein splicing process and difference in peptide fragmentation by protease digestion resulting from the partial removal of the peptide chain;
Figure 3 is a drawing schematically showing difference in peptide fragmentation by protease digestion between a C-terminally truncated protein that has undergone post-translational removal of the C-terminal portion of its peptide chain and a precursor having a full-length amino acid sequence;
Figure 4 is a drawing schematically showing a form in which a cleavage site is introduced into a peptide fragment due to "single nucleotide polymorphism," and two cleaved peptide fragments are derived by protease digestion;
Figure 5 is a drawing schematically showing a form in which a cleavage site between adjacent peptide fragments disappears due to "single nucleotide polymorphism," and a peptide fragment having these two peptide fragment portions linked together remains in protease digestion; and
Figure 6 is a drawing schematically showing the number (Nex-id) of identified actually measured peptide fragments derived from a target protein to be analyzed, the number (Nref-id) of identified predicted peptide fragments derived from a known protein, the number (Nex-ni) of unidentified actually measured peptide fragments derived from the target protein to be analyzed, and the number (Nref-nf) of unidentified predicted peptide fragments derived from the known protein.

### Best Mode for Carrying Out the Invention

When a protein contained in a biological sample is an endogenous protein derived from a eukaryote, particularly a mammal typified by a human, intron portions contained in a precursor RNA chain transcribed from its genomic gene are removed therefrom by a precursor RNA splicing process to produce mRNA having a coding nucleotide sequence where a plurality of exon regions are linked in agreement with their reading frames. A peptide chain translated from this mRNA is in a form having a so-called full-length amino acid sequence encoded by the coding nucleotide sequence.

Amino acid sequences of known proteins for which the whole amino acid sequences have been elucidated by actually analyzing the complete amino acids of peptide chains constituting them are few, and most of them have been identified as (deduced) full-length amino acid sequences by utilizing nucleotide sequence analysis of mRNAs utilized in the translation of peptide chains in the biosynthesis of the known proteins or of cDNAs prepared with the mRNAs as templates or nucleotide sequence analysis of genomic genes transcribed to precursor RNA chains serving as origins in the production of the mRNAs and elucidating reading frames enabling translation to a series of amino acid sequences from initiation to termination codons. Recently, a database is available, which integrates particularly based on a result of genome analysis, information about (deduced) full-length amino acid sequences predicted to be translated in vivo, about nucleotide sequences of genomic genes encoding the full-length amino acid sequences, about nucleotide sequences of a group of a series of exons constituting the translation regions, and about nucleotide sequences of intron regions divided between the exons.

Simultaneously, post-translational modification bringing about actual forms existing in vivo such as a protein which after translated, undergoes by a processing process, the removal of a signal peptide portion or the like located at the N terminus of a peptide chain having a full-length amino acid sequence and becomes a mature protein, or a variety of nuclear import proteins, for example a transcription factor protein taking a form which undergoes at the stage of nuclear import, phosphorylation at a particular amino acid residue and subsequent dephosphorylation or undergoes in the process of transmission to the nuclear membrane, additional processing, has been elucidated to no small extent, based on the achievements of biochemical research or pathological research. However, information about their post-translational modification is not recorded as additional information in the database on the sequence information.

In addition, there exits a phenomenon called alternative splicing, though occurring with less frequency, in which in the precursor RNA splicing process for removing intron portions from a precursor RNA chain to produce mRNA, a plurality of splicing sites are present, and from among these plural alternatives, different kinds of splicings occur selectively depending on determinants such as individuals and situations. In this case, one or plural exon regions located between 2 introns removed are also removed along with splicing between the separate splicing sites, and partial amino acid sequences encoded by these removed exon regions are not encoded in the resulting mRNA. Moreover, an amino acid itself encoded by a sequence spanning the junction of contiguous exon regions is located at the same position from the N terminus and however, is likely to be an amino acid different from original one as a result of the third character or the second and third characters differing. For example, Ser encoded by AG/T may be changed to Arg encoded by AG/A.

Furthermore, even if no alternative splicing occurs, the possibility can not be excluded that the database has an identification error such that the linkage of the ends of exon regions identified temporarily in genomic gene analysis is mistaken, and a result identified to be Thr encoded by AC/A consisting of final AC at the exon and first A at the exon that follows should have been identified to be Lys encoded by A/AA consisting of final A at the exon and first AA at the exon that follows. In many cases, although exon regions have been identified temporarily in genomic gene analysis, verification by nucleotide sequence analysis of corresponding mRNA or cDNA thereof has not been conducted. In this case, the possibility can not be excluded that the database has an identification error such that actual exon regions differ from exon regions identified temporarily in genomic gene analysis and are a plurality of open reading regions found in different reading frames (frameshift) containing regions judged to be introns flanking the temporarily identified exon regions. In any case, when amino acid sequences of actually translated peptide chains are compared with the (deduced) full-length amino acid sequences recorded in the database, regions corresponding to equivalent exon regions have partial amino acid sequences differing from each other.

In addition, for a peptide chain having a full-length amino acid sequence translated from mRNA, it is also reported that there exists a protein cis-splicing process in rare cases in which within the peptide chain, an intervening peptide fragment is removed as a result of linkage of peptide chains of its flanking sites. In this protein cis-splicing process as well, the final product protein partially lacks an amino acid sequence when compared with the full-length amino acid sequence. However, unlike the alternative splicing process, which deletes an amino acid sequence on the exon basis, the deletion of an amino acid sequence attributed to the protein cis-splicing process has no correlation with exon regions.

In addition to the above-described protein which after translated, undergoes by a processing process, the removal of a signal peptide portion or the like located at the N terminus of a peptide chain having a full-length amino acid sequence and becomes a mature protein, for example a protein which is biosynthesized once as a pre-protein or pro-protein containing a pre- or pro-sequence at the N terminus and converted to an active protein by the removal of the pre or pro sequence has also been reported in large numbers. Moreover, a case has also been reported in large numbers, in which during the conversion to an active protein, a C-terminal peptide portion is removed to convert it to a C-terminally truncated protein. In these proteins that have finally undergone the removal of a given N-terminal or C-terminal partial peptide chain from the peptide chain having a full-length amino acid sequence after translation, the remaining peptide chain is composed of given consecutive amino acid sequence portions of the full-length amino acid sequence.

Genomic genes are also known to include a plurality of genes respectively encoding homologous proteins composed of amino acid sequences having high homology to each other. For example, there exists a case in large numbers, in which proteins mutually encoded by allele or multiple alleles have very slight difference between their amino acid sequences and have been reported as allelic homologous proteins or multiple allelic homologous proteins. In addition to these proteins homologous to each other but having amino acid sequences respectively encoded by different genes, the presence of gene variation has been reported in large numbers, in which genes originally exhibiting the same gene locus have very slight difference in their nucleotide sequences in a reflection of the polymorphism of each individual thereof. Among others, there exists gene polymorphism in which the very slight difference of the nucleotide sequence produces no change in the nucleotide length of the whole nucleotide sequence and in the arrangement of exons and introns but varies one nucleotide to another nucleotide, and an amino acid species encoded by the varied codon in the exon differs according to this variation of one nucleotide. This kind of gene polymorphism is called "single nucleotide polymorphism". Particularly when amino acid replacement occurs in a translated amino acid sequence, a variant protein attributed to "single nucleotide polymorphism" is biosynthesized.

In addition to the cases described above in which a peptide chain constituting an actually found protein has a different amino acid sequence when compared with a peptide chain having a full-length amino acid sequence encoded on the genomic gene, a case has been reported for many proteins, in which a variety of enzyme proteins act after translation on amino acid side chains contained in the peptide chain constituting the protein to introduce modifying groups thereinto.

Typical examples of this post-translational modification can include phosphorylation, methylation, acetylation, hydroxylation, formylation, and pyroglutamylation.

Examples of the methylation include methyl group substitution for an amino group (N-methylation), methyl group substitution for a hydroxy group (O-methylation), and methyl group substitution for a sulfanyl group (S-methylation) for methyl group transfer reaction by methyltransferase in the protein after translation. To be more specific, methyl group transfer to a side chain of an amino acid residue occurs at histidine, lysine, and arginine residues in N-methylation, at glutamic acid and aspartic acid residues in O-methylation, and at a cysteine residue in S-methylation.

Examples of the phosphorylation can include phosphorylation by protein kinase including the phosphorylation of a hydroxy group on serine/threonine side chains involving serine/threonine kinase and the phosphorylation of a hydroxy group on a tyrosine side chain involving tyrosine kinase. Examples of the formylation can include conversion to N-formylglutamic acid and N-formylmethionine by formyltransferase. Examples of the acetylation can include conversion to N-acetylated lysine by an acetylating enzyme. Examples of the hydroxylation can include conversion to hydroxypurine and 5-hydroxylysine by hydroxylase.

In the cases described above in which a peptide chain constituting an actually found protein has a different amino acid sequence when compared with a peptide chain having a full-length amino acid sequence encoded on the genomic gene and in the cases described above in which a variety of enzyme proteins act after translation on amino acid side chains contained in the peptide chain constituting the protein to introduce modifying groups thereinto, the peptide chains constituting the actual proteins exhibit specific mass change attributed to the respective factors when compared with a peptide chain having a full-length amino acid sequence encoded on the genomic gene corresponding to the proteins.

Particularly in the case where a peptide chain constituting a target protein to be analyzed exhibits specific mass change attributed to a variety of factors described above when compared with a peptide chain having a full-length amino acid sequence encoded on the corresponding genomic gene, a method for identifying a protein with the use of mass spectrometry according to the present invention also serves as a method which in regard to known individual proteins recorded in a database on known proteins, refers to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence, and selects with high accuracy, one of the known proteins recorded in the database that is assessed as equivalent to the target protein to be analyzed, based on information obtained in mass spectrometry for the target protein to be analyzed. Namely, when the target protein to be analyzed corresponds to, for example a protein having "post-translational modification", or a splicing variant or "single nucleotide polymorphism" variant of a certain known protein, the method according to the present invention serves as means capable of identifying with high probability, a "known protein candidate" to be used as a reference in analyzing the "post-translational modification" or the variation in the amino acid sequence, which is the factor bringing about peptide fragments exhibiting a mismatch.

Hereinafter, the principles of the method for identifying a protein with the use of mass spectrometry according to the present invention will be described more fully. Moreover, when a peptide chain constituting a target protein to be analyzed exhibits specific mass change attributed to a variety of factors described above when compared with a peptide chain having a full-length amino acid sequence encoded on the corresponding genomic gene, specific embodiments of application of the method for identifying a protein with the use of mass spectrometry according to the present invention to each of the factors will be described more fully.

### (A) Identification of protein consisting of peptide chain having full-length amino acid sequence encoded on genomic gene

The method for identifying a protein with the use of mass spectrometry according to the present invention prevents ion species derived from unknown impurities from appearing in spectrum in mass spectrometry in isolating in advance a target protein to be analyzed contained in a biological sample and subjecting it to mass spectrometry.

Meanwhile, the isolated protein generally preserves its three-dimensional structure or has Cys-Cys bond such as cysteine bridge structure in its peptide chain. Therefore, in the method of the present invention, the isolated protein is subjected to reduction treatment capable of cleaving disulfide (S-S) bond in the Cys-Cys bond and to treatment that unfolds folding of the target protein to be analyzed and linearizes the peptide chain constituting the target protein to be analyzed.

The linearized peptide chain thus pretreated is separated and further subjected to site-specific proteolytic treatment that selectively cleaves a peptide chain at a particular amino acid or amino acid sequence. This site-specific proteolytic treatment fragments the target protein to be analyzed at specific cleavage sites present in the peptide chain to give a plurality of peptide fragments. In this procedure, if a portion of two adjacent peptide fragments on the peptide chain is cleaved and the other portion thereof is not cleaved and remains linked, this becomes a factor making the elucidation of spectrum in subsequent mass spectrometry difficult. Thus, in the method of the present invention, the plurality of peptide fragments derived from the linearized peptide chain collected from the target protein to be analyzed are generally prepared into those cleaved evenly and selectively so as to prevent the possibility that a portion thereof is cleaved and the other portion thereof is not cleaved and remains linked.

Namely, in the structural analysis of a low-molecular-weight organic compound with the use of mass spectrometry, molecular weights (M/Z) of a parent ion species of the organic compound and of a variety of daughter ion species generated by the fragmentation of the parent ion species are measured to predict the molecular structure thereof. However, for a protein, it is generally difficult to determine a molecular weight of its parent ion species by mass spectrometry. Therefore, the linearized peptide chain collected from the target protein to be analyzed is fragmented evenly and selectively in advance, and molecular weights of corresponding "parent ion species" of the peptide fragments are measured for all the plurality of generated peptide fragments and utilized as molecular weights of daughter ion species derived from the original linearized peptide chain. In principle, the molecular weight of the original linearized peptide chain can be calculated by adding up the respective molecular weights of the corresponding "parent ion species" of the peptide fragments.

In this procedure, the MS/MS analysis on the respective "parent ion species" of the peptide fragments also allows for the measurement of molecular weights of a variety of daughter ion species generated by the fragmentation of the parent ion species. According to circumstances, it is often possible to predict the type and number of amino acid residues contained in each of the peptide fragments by comprehensively analyzing information about the molecular weights of the "parent ion species" of the peptide fragments and about the molecular weights of a variety of "daughter ion species" generated by the fragmentation thereof. However, each of the peptide fragments themselves is a peptide chain containing a plurality of amino acid residues. Therefore, even if the type and number of the amino acid residues contained therein are predicted, it is generally difficult to identify the order of linkage thereof, that is, the whole of partial amino acid sequences. Likewise, it is generally difficult to determine the order in which the plurality of peptide fragments are linked in the original linearized peptide chain.

Therefore, in the method of the present invention, provided that the target protein to be analyzed is identical to a known protein for which information about its amino acid sequence has already been reported or is a product of a gene encoding the known protein, an approach described below that selects the known protein serving as a candidate of identification is adopted.

If one of known proteins is composed of a peptide chain having an amino acid sequence identical to that of the target protein to be analyzed, respective molecular weights of "parent ion species" of a plurality of peptide fragments obtained in subjecting this known protein to the treatment that linearizes its peptide chain and to the site-specific proteolytic treatment produce in principle, the same mass spectrometric result as that obtained for the target protein to be analyzed. However, for many kinds of known proteins, it is not easy in reality to actually obtain their standard samples and perform comparison measurement. Therefore, in the method of the present invention, a plurality of presumptively generated peptide fragments derived from a peptide chain having a full-length amino acid sequence in subjecting the peptide chain having the full-length amino acid sequence to the reduction treatment for a sulfanyl (-SH) group on a Cys side chain and to the site-specific proteolytic treatment are predicted by referring to full-length amino acid sequences reported for known proteins. Because the amino acid sequences of the predicted peptide fragments are determined at the point in time when they have been predicted, corresponding molecular weights can be calculated. The present invention utilizes instead of a set of actually measured molecular weight values of "parent ion species" of respective peptide fragments for standard samples of known proteins, a set of predicted molecular weights (Mref) of the plurality of predicted peptide fragments derived from each of the known proteins, which are predicted in the above-described manner based on the (deduced) full-length amino acid sequences of the known proteins.

In regard to known individual proteins recorded in a database on known proteins utilized in the method of the present invention, by referring to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence, a set of predicted molecular weights (Mref) of a plurality of predicted peptide fragments derived from the known protein is created in advance for each of the known proteins recorded in the database according to the above-described manner. A data set of the predicted molecular weights (Mref) of the plurality of peptide fragments composed of total sets of the predicted molecular weights (Mref) of the plurality of known protein-derived predicted peptide fragments calculated for all the known proteins is utilized as a reference standard database.

For the target protein to be analyzed, at least a set of respective actually measured mass values (Mex) of the plurality of peptide fragments determined based on a result measured by mass spectrometry for masses (M) of the plurality of generated peptide fragments as molecular weights (M+H/Z; Z=1) of corresponding monovalent "parent cation species" or as molecular weights (M-H/Z; Z=1) of corresponding monovalent "parent anion species" is prepared. Moreover, a measurement result of molecular weights of a variety of daughter ion species generated in MS/MS analysis by the fragmentation of the monovalent "parent cation species" or the monovalent "parent anion species" corresponding to the respective peptide fragments is additionally obtained as a second mass spectrometric result.

In a first comparison operation, at first,
the set of the respective actually measured mass values (Mex) of the plurality of peptide fragments determined for the target protein to be analyzed is compared with each of the sets of the predicted molecular weights (Mref) of the plurality of known protein-derived predicted peptide fragments in the reference standard database, and
the number (Nex-id) of the actually measured peptide fragments derived from the target protein to be analyzed and the number (Nref-id) of the known protein-derived predicted peptide fragments judged as having a substantial match between the respective actually measured mass values (Mex) and the predicted molecular weights (Mref) of the plurality of predicted peptide fragments in each of the sets derived from the known proteins in consideration of a measurement error attributed to the utilized mass spectrometry itself are determined.

According to circumstances, among the known protein-derived predicted peptide fragments, there accidentally exist several predicted peptide fragments having equal predicted molecular weights (Mref) or very similar predicted molecular weights (Mref) differing in molecular weight by 1. In this case, the actually measured mass value (Mex) of the actually measured peptide fragment derived from the target protein to be analyzed is sometimes regarded as having a substantial match to all of the predicted molecular weights (Mref) of these several predicted peptide fragments within the range of the measurement error. When the unique "judgment of match" is difficult as described above, whether or not plural types of actually measured peptide fragment peaks form apparent one peak or how many types of peaks overlap can be judged by referring to the second mass spectrometric result, for example a measurement result of molecular weights of a variety of daughter ion species obtained in MS/MS analysis, to peak intensity, and to peak half-width. In the end, when the unique "judgment of match" is difficult even in consideration of a variety of factors, statistical probability weighting for determining which of the several predicted peptide fragments has a match to the actually measured peptide fragment is performed to conduct the "judgment of match" and sort out the known protein-derived predicted peptide fragments. The statistical probability weighting gives probability: 1 when the unique "judgment of match" is possible, and gives probability: 1/2 when the discrimination of two types of predicted peptide fragments is difficult even by referring to the second mass spectrometric result. For determining the number (Nex-id) of the actually measured peptide fragments derived from the target protein to be analyzed and the number (Nref-id) of the known protein-derived predicted peptide fragments judged as having a match, the number of matching fragments is calculated by assigning the statistical probability weighting thereto.

From among the known proteins determined in this first comparison operation, known proteins are selected in decreasing order of the number (Nex-id) of the actually measured peptide fragments derived from the target protein to be analyzed and the number (Nref-id) of the known protein-derived predicted peptide fragments judged as having a match. A known protein exhibiting the highest number of the match (Nex-id=Nref-id) is selected and classified into a group of first candidate known protein(s) as a candidate of identification for the target protein to be analyzed.

If one of the known proteins comprised in the reference standard database is composed of a peptide chain having an amino acid sequence identical to that of the target protein to be analyzed, this known protein composed of a peptide chain having an amino acid sequence identical to that of the target protein to be analyzed is of course included at least in the group of first candidate known protein(s) selected in the first comparison operation as a candidate of identification for the target protein to be analyzed. Moreover, the plurality of actually measured peptide fragments derived from the target protein to be analyzed are all supposed to be judged as having a substantial match to the predicted molecular weights (Mref) of the predicted peptide fragments derived from this known protein. In many cases, the group of first candidate known protein(s) as a candidate of identification for the target protein to be analyzed comprises only this known protein composed of a peptide chain having an amino acid sequence identical to that of the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

The possibility can not be excluded that two or more types of known proteins accidentally have completely the same value as the sets of the predicted molecular weights (Mref) of the plurality of predicted peptide fragments.

Thus, in the case where the respective actually measured mass values (Mex) of the peptide fragments derived from the target protein to be analyzed are judged as having a substantial match to the predicted molecular weights (Mref) of the plurality of predicted peptide fragments in the set derived from the known protein, it is possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments.

To be more specific, the measurement result of molecular weights of a variety of daughter ion species generated by the fragmentation of the monovalent "parent cation species" or the monovalent "parent anion species" corresponding to the respective peptide fragments derived from the target protein to be analyzed may exhibit, for example molecular weights of daughter ion species equivalent to partial peptide chains contained in the peptide fragments. Therefore, even when two or more types of known proteins accidentally have completely the same value as the sets of the predicted molecular weights (Mref) of the plurality of predicted peptide fragments, a highly accurate single candidate of identification can be selected by utilizing the second mass spectrometric result to confirm whether or not corresponding daughter ion species are generated from the amino acid sequences of the known protein-derived predicted peptide fragments.

Furthermore, in regard to the C-terminal partial amino acid sequence of the peptide chain, it is possible to identify for at least a few amino acids, the C-terminal amino acid sequence of the peptide chain thereof by mass spectrometry by utilizing, for example an approach of "METHOD OF ANALYZING PEPTIDE FOR DETERMINING C-TERMINAL AMINO ACID SEQUENCE" disclosed in the pamphlet of international publication WO 03/081255A1. By this approach, it is possible to conduct analysis with high accuracy. A partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

### (B) Identification of protein consisting of peptide chain having post-translational modification

Assume that the target protein to be analyzed is a protein consisting of a peptide chain having a full-length amino acid sequence encoded on the genomic gene but is a protein having a post-translational modification on the peptide chain.

In this case, in regard to respective molecular weights of "parent ion species" of a plurality of peptide fragments obtained in subjecting the target protein to be analyzed to the pretreatment that linearizes its peptide chain and to the site-specific proteolytic treatment, molecular weights of "parent ion species" of peptide fragments containing an amino acid residue having the post-translational modification differ from molecular weights of "parent ion species" of corresponding peptide fragments free of post-translational modification in mass spectrometry.

Typical examples of the post-translational modification can include phosphorylation, methylation, acetylation, hydroxylation, formylation, and pyroglutamylation. To be more specific, N-methylation occurs at histidine, lysine, and arginine, O-methylation occurs at glutamic acid and aspartic acid, and S-methylation occurs at cysteine. Possible examples of the phosphorylation can include the phosphorylation of a hydroxy group on serine/threonine side chains and the phosphorylation of a hydroxy group on a tyrosine side chain. Possible examples of the formylation can include conversion to N-formylglutamic acid and N-formylmethionine by formyltransferase. Possible examples of the acetylation can include conversion to N-acetylated lysine by an acetylating enzyme. Possible examples of the hydroxylation can include conversion to hydroxypurine and 5-hydroxylysine.

If one of the known proteins comprised in the reference standard database is composed of a peptide chain having an amino acid sequence identical to that of the target protein to be analyzed, a value given by subtracting the number (Nex-mod) of a peptide fragment derived from the target protein to be analyzed containing an amino acid residue having post-translational modification from the total number (Nex) of the actually measured peptide fragments derived from the target protein to be analyzed is obtained in principle when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a peptide fragment free of post-translational modification that has an amino acid sequence accidentally exhibiting the same molecular weight as the molecular weight of the peptide fragment from derived the target protein to be analyzed containing an amino acid residue having post-translational modification can not be excluded completely but is considerably low.

Thus, if one of the known proteins comprised in the reference standard database is composed of a peptide chain having an amino acid sequence identical to that of the target protein to be analyzed, this known protein composed of a peptide chain having an amino acid sequence identical to that of the target protein to be analyzed is included with a very high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein composed of a peptide chain having an amino acid sequence identical to that of the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

As with the case (A) mentioned above, in the case where the respective actually measured mass values (Mex) of the peptide fragments derived from the target protein to be analyzed are judged as having a substantial match to the predicted molecular weights (Mref) of the plurality of predicted peptide fragments in the set derived from the known protein, it is possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

In the case where of the predicted peptide fragments derived from the known protein selected as a single candidate of identification, unidentified predicted peptide fragments not judged in the first comparison operation as having a match to the molecular weights of the actually measured peptide fragments derived from the target protein to be analyzed have on the peptide chain, an amino acid residue likely to undergoing post-translational modification, on the assumption that there would exist this post-translational modification attributed to modifying group addition to a side chain of an amino acid residue, predicted molecular weights (Mref) of predicted peptide fragments having the hypothetical predicted post-translational modification attributed to modifying group addition to a side chain of an amino acid residue are calculated anew.

Subsequently, a second comparison operation is performed, whereby the presence or absence of the unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is judged, wherein
when at least one unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is selected, the selected known protein judged based on the result of the first comparison operation as being a single candidate of identification for the target protein to be analyzed can be judged as being a highly accurate single candidate of identification.

In regard to the actually measurement peptide fragment derived from the target protein to be analyzed that is judged in this second comparison operation as having a match to the predicted molecular weights (Mref) of the predicted peptide fragments having the post-translational modification attributed to modifying group addition, it is also possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

For example in formylation, N-formylmethionine is synthesized as N-formylmethionine-tRNA by the action of methionine-tRNA formyltransferase and is often introduced in place of N-terminal methionine during the translation to a peptide chain. In a target protein to be analyzed that undergoes modification by this N-terminal N-formylmethionine, the actually measured peptide fragments derived from the target protein to be analyzed in peptide fragments subsequent to this N-terminal peptide fragment are all judged except for the N-terminal peptide fragment, as having a substantial match to the predicted molecular weights (Mref) of the plurality of predicted peptide fragments in the set derived from the known protein as a single candidate of identification.

In the case where in referring to sequence information about the selected known protein judged based on the result of the first comparison operation as being a single candidate of identification for the target protein to be analyzed, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein, a group of the actually measured peptide fragments judged as having a match constitutes consecutive amino acid sequences contained in the full-length amino acid sequence of the known protein,
the selected known protein judged based on the result of the first comparison operation as being a single candidate of identification for the target protein to be analyzed can be judged as being a highly accurate single candidate of identification.

Of course, in the case where in arranging the actually measured peptide fragments derived from the target protein to be analyzed including the actually measured peptide fragment derived from the target protein to be analyzed that is judged in the second comparison operation as having a match to the predicted molecular weights (Mref-mod) of the predicted peptide fragments having the post-translational modification attributed to modifying group addition, which are derived from the known protein judged as being a candidate of identification, in positions to be occupied by the corresponding predicted peptide fragments derived from the known protein, a group of the actually measured peptide fragments judged as having a match constitutes consecutive amino acid sequences contained in the full-length amino acid sequence of the known protein,
the selected known protein judged based on the result of the first comparison operation as being a single candidate of identification for the target protein to be analyzed can be judged as being a highly accurate single candidate of identification.

### (C) Identification of N-terminally truncated protein

Assume that the target protein to be analyzed is an N-terminally truncated protein such as a mature protein which after translated as a peptide chain having a full-length amino acid sequence encoded on the genomic gene, has undergone the removal of a signal peptide portion located at the N terminus thereof, or an activated protein which has undergone the removal of a pre or pro sequence portion.

In this case, in regard to respective molecular weights of "parent ion species" of a plurality of peptide fragments obtained in subjecting the target protein to be analyzed to the pretreatment that linearizes its peptide chain and to the site-specific proteolytic treatment, a peptide fragment contained in the truncated N-terminal portion is absent from the beginning, and molecular weights of "parent ion species" of peptide fragments containing a partial amino acid sequence having the N-terminal truncation differ from molecular weights of "parent ion species" of corresponding peptide fragments free of N-terminal truncation in mass spectrometry. Specifically, the peptide chain has undergone N-terminal shortening, resulting in a smaller molecular weight.

If the (deduced) full-length amino acid sequence of one of the known proteins comprised in the reference standard database has an amino acid sequence identical to the full-length amino acid sequence of the target protein to be analyzed, the peptide fragments except for the N-terminal peptide fragment derived from the target protein to be analyzed are judged as having a match, and a value given by subtracting 1 from the total number (Nex) of the actually measured peptide fragments derived from the target protein to be analyzed is therefore obtained in principle when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a different kind of known protein that has a predicted peptide fragment accidentally exhibiting the same molecular weight as the molecular weight of the N-terminal peptide fragment derived from the target protein to be analyzed and exhibits for the number (Nex? 1) of the remaining actually measured peptide fragments derived from the target protein to be analyzed, the predicted molecular weights (Mref) of the plurality of predicted peptide fragments matching to their actually measured mass values (Mex) can not be excluded completely but is considerably low.

Thus, if the (deduced) full-length amino acid sequence of one of the known proteins comprised in the reference standard database has an amino acid sequence identical to the full-length amino acid sequence of the target protein to be analyzed, this known protein having the (deduced) full-length amino acid sequence having an amino acid sequence identical to the full-length amino acid sequence of the target protein to be analyzed is included with a very high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein having the (deduced) full-length amino acid sequence having an amino acid sequence identical to the full-length amino acid sequence of the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

When the (deduced) full-length amino acid sequence of the known protein selected as a single candidate of identification has an amino acid sequence identical to the full-length amino acid sequence of the target protein to be analyzed,
a group of the actually measured peptide fragments judged as having a match should constitute, when the peptide fragments derived from the target protein to be analyzed are all detected, consecutive amino acid sequences contained in the full-length amino acid sequence of the known protein, that is, should constitute consecutive amino acid sequences extending to the C terminus except for the N terminal portion in the full-length amino acid sequence of the known protein, by referring to sequence information about the selected known protein judged based on the result of the first comparison operation as being a single candidate of identification for the target protein to be analyzed, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

In this case, the selected known protein judged based on the result of the first comparison operation as being a single candidate of identification for the target protein to be analyzed can be judged as being a highly accurate single candidate of identification.

In addition, when the peptide fragments derived from the target protein to be analyzed are all detected, there remains only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. In this case, in regard to the unidentified actually measured peptide fragment derived from the target protein to be analyzed,
on the assumption that for an N-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of N-terminal truncation would occur to convert the known protein to a mature protein, predicted molecular weights (Mref) of a series of a plurality of presumptively generated predicted peptide fragments derived from the hypothetical post-translational N-terminal processing in subjecting an assumed amino acid sequence of the known protein to the introduction treatment of a protecting group and to the site-specific proteolytic treatment are calculated, and
a second comparison operation is performed, whereby the presence or absence of the predicted peptide fragment having the predicted molecular weight (Mref) matching to the actually measured mass value (Mex) of the only remaining unidentified actually measured peptide fragment derived from the target protein to be analyzed is judged among the predicted molecular weights (Mref) of the series of predicted peptide fragments derived from the post-translational N-terminal processing.

As a result, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments derived from the post-translational N-terminal processing. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a highly accurate single candidate of identification.

According to circumstances, not all the peptide fragments derived from the target protein to be analyzed are detected. In this case as well, there should remain only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. On the other hand, a group of the actually measured peptide fragments judged as having a match should constitute, though having an unidentified region derived from the undetected peptide fragment, consecutive amino acid sequences extending to the C terminus except for the N terminal portion in the full-length amino acid sequence of the known protein, by arranging the plurality of actually measured peptide fragments derived from the target protein to be analyzed that are judged as having a match in positions to be occupied by the corresponding predicted peptide fragments derived from the known protein. Moreover, when the only remaining unidentified actually measured peptide fragment derived from the target protein to be analyzed is subjected to the second comparison operation in a similar way, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments derived from the post-translational N-terminal processing. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a candidate of identification with higher accuracy.

Of course, in regard to the actually measurement peptide fragment derived from the target protein to be analyzed that is judged in this second comparison operation as having a match to one of the predicted molecular weights (Mref) of the series of predicted peptide fragments derived from the post-translational N-terminal processing, it is also possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

A cleavage site by endopeptidase causing the post-translational N-terminal processing may accidentally match to a cleavage site by the site-specific proteolytic treatment. In this case, the first comparison operation results in no remaining unidentified actually measured peptide fragment derived from the target protein to be analyzed. In such a case, the selected known protein judged based on the result of the first comparison operation as being a single candidate of identification for the target protein to be analyzed can be judged of course as a highly accurate single candidate of identification.

### (D) Identification of C-terminally truncated protein

Assume that the target protein to be analyzed is a C-terminally truncated protein, as illustrated in Figure 3, such as an activated protein which after translated as a peptide chain having a full-length amino acid sequence encoded on the genomic gene, has undergone the removal of a C-terminal partial peptide chain thereof.

In this case, in regard to respective molecular weights of respective "parent ion species" of a plurality of peptide fragments obtained in subjecting the target protein to be analyzed to the pretreatment that linearizes its peptide chain and to the site-specific proteolytic treatment, a peptide fragment contained in the truncated C-terminal portion is absent from the beginning, and molecular weights of "parent ion species" of peptide fragments containing a partial amino acid sequence having the C-terminal truncation differ from molecular weights of "parent ion species" of corresponding peptide fragments free of C-terminal truncation in mass spectrometry. Specifically, the peptide chain has undergone C-terminal shortening, resulting in a smaller molecular weight.

If the (deduced) full-length amino acid sequence of one of the known proteins comprised in the reference standard database has an amino acid sequence identical to the full-length amino acid sequence of the target protein to be analyzed, the peptide fragments except for the C-terminal peptide fragment derived from the target protein to be analyzed are judged as having a match, and a value given by subtracting 1 from the total number (Nex) of the actually measured peptide fragments derived from the target protein to be analyzed is therefore obtained when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a different kind of known protein that has a predicted peptide fragment accidentally exhibiting the same molecular weight as the molecular weight of the N-terminal peptide fragment derived from the target protein to be analyzed and exhibits for the number (Nex-1) of the remaining actually measured peptide fragments derived from the target protein to be analyzed, the predicted molecular weights (Mref) of the plurality of predicted peptide fragments matching to their actually measured mass values (Mex) can not be excluded completely but is considerably low.

Thus, if the (deduced) full-length amino acid sequence of one of the known proteins comprised in the reference standard database has an amino acid sequence identical to the full-length amino acid sequence of the target protein to be analyzed, this known protein having the (deduced) full-length amino acid sequence having an amino acid sequence identical to the full-length amino acid sequence of the target protein to be analyzed is included with a vary high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein having the (deduced) full-length amino acid sequence having an amino acid sequence identical to the full-length amino acid sequence of the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

When the (deduced) full-length amino acid sequence of the known protein selected as a single candidate of identification has an amino acid sequence identical to the full-length amino acid sequence of the target protein to be analyzed,
a group of the actually measured peptide fragments judged as having a match should constitute, when the peptide fragments derived from the target protein to be analyzed are all detected, consecutive amino acid sequences contained in the full-length amino acid sequence of the known protein, that is, should constitute consecutive amino acid sequences extending from the N terminus except for the C terminal portion in the full-length amino acid sequence of the known protein, by referring to sequence information about the selected known protein judged based on the result of the first comparison operation as being a single candidate of identification for the target protein to be analyzed, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

In this case, the selected known protein judged based on the result of the first comparison operation as being a single candidate of identification for the target protein to be analyzed can be judged as being a highly accurate single candidate of identification.

In addition, when the peptide fragments derived from the target protein to be analyzed are all detected, there remains only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. In this case, in regard to the unidentified actually measured peptide fragment derived from the target protein to be analyzed,
on the assumption that for a C-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of C-terminal truncation would occur to convert the known protein to a C-terminally truncated protein, predicted molecular weights (Mref) of a series of a plurality of presumptively generated predicted peptide fragments derived from the hypothetical post-translational C-terminal processing in subjecting an assumed amino acid sequence of the known protein to the introduction treatment of a protecting group and to the site-specific proteolytic treatment are calculated, and
a second comparison operation is performed, whereby the presence or absence of the predicted peptide fragment having the predicted molecular weight (Mref) matching to the actually measured mass value (Mex) of the only remaining unidentified actually measured peptide fragment derived from the target protein to be analyzed is judged among the predicted molecular weights (Mref) of the series of predicted peptide fragments derived from the post-translational C-terminal processing.

As a result, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments derived from the post-translational C-terminal processing. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a highly accurate single candidate of identification.

According to circumstances, not all the peptide fragments derived from the target protein to be analyzed are detected. In this case as well, there should remain only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. On the other hand, a group of the actually measured peptide fragments judged as having a match should constitute, though having an unidentified region derived from the undetected peptide fragment, consecutive amino acid sequences extending from the N terminus except for the C-terminal portion in the full-length amino acid sequence of the known protein, by arranging the plurality of actually measured peptide fragments derived from the target protein to be analyzed that are judged as having a match in positions to be occupied by the corresponding predicted peptide fragments derived from the known protein. Moreover, when the only remaining unidentified actually measured peptide fragment derived from the target protein to be analyzed is subjected to the second comparison operation in a similar way, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments derived from the post-translational C-terminal processing. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a candidate of identification with higher accuracy.

Of course, in regard to the actually measurement peptide fragment derived from the target protein to be analyzed that is judged in this second comparison operation as having a match to one of the predicted molecular weights (Mref) of the series of predicted peptide fragments derived from the post-translational C-terminal processing, it is also possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

When C-terminal amino acid sequence information is obtainable for the target protein to be analyzed itself by utilizing the approach of "METHOD OF ANALYZING PEPTIDE FOR DETERMINING C-TERMINAL AMINO ACID SEQUENCE", the validity of the second comparison operation can be verified by comparing the information with the amino acid sequence of the predicted peptide fragment derived from the post-translational C-terminal processing, which has been selected in advance in the second comparison operation as the one predicted peptide fragment having the predicted molecular weight (Mref) matching to the actually measured mass value (Mex) of the only remaining unidentified actually measured peptide fragment derived from the target protein to be analyzed.

A cleavage site by endopeptidase causing the post-translational C-terminal processing may accidentally match to a cleavage site by the site-specific proteolytic treatment. In this case, the first comparison operation results in no remaining unidentified actually measured peptide fragment derived from the target protein to be analyzed. In such a case, the selected known protein judged based on the result of the first comparison operation as being a single candidate of identification for the target protein to be analyzed can be judged of course as a highly accurate single candidate of identification.

### (E) Identification of protein generated by protein splicing

Assume that the target protein to be analyzed is a protein consisting of a shortened peptide chain, as illustrated in Figure 2, which after translated as a peptide chain having a full-length amino acid sequence encoded on the genomic gene, has undergone the removal of a partial peptide chain located within the peptide chain thereof, and the subsequent connection of sequences flanking both ends of the removed partial peptide chain.

In this case, in regard to respective molecular weights of "parent ion species" of a plurality of peptide fragments obtained in subjecting the target protein to be analyzed to the pretreatment that linearizes its peptide chain and to the site-specific proteolytic treatment, a molecular weight of a "parent ion species" of a peptide fragment containing the junction of the sequences flanking both ends of the removed partial peptide chain differs from all molecular weights of predicted peptide fragments predicted based on the full-length amino acid sequence in mass spectrometry. Of course, a "parent ion species" derived from a peptide fragment fragmented by the site-specific proteolytic treatment in the removed partial peptide chain is not observed.

If the (deduced) full-length amino acid sequence of one of the known proteins comprised in the reference standard database has an amino acid sequence identical to the full-length amino acid sequence of the target protein to be analyzed, the peptide fragments except for the peptide fragment containing the junction of the sequences flanking both ends of the removed partial peptide chain are judged as having match, and a value given by subtracting 1 from the total number (Nex) of the actually measured peptide fragments derived from the target protein to be analyzed is therefore obtained in principle when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a different kind of known protein that has a predicted peptide fragment accidentally exhibiting the same molecular weight as the peptide fragment containing the junction of the sequences flanking both ends of the removed partial peptide chain in the target protein to be analyzed and exhibits for the number (Nex-1) of the remaining actually measured peptide fragments derived from the target protein to be analyzed, the predicted molecular weights (Mref) of the plurality of predicted peptide fragments matching to their actually measured mass values (Mex) can not be excluded completely but is considerably low.

Thus, if the (deduced) full-length amino acid sequence of one of the known proteins comprised in the reference standard database has an amino acid sequence identical to the full-length amino acid sequence of the target protein to be analyzed, this known protein having the (deduced) full-length amino acid sequence having an amino acid sequence identical to the full-length amino acid sequence of the target protein to be analyzed is included with a very high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein having the (deduced) full-length amino acid sequence having an amino acid sequence identical to the full-length amino acid sequence of the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

When the (deduced) full-length amino acid sequence of the known protein selected as a single candidate of identification has an amino acid sequence identical to the full-length amino acid sequence of the target protein to be analyzed,
a group of the actually measured peptide fragments judged as having a match should constitute, when the peptide fragments derived from the target protein to be analyzed are all detected, consecutive amino acid sequences contained in the full-length amino acid sequence of the known protein except for a series of unidentified regions that are a series of partial regions occupied by predicted peptide fragments not judged as having a match, by referring to sequence information about the selected known protein judged based on the result of the first comparison operation as being a single candidate of identification for the target protein to be analyzed, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

According to circumstances, the series of unidentified regions occupied by the predicted peptide fragments not judged as having a match start at N-terminus, and the group of the actually measured peptide fragments judged as having a match constitutes consecutive amino acid sequences extending to the C-terminus except for this N-terminal portion in the full-length amino acid sequence of the known. Conversely, in some cases, the series of unidentified regions occupied by the predicted peptide fragments not judged as having a match are located at the C-terminus, and the group of the actually measured peptide fragments judged as having a match constitutes consecutive amino acid sequences extending from the N-terminus except for this C-terminal portion in the full-length amino acid sequence of the known. In the case where this group of the actually measured peptide fragments judged as having a match constitutes consecutive amino acid sequences, the selected known protein judged based on the result of the first comparison operation as being a single candidate of identification for the target protein to be analyzed can be judged as being a highly accurate single candidate of identification.

Moreover, in the case where the actually measured peptide fragments judged as having a match occupy a series of N-terminal regions and a series of C-terminal regions, and the series of unidentified regions occupied by the predicted peptide fragments not judged as having a match intervene between them, and that the (deduced) full-length amino acid sequence of the first candidate known protein as a candidate of identification for the target protein to be analyzed is divided into these three regions in total, the selected known protein judged based on the result of the first comparison operation as being a single candidate of identification for the target protein to be analyzed can be judged as being a highly accurate single candidate of identification.

In addition, when the peptide fragments derived from the target protein to be analyzed are all detected, there remains only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. In this case, in regard to the unidentified actually measured peptide fragment derived from the target protein to be analyzed,
on the assumption that for portions occupied by a group of a series of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, partial removal by a protein splicing process would occur after translation in the series of unidentified regions to convert the known protein to the protein, predicted molecular weights (Mref) of a series of a plurality of presumptively generated predicted peptide fragments derived from the hypothetical protein splicing process in subjecting an assumed amino acid sequence of the known protein to the introduction treatment of a protecting group and to the site-specific proteolytic treatment are calculated, and
a second comparison operation is performed, whereby the presence or absence of the predicted peptide fragment having the predicted molecular weight (Mref) matching to the actually measured mass value (Mex) of the only remaining unidentified actually measured peptide fragment derived from the target protein to be analyzed is judged among the predicted molecular weights (Mref) of the series of predicted peptide fragments derived from the protein splicing process.

As a result, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments derived from the protein splicing process. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a highly accurate single candidate of identification.

Specifically, the peptide fragment containing the junction of the sequences flanking both ends of the removed partial peptide chain is constructed by the connection between an N-terminal partial amino acid sequence of the predicted peptide fragment located at the N-terminus of the series of unidentified regions and a C-terminal partial amino acid sequence of the predicted peptide fragment located at the C-terminus of the series of unidentified regions. Based on this characteristic, the predicted molecular weights (Mref) of the series of the plurality of predicted peptide fragments derived from the protein processing process can be calculated easily.

A junction site of the sequences flanking both ends of the partial peptide chain removed by the protein splicing process in the target protein to be analyzed may accidentally match to a cleavage site by the site-specific proteolytic treatment. In this case, the first comparison operation results in no remaining unidentified actually measured peptide fragment derived from the target protein to be analyzed. In such a case, the selected known protein judged based on the result of the first comparison operation as being a single candidate of identification for the target protein to be analyzed can be judged of course as a highly accurate single candidate of identification.

### (F) Identification of splicing variant-type protein attributed to alternative splicing

Assume that the target protein to be analyzed is a splicing variant-type protein consisting of a peptide chain having a full-length amino acid sequence translated according to mRNA lacking a translation frame containing one or more exons of a series of a plurality of exons encoded on the genomic gene due to alternative splicing, as illustrated in Figure 1.

In this case, in regard to respective molecular weights of "parent ion species" of a plurality of peptide fragments obtained in subjecting the target protein to be analyzed to the pretreatment that linearizes its peptide chain and to the site-specific proteolytic treatment, a peptide fragment supposed to be fragmented by the site-specific proteolytic treatment from an amino acid sequence portion within the translation frame containing the one or more lacked exons is absent from the beginning, and a "parent ion species" derived from the peptide fragment is not observed in mass spectrometry. A molecular weight of a "parent ion species" of a peptide fragment containing amino acid residues encoded by a ligation region of two exons connected due to alternative splicing generally differs from all molecular weights of predicted peptide fragments predicted based on a (deduced) full-length amino acid sequence obtained without this kind of alternative splicing.

If the (deduced) full-length amino acid sequence of one of the known proteins comprised in the reference standard database has an amino acid sequence identical to the full-length amino acid sequence free of this kind of alternative splicing encoded on the genomic gene encoding the target protein to be analyzed, the peptide fragments except for the peptide fragment containing amino acid residues encoded by the ligation region of two exons connected due to alternative splicing are judged as having match, and a value given by subtracting 1 from the total number (Nex) of the actually measured peptide fragments derived from the target protein to be analyzed is therefore obtained in principle when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a different kind of known protein that has a predicted peptide fragment accidentally exhibiting the same molecular weight as the molecular weight of the peptide fragment containing amino acid residues encoded by the ligation region of two exons connected due to alternative splicing in the target protein to be analyzed and exhibits for the number (Nex-1) of the remaining actually measured peptide fragments derived from the target protein to be analyzed, the predicted molecular weights (Mref) of the plurality of predicted peptide fragments matching to their actually measured mass values (Mex) can not be excluded completely but is considerably low.

Thus, if the (deduced) full-length amino acid sequence of one of the known proteins comprised in the reference standard database has an amino acid sequence identical to the full-length amino acid sequence free of this kind of alternative splicing encoded on the genomic gene encoding the target protein to be analyzed, this known protein having the (deduced) full-length amino acid sequence having an amino acid sequence identical to the full-length amino acid sequence of the target protein to be analyzed is included with a very high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein having the (deduced) full-length amino acid sequence having an amino acid sequence identical to the full-length amino acid sequence free of this kind of alternative splicing encoded on the genomic gene encoding the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

When the (deduced) full-length amino acid sequence of the known protein selected as a single candidate of identification has an amino acid sequence identical to the full-length amino acid sequence free of this kind of alternative splicing encoded on the genomic gene encoding the target protein to be analyzed,
a group of the actually measured peptide fragments judged as having a match should constitute, when the peptide fragments derived from the target protein to be analyzed are all detected, consecutive amino acid sequences contained in the full-length amino acid sequence of the known protein except for a series of unidentified regions that are a series of partial regions occupied by predicted peptide fragments not judged as having a match, by referring to sequence information about the selected known protein judged based on the result of the first comparison operation as being a single candidate of identification for the target protein to be analyzed, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

According to circumstances, the series of unidentified regions occupied by the predicted peptide fragments not judged as having a match start at the N-terminus, and the group of the actually measured peptide fragments judged as having a match constitutes consecutive amino acid sequences extending to the C-terminus except for this N-terminal portion in the full-length amino acid sequence of the known. Conversely, in some cases, the series of unidentified regions occupied by the predicted peptide fragments not judged as having a match are located at the C-terminus, and the group of the actually measured peptide fragments judged as having a match constitutes consecutive amino acid sequences extending from the N-terminus except for this C-terminal portion in the full-length amino acid sequence of the known. In the case where this group of the actually measured peptide fragments judged as having a match constitutes consecutive amino acid sequences, the selected known protein judged based on the result of the first comparison operation as being a single candidate of identification for the target protein to be analyzed can be judged as being a highly accurate single candidate of identification.

Moreover, in the case where the actually measured peptide fragments judged as having a match occupy a series of N-terminal regions and a series of C-terminal regions, and the series of unidentified regions occupied by the predicted peptide fragments not judged as having a match intervene between them, and that the (deduced) full-length amino acid sequence of the first candidate known protein as a candidate of identification for the target protein to be analyzed is divided into these three regions in total, the selected known protein judged based on the result of the first comparison operation as being a single candidate of identification for the target protein to be analyzed can be judged as being a highly accurate single candidate of identification.

In addition, when the peptide fragments derived from the target protein to be analyzed are all detected, there remains only one unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification. In this case, in regard to the unidentified actually measured peptide fragment derived from the target protein to be analyzed,
on the assumption that for portions occupied by a group of a series of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, the known protein would be a splicing variant-type protein translated from mRNA lacking, due to alternative splicing process, a translation frame having one or more of a series of exons encoding an amino acid sequence portion contained in the series of unidentified regions, predicted molecular weights (Mref) of a series of a plurality of presumptively generated predicted peptide fragments peculiar to the hypothetical splicing variant-type protein in subjecting an assumed amino acid sequence of the known protein to the introduction treatment of a protecting group and to the site-specific proteolytic treatment are calculated, and
a second comparison operation is performed, whereby the presence or absence of the predicted peptide fragment having the predicted molecular weight (Mref) matching to the actually measured mass value (Mex) of the only remaining unidentified actually measured peptide fragment derived from the target protein to be analyzed is judged among the predicted molecular weights (Mref) of the series of predicted peptide fragments peculiar to the splicing variant-type protein.

As a result, one predicted peptide fragment having the predicted molecular weight (Mref) matching to the actually measured mass value (Mex) of the only remaining unidentified actually measured peptide fragment derived from the target protein to be analyzed should be selected among the predicted molecular weights (Mref) of the series of predicted peptide fragments peculiar to the splicing variant-type protein. When the presence of the predicted peptide fragment having this matching predicted molecular weight (Mref) is actually verified in the second comparison operation, the selected known protein judged based on the result of the first comparison operation as being a single candidate of identification for the target protein to be analyzed can be judged as being a highly accurate single candidate of identification.

Specifically, the selected peptide fragment peculiar to the splicing variant-type protein is constructed by the connection between an N-terminal partial amino acid sequence of the predicted peptide fragment located at the N terminus of the series of unidentified regions and a C-terminal partial amino acid sequence of the predicted peptide fragment located at the C-terminus of the series of unidentified regions, and the junction thereof corresponds to the amino acid residues encoded by the ligation region of two exons connected due to alternative splicing. Based on this characteristic, the predicted molecular weights (Mref) of the series of the plurality of predicted peptide fragments peculiar to the splicing variant-type protein can be calculated easily.

Sites of the amino acid residues encoded by the ligation region of two exons connected due to alternative splicing in the target protein to be analyzed may accidentally match to a cleavage site by the site-specific proteolytic treatment. In this case, the first comparison operation results in no remaining unidentified actually measured peptide fragment derived from the target protein to be analyzed. In such a case, the selected known protein judged based on the result of the first comparison operation as being a single candidate of identification for the target protein to be analyzed can be judged of course as a highly accurate single candidate of identification.

### (G) Identification of protein when database for reference has error in (deduced) full-length amino acid sequence

Assume that the target protein to be analyzed is a protein consisting of a peptide chain having a full-length amino acid sequence encoded on the genomic gene, and although the genomic gene nucleotide sequence of the target protein to be analyzed is recorded as a known protein in a database for reference, the database for reference has an error in the (deduced) full-length amino acid sequence encoded by the genomic gene.

For example, sequence information about a (deduced) full-length amino acid sequence temporarily determined based on a virtual coding nucleotide sequence by not conducting nucleotide sequence analysis for corresponding mRNA or cDNA thereof but conducting the virtual connection of a plurality of open reading regions found on the genomic gene to construct the whole translation frame is often recorded in the database for reference. In a construction process of such a virtual coding nucleotide sequence, there are plural possible choices of open reading regions to be connected. Even when the choices respectively provide a series of coding nucleotide sequences, not all of them are recorded in the database for reference in many cases. Therefore, it can be assumed that although a virtual coding nucleotide sequence itself recorded in the database for reference is rationally constructed, the database results in an identification error such that translation to a peptide chain is actually brought about by another virtual coding nucleotide sequence unrecorded. Namely, of a plurality of virtual exon regions, a recorded exon region partially differs from a proper one, as shown in Figure 1-(1).

When the database for reference has an error in the (deduced) full-length amino acid sequence as a result of this kind of identification error in exon regions, an amino acid sequence portion encoded by a series of corresponding exon regions differs from actual one in the virtual (deduced) full-length amino acid sequence partially having an identification error in exon regions for the known protein contained in the reference standard database. In the first comparison operation whereby predicted molecular weights (Mref) of a plurality of known protein-derived peptide fragments predicted based on the virtual (deduced) full-length amino acid sequence incorporating this mistaken amino acid sequence portion are compared with the actually measured mass values (Mex) of the peptide fragments derived from the target protein to be analyzed, the actually measured peptide fragments derived from the target protein to be analyzed matching to a series of the plurality of predicted amino acid sequences corresponding to the mistaken amino acid sequence portion are of course absent. On the other hand, in regions except for the mistaken amino acid sequence portion, the predicted molecular weights (Mref) of the plurality of known protein-derived predicted peptide fragments completely match to the actually measured mass values (Mex) of the peptide fragments derived from the target protein to be analyzed.

Thus, a value given by subtracting the number of the series of peptide fragments corresponding to the mistaken amino acid sequence portion from the total number (Nex) of the actually measured peptide fragments derived from the target protein to be analyzed is obtained when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments derived from the known protein contained in the reference standard database and supposed to be judged as completely matching to the target protein to be analyzed are determined. This known protein partially having an error in the amino acid sequence is included with a sufficiently high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein partially having an error in the amino acid sequence. In other words, when the group of first candidate known protein(s) as a candidate of identification for the target protein to be analyzed comprises one type of known protein, the one type of known protein selected from the database can be judged as being a single candidate of identification for the target protein to be analyzed.

A group of the actually measured peptide fragments judged as having a match should also constitute consecutive amino acid sequences contained in the (deduced) full-length amino acid sequence of the known protein partially having an identification error in the amino acid sequence except for a series of unidentified regions that are a series of partial regions occupied by predicted peptide fragments not judged as having a match, by referring to sequence information about the (deduced) full-length amino acid sequence partially having an identification error in the amino acid sequence for the known protein selected as a single candidate of identification, and
arranging the plurality of actually measured peptide fragments derived from the target protein to be analyzed that is judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

In the case where the actually measured peptide fragments judged as having a match usually occupy a series of N-terminal regions and a series of C-terminal regions, and the series of unidentified regions occupied by the predicted peptide fragments not judged as having a match intervene between them, and that the virtual (deduced) full-length amino acid sequence of the first candidate known protein as a candidate of identification for the target protein to be analyzed is divided into these three regions in total, the selected known protein judged based on the result of the first comparison operation as being a single candidate of identification for the target protein to be analyzed can be judged as being a highly accurate single candidate of identification.

As with the case (A) mentioned above, in the case where the respective actually measured mass values (Mex) of the peptide fragments derived from the target protein to be analyzed are judged as having a substantial match to the predicted molecular weights (Mref) of the plurality of predicted peptide fragments in the set derived from the known protein, it is possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

### (H) Identification of variant protein having amino acid replacement attributed to "single nucleotide polymorphism"

Assume that the target protein to be analyzed is a protein consisting of a peptide chain having a full-length amino acid sequence encoded on the genomic gene and is a variant protein having amino acid replacement attributed to "single nucleotide polymorphism" in the full-length amino acid sequence, while a protein having another amino acid encoded on the genomic gene of the target protein to be analyzed due to the "single nucleotide polymorphism" is recorded as a known protein in a database for reference.

In this case, in regard to respective molecular weights of "parent ion species" of a plurality of peptide fragments obtained in subjecting the target protein to be analyzed to the pretreatment that linearizes its peptide chain and to the site-specific proteolytic treatment, only the peptide fragment having a different amino acid attributed to the "single nucleotide polymorphism" differs in mass spectrometry between the actually measured mass values (Mex) of the peptide fragments derived from the target protein to be analyzed and molecular weights of predicted peptide fragments predicted based on the (deduced) full-length amino acid sequence of the known protein.

In comparing the target protein to be analyzed with a known protein that is one of several kinds of the "single nucleotide polymorphism" variants contained in the reference standard database, a value given by subtracting the number (Nex-snp) of the peptide fragment derived from the target protein to be analyzed containing the amino acid variation of the "single nucleotide polymorphism" from the total number (Nex) of the actually measured peptide fragments derived from the target protein to be analyzed is obtained in principle when the number (Nex-id) of the actually measured peptide fragments derived from the target protein to be analyzed and the number (Nref-id) of the known protein-derived predicted peptide fragments judged as substantially corresponding to the predicted molecular weights (Mref) of the plurality of predicted peptide fragments in the set derived from the known protein are determined in the first comparison operation.

The probability of presence of a peptide fragment that has a different kind of amino acid sequence accidentally exhibiting the same molecular weight as the molecular weight of the peptide fragment derived from the target protein to be analyzed containing the amino acid variation of the "single nucleotide polymorphism" can not be excluded completely, but is considerably low.

Likewise, the probability of presence of a different kind of known protein that has a predicted peptide fragment accidentally exhibiting the same molecular weight as the molecular weight of the peptide fragment derived from the target protein to be analyzed containing the amino acid variation of the "single nucleotide polymorphism" and exhibits for the number (Nex-Nex-snp) of the remaining actually measured peptide fragments derived from the target protein to be analyzed, the predicted molecular weights (Mref) of the plurality of predicted peptide fragments matching to their actually measured mass values (Mex) can not be excluded completely but is considerably low.

Thus, the known protein that is one of several kinds of the "single nucleotide polymorphism" variants contained in the reference standard database is included with a very high probability at least in the group of first candidate known protein(s) selected in the first comparison operation as a candidate of identification for the target protein to be analyzed. In this case, the group of first candidate known protein(s) as a candidate of identification for the target protein to be analyzed comprises with a considerably high probability only this known protein that is one of several kinds of the "single nucleotide polymorphism" variants having the corresponding genomic gene common to the target protein to be analyzed. In other words, when the group of first candidate known protein(s) as a candidate of identification for the target protein to be analyzed comprises one type of known protein, the one type of known protein selected from the database can be judged as being a single candidate of identification for the target protein to be analyzed.

The predicted peptide fragment not judged as having a match should reflect the partial region differing in the amino acid due to the "single nucleotide polymorphism", by referring to the (deduced) full-length amino acid sequence for the selected known protein as a single candidate of identification that is one of several kinds of the "single nucleotide polymorphism" variants, and
arranging the plurality of actually measured peptide fragments derived from the target protein to be analyzed that are judged in the first comparison operation as having a match to the predicted molecular weights (Mref) of the plurality of predicted peptide fragments in the set derived from the known protein judged as being a candidate of identification, in positions to be occupied by the corresponding predicted peptide fragments derived from the known protein.

If a cleavage site of the site-specific proteolytic treatment disappears by amino acid conversion attributed to "single nucleotide polymorphism", a peptide fragment where two peptide fragments divided by the cleavage site are unified is obtained. Alternatively, if an additional cleavage site of the site-specific proteolytic treatment appears by amino acid conversion attributed to "single nucleotide polymorphism", two peptide fragments derived from one peptide fragment by the cleavage site are obtained.

In amino acid conversion attributed to "single nucleotide polymorphism" without the disappearance or generation of the cleavage site of the site-specific proteolytic treatment, a molecular weight of the peptide fragment thereof produces change corresponding to the difference of amino acid species.

### (H-1) In the case where cleavage site of site-specific proteolytic treatment disappears by amino acid conversion attributed to "single nucleotide polymorphism"

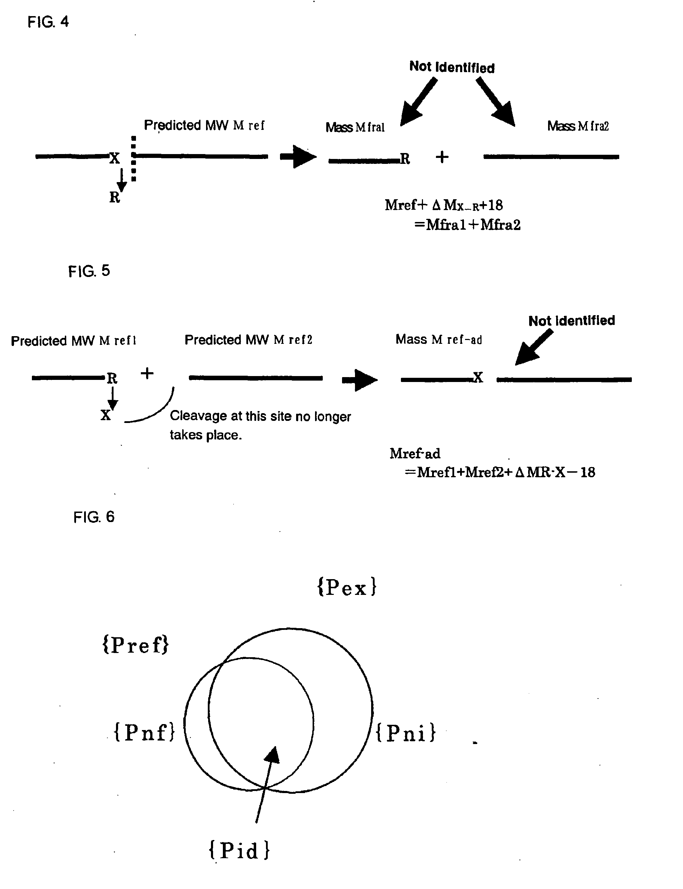

As illustrated in Figure 5, as a result of the unification of two peptide fragments divided by the cleavage site into a peptide fragment, at least two adjacent predicted peptide fragments of the plurality of known protein-derived predicted peptide fragments not judged in the first comparison operation as having a match are found. There should exist one unidentified peptide fragment derived from the target protein to be analyzed exhibiting the actually measured mass value (Mex) similar to a molecular weight (Mref-ad) predicted in the connected state of these two predicted peptide fragments. A potential varied amino acid residue (Xref-snp) itself is determined from the amino acid sequences of the two adjacent predicted peptide fragments. The already varied amino acid residue (Xex-snp) can be deduced from a difference ? Mad (=Mref-ad―Mex) between the predicted molecular weight (Mref-ad) and the actually measured mass value (Mex) and from the potential varied amino acid residue (Xref-snp). Furthermore, the confirmation that a codon sequence encoding the potential varied amino acid residue (Xref-snp) can actually be converted to a codon sequence encoding the already varied amino acid residue (Xex-snp) owing to the "single nucleotide polymorphism" is performed by referring to the codon sequence encoding the potential varied amino acid residue (Xref-snp) in the genomic gene nucleotide sequence reported for the known protein.

### (H-2) In the case where cleavage site of site-specific proteolytic treatment is generated by amino acid conversion attributed to "single nucleotide polymorphism"

As illustrated in Figure 4, two peptide fragments derived from one peptide fragment should be obtained by the generated cleavage site, and there should exist no unidentified peptide fragment derived from the target protein to be analyzed exhibiting the actually measured mass value (Mex) similar to a predicted molecular weight (Mref) of at least the predicted peptide fragment to be deleted of the plurality of known protein-derived predicted peptide fragments not judged in the first comparison operation as having a match. Namely, there should exist no unidentified peptide fragment derived from the target protein to be analyzed which in spite of the generation of the cleavage site of the site-specific proteolytic treatment, is not actually cleaved.

On the other hand, molecular weights (Mex-fra1 and Mex-fra2) of two peptide fragments derived as a result of generation of the cleavage site in the predicted peptide fragment to be deleted naturally have values smaller than the predicted molecular weight (Mref) of the predicted peptide fragment to be deleted. A molecular weight (Mex-fra1 +fra2) supposed to be exhibited by a peptide fragment composed of these two derived peptide fragments connected is Mex-fra1 +Mex-fra2―18, that is, a value obtained by subtracting the formula weight (18) of one water molecule from the total sum of the molecular weights of the two derived peptide fragments, because of amino bond formation. Of course, this value Mex-fra1 +Mex-fra2―18 is similar to the predicted molecular weight (Mref) of the predicted peptide fragment to be deleted.

Two peptide fragments that satisfy the above-described requirements can be selected from a plurality of unidentified peptide fragments derived from the target protein to be analyzed exhibiting actually measured mass values (Mex) having a value smaller than the predicted molecular weight (Mref) of the predicted peptide fragment to be deleted. A value corresponding to the molecular weight (Mex-fra1 +fra2)=(Mex-fra1 +Mex-fra2―18) supposed to be exhibited by the peptide fragment composed of the two derived peptide fragments connected is calculated based on the actually measured mass values (Mex) of the selected two peptide fragments, and a difference Δ Mdiv (=Mref―Mex-fra1+fra2) between this value and the predicted molecular weight (Mref) of the predicted peptide fragment to be deleted is calculated.

On the other hand, the potential varied amino acid residue (Xref-snp) is not determined, whereas the already varied amino acid residue (Xex-snp) provides the cleavage site of the site-specific proteolytic treatment and is therefore determined. Thus, the potential varied amino acid residue (Xref-snp) can be deduced from the difference ΔMdiv (=Mref―Mex-fra1+fra2) and from the already varied amino acid residue (Xex-snp). The confirmation that the deduced potential varied amino acid residue (Xref-snp) is actually present in the amino acid sequence of the known protein-derived predicted peptide fragment to be deleted, and that by the conversion thereof to the already varied amino acid residue (Xex-snp), the predicted molecular weights of the derived two peptide fragments agree with the molecular weights (Mex-fra1 and Mex-fra2) of the two peptide fragments selected from the group of unidentified peptide fragments derived from the target protein to be analyzed is performed. Furthermore, the confirmation that a codon sequence encoding the potential varied amino acid residue (Xref-snp) can actually be converted to a codon sequence encoding the already varied amino acid residue (Xex-snp) owing to the "single nucleotide polymorphism" is performed by referring to the codon sequence encoding the potential varied amino acid residue (Xref-snp) in the genomic gene nucleotide sequence reported for the known protein.

### (H-3) In the case where only amino acid conversion attributed to "single nucleotide polymorphism" without disappearance or generation of cleavage site of site-specific proteolytic treatment occurs

In the amino acid conversion attributed to the "single nucleotide polymorphism" without the disappearance or generation of the cleavage site of the site-specific proteolytic treatment, a molecular weight of the peptide fragment thereof produces change corresponding to the difference of amino acid species.

There should exist one unidentified peptide fragment derived from the target protein to be analyzed exhibiting an actually measured mass value (Mex) similar to a predicted molecular weight (Mref) of at least one predicted peptide fragment of the plurality of known protein-derived predicted peptide fragments not judged in the first comparison operation as having a match.

Specifically, a molecular weight change Δ M_{XY} attributed to one amino acid conversion dose not exceed a formula weight difference: 129 between tryptophan (Trp) and glycine (Gly). Moreover, both of the potential varied amino acid residue (Xref-snp) and the already varied amino acid residue (Xex-snp) should differ from an amino acid residue that provides the cleavage site of the site-specific proteolytic treatment.

Whether or not the unidentified peptide fragments derived from the target protein to be analyzed are present within the range of the molecular weight difference: 129 relative to the known protein-derived predicted peptide fragments unidentified in the first comparison operation is judged. In regard to the unidentified peptide fragment derived from the target protein to be analyzed that is judged as being present, a molecular weight difference Δ Mref-ex between them is calculated.

Because the (deduced) amino acid sequences of the known protein-derived predicted peptide fragments have been determined, the presence or absence of amino acid conversion that provides the molecular weight difference Δ Mref-ex in the conversion of an amino acid contained in the amino acid sequence is judged. If there exist a plurality of such amino acid conversions, the confirmation on whether or not a codon sequence encoding the potential varied amino acid residue (Xref-snp) can be converted to a codon sequence encoding the already varied amino acid residue (Xex-snp) owing to only a single site of the "single nucleotide polymorphism" is performed by referring to the codon sequence encoding the potential varied amino acid residue (Xref-snp) in the genomic gene nucleotide sequence reported for the known protein. Namely, amino acid conversion achieved by the change of only one nucleotide, for example the conversion from Val encoded by GTG to Leu encoded by CTG is judged as having higher accuracy, while the conversion from Gly encoded by GGG to Phe encoded by TTT is judged as having considerably low accuracy. Therefore, conversion with higher accuracy is selected as a first candidate. The confirmation of coding sequences based on mRNA in an individual that is a specific origin of the target protein to be analyzed is required for knowing codons actually encoding the target protein to be analyzed.

When the target protein to be analyzed is assumed according to the above-described procedures to be a variant protein having amino acid replacement attributed to "single nucleotide polymorphism", and
in the case where there remains a unidentified actually measured peptide fragment derived from the target protein to be analyzed that is not judged in the first comparison operation as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for genomic gene portions encoding portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, one replacement of a translated amino acid attributed to single nucleotide polymorphism would occur in an exon contained in the genomic gene portions, calculating predicted molecular weights (Mref) of a plurality of presumptively generated predicted peptide fragments derived from the hypothetical amino acid replacement of single nucleotide polymorphism in subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is judged, wherein
when at least one unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is selected,
the selected known protein judged based on the result of the first comparison operation as being a single candidate of identification for the target protein to be analyzed can be judged as being a highly accurate single candidate of identification.

As with the case (A) mentioned above, in the case where the respective actually measured mass values (Mex) of the peptide fragments derived from the target protein to be analyzed are judged as having a substantial match to the predicted molecular weights (Mref) of the plurality of predicted peptide fragments in the set derived from the known protein, it is possible to provide judgment with higher accuracy by confirming correspondence between the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed and predicted molecular weight values of a variety of daughter ion species presumptively generated in MS/MS analysis by the fragmentation of the amino acid sequences of the predicted peptide fragments derived from the known protein judged as having a match in the molecular weights of the peptide fragments. Furthermore, a partial match to the amino acid sequences of the known protein-derived predicted peptide fragments can also be confirmed by utilizing as the second mass spectrometric result, the C-terminal amino acid sequence information obtained for the respective peptide fragments derived form the target protein to be analyzed with the use of the approach of "METHOD OF ANALYZING PEPTIDE FOR DETERMINING C-TERMINAL AMINO ACID SEQUENCE", instead of or in addition to the measurement result of molecular weights of a variety of daughter ion species generated in MS/MS analysis by the fragmentation of the monovalent "parent cation species" or the monovalent "parent anion species" corresponding to the respective peptide fragments derived from the target protein to be analyzed. As a result, a more highly accurate single candidate of identification can be selected.

For example, a codon encoding each amino acid in a human and the frequency of its usage are shown in Table 1. Amino acid replacement attributed to "single nucleotide polymorphism" is caused in such a manner that one nucleotide located at a particular site on the genomic gene in each individual takes several nucleotide species, resulting in the change of an amino acid species encoded by a codon containing the nucleotide. Some amino acid replacements attributed to this kind of variation in a nucleotide sequence caused by "single nucleotide polymorphism" are actually recorded as secondary information in a database. Even if such secondary information is not recorded, the amino acid sequence and predicted quantity of a peptide fragment having virtual variation, which are utilized in the second comparison operation can be calculated in the present invention by predicting amino acid replacement attributed to possible "single nucleotide polymorphism" according to procedures described below.

When amino acid replacement attributed to "single nucleotide polymorphism" is contemplated, the change of an encoded amino acid caused by the substation of one nucleotide in each codon includes those listed in Tables 2 to 13 below. Amino acid replacement caused by this single nucleotide replacement is summarized and shown in Table 14. In addition, the possibility can not be excluded that the change of an encoded amino acid is caused by the replacement of two or three nucleotides contained in each codon. A minimum number of a varied nucleotide necessary for causing mutual variation between amino acids including these changes is summarized for each amino acid and shown in Table 15.

When amino acid replacement attributed to "single nucleotide polymorphism" occurs, a molecular weight change corresponding to a formula weight difference between the amino acid involved should be observed. Amino acid replacement that provides the amount of each molecular weight change is summarized as shown in Table 16. In the table, underlined amino acid replacement is amino acid replacement caused by single nucleotide replacement and is considered to be a candidate with higher probability as the amino acid replacement attributed to "single nucleotide polymorphism".

For the known protein-derived predicted peptide fragments unidentified in the first comparison operation, the calculation of predicted molecular weights deduced from the amino acid sequence thereof having amino acid replacement attributed to "single nucleotide polymorphism" is performed based on amino acid species contained in the amino acid sequence by referring to the relationship between amino acid replacement and the amount of molecular weight change shown in Table 16, and a group of predicted molecular weights and an amino acid sequence having one amino acid variation that provides the group are determined. Only those having amino acid replacement caused by single nucleotide replacement may be utilized in the second comparison operation as a group of higher-priority predicted peptide fragments having the amino acid replacement attributed to "single nucleotide polymorphism" by confirming a codon encoding the amino acid in the genomic gene of the known protein recorded in the database.

In addition, studies on factors and mechanisms causing "single nucleotide polymorphism"-type variation in a nucleotide sequence present in a genomic gene are in process at the present stage. Namely, although specific examples of "single nucleotide polymorphism"-type variation in a nucleotide sequence in each individual of organisms such as humans and mammals, which inherit the genetic information of the genome through sexual reproduction are few, further research must be required for elucidating the induction and specific mechanisms that introduce this individual "single nucleotide polymorphism"-type variation in a nucleotide sequence. However, variation in nucleotide sequences in the genomic gene is generally deemed to be derived from the conversion of the original nucleotide to a nucleotide different therefrom during the replication process of the genomic gene or during the repair process of gene damage.

In research on artificially induced mutagenesis, research results of classification of variations in nucleotide sequences found in increasing an repair error for genomic gene damage, a paring error caused by slight damage in bases on template single-stranded DNA during the replication of the genomic gene, or an error in the replication itself have shown statistical regularity (empirical rule) concerning the occurrence frequency of point mutation, that is, base pair replacement, derived from the mechanisms. Namely, in point mutation that produces the change of a phenotype itself and exhibits phenotypic variation, transition, which is reciprocal purine base (A⇔G) replacement or reciprocal pyrimidine base (T⇔C) replacement, is found with much higher frequency than transversion, which is replacement between a purine base (A and G) and a pyrimidine base (T and C). Besides, when detailed frequency comparison among transition base pair replacements or among transversion base pair replacements is conducted, statistical significant difference is also present among the transition base pair replacements or among the transversion base pair replacements. The tendency of these found frequencies is summarized as shown in the order described below. $transition ( T ⇔ C , A ⇔ G ) > transversion ( A ⇔ C , T ⇔ G , G ⇔ C , A ⇔ T )$

In further detailed classification, the tendency of the frequencies in nucleotide sequences of coding strands in the genomic gene is summarized as shown in the order described below. $T ⇔ C > A ⇔ G > [ A ⇔ C , T ⇔ G ] > [ G ⇔ C , A ⇔ T ]$

On the other hand, those having plural combinations in which amino acid conversions attributed to "single nucleotide polymorphism" without the disappearance or generation of the cleavage site of the site-specific proteolytic treatment (e.g., when trypsin is utilized in the site-specific proteolytic treatment, the changes of an encoded amino acid caused by the replacement of one nucleotide in each codon except for variation from a lysine or arginine residue to a different amino acid residue or for variation from a different amino acid residue to a different amino acid residue) cause the same mass change are summarized as shown in Table 17.

When changes in codons causing these amino acid conversions shown in Table 17 are contemplated, these changes are classified into transition nucleotide pair replacement and transversion nucleotide pair replacement as described below.

| | |
|---|---|
| • d=±1 | |
| N⇔D; AAT⇔GAT, AAC⇔GAC: | (A⇔G) transition type |
| I⇔N; ATT⇔AAT, ATC⇔AAC: | (T⇔A) transversion type |
| Q⇔E; CAA⇔GAA, CAG⇔GAG: | (C⇔G) transversion type |
| • d=±16 | |
| P⇔L; CCT⇔CTT, CCC⇔CTC CCA⇔CTA, CCG⇔CTG: | (C⇔T) transition type |
| A⇔S; GCT⇔TCT, GCC⇔TCC GCA⇔TCA, GCG⇔TCG: | (G⇔T) transversion type |
| S⇔C; TCT⇔TGT, TCC⇔TGC: AGT⇔TGT, AGC⇔TGC: | (C⇔G) transversion type (A⇔T) transversion type |
| V⇔D; GTT⇔GAT, GTC⇔GAC: | (T⇔A) transversion type |
| F⇔Y; TTT⇔TAT, TTC⇔TAC: | (T⇔A) transversion type |
| • d=±26 | |
| S⇔L; TCA⇔TTA, TCG⇔TTG: | (C⇔T) transition type |
| H⇔Y; CAT⇔TAT, CAC⇔TAC: | (C⇔T) transition type |
| S⇔I; AGT⇔ATT, AGC⇔ATC: | (G⇔T) transversion type |
| A⇔S; GCT⇔CCT, GCC⇔CCC GCA⇔CCA, GCG⇔CCG: | (G⇔C) transversion type |
| • d=±30 | |
| T⇔M; ACG⇔ATG: | (C⇔T) transition type |
| G⇔S; GGT⇔AGT, GGC⇔AGC: | (G⇔A) transition type |
| A⇔T; GCT⇔ACT, GCC⇔ACC GCA⇔ACA, GCG⇔ACG: | (G⇔A) transition type |
| V⇔E; GTA⇔GAA, GTG⇔GAG: | (T⇔A) transversion type |
| • d=±34 | |
| L⇔F; CTT⇔TTT, CTC⇔TTC: | (C⇔T) transition type |
| I⇔F; ATT⇔TTT, ATC⇔TTC: | (A⇔T) transversion type |
| • d=±44 | |
| C⇔F; TGT⇔TTT, TGC⇔TTC: | (G⇔T) transversion type |
| A⇔D; GCT⇔GAT, GCC⇔GAC: | (C⇔A) transversion type |
| • d=±48 | |
| V⇔F; GTT⇔TTT, GTC⇔TTC GTA⇔TTA, GTG⇔TTG: | (G⇔T) transversion type |
| D⇔Y; GAT⇔TAT, GAC⇔TAC: | (G⇔T) transversion type |
| • d=±58 | |
| G⇔D; GGT⇔GAT, GGC⇔GAC: | (G⇔A) transition type |
| A⇔E; GCA⇔GAA, GCG⇔GAG: | (C⇔A) transversion type |
| • d=±60 | |
| S⇔F; TCT⇔TTT, TCC⇔TTC: | (C⇔T) transition type |
| C⇔Y; TGT⇔TAT, TGC⇔TAC: | (G⇔A) transition type |

Given that the occurrence frequency of the change of a codon causing each amino acid conversion shown above obeys the above-described statistical tendency of frequency in point mutation, the ordering shown in Table 18 is possible. Thus, when only those having amino acid replacement caused by single nucleotide replacement are utilized in the second comparison operation as a group of higher-priority predicted peptide fragments having the amino acid replacement attributed to "single nucleotide polymorphism", a plurality of predicted peptide fragments that provide the same mass change shown in Table 17 are included according to circumstances. For selecting a candidate with hither probability from among the plurality of predicted peptide fragments, the ordering shown in Table 18 can be used for reference.

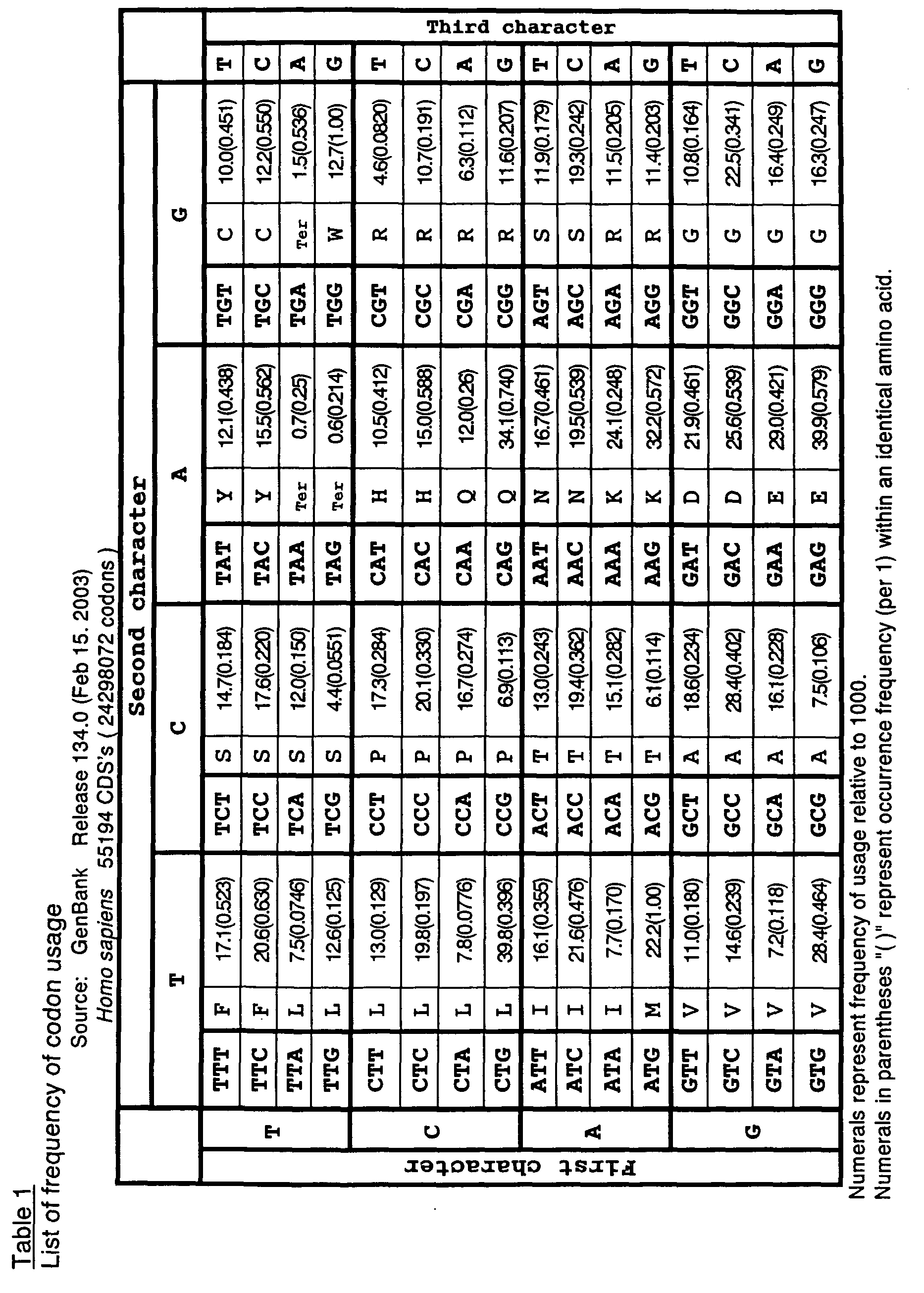

**Table 2 Change of encoded amino acid caused by single nucleotide replacement in each codon**

| | original code | Mutation of first character | Frequency of usage | Mutation of second character | Frequency of usage |
|---|---|---|---|---|---|
| **G** | **GGT** | TGT: C | 110.0 | GTT: V | 11.0 |
| | | CGT: R | 4.6 | GCT: A | 18.6 |
| | | AGT: S | 11.9 | GAT: D | 21.9 |
| | **GGC** | TGC: C | 12.2 | GTC: V | 14.6 |
| | | CGC: R | 10.7 | GCC: A | 28.4 |
| | | AGC: S | 19.3 | GAC: D | 25.6 |
| | **GGA** | TGA: STOP | 1.5 | GTA: V | 7.2 |
| | | CGA: R | 6.3 | GCA: A | 16.1 |
| | | AGA: R | 11.5 | GAA: E | 29.0 |
| | **GGG** | TGG: W | 12.7 | GTG: V | 28.4 |
| | | CGG: R | 11.6 | GCG: A | 7.5 |
| | | AGG: R | 11.4 | GAG: E | 39.9 |
| | **C R S STOP W V A D E** | | | | |

| | original code | Mutation of first character | Frequency of usage | Mutation of second character | Frequency of usage |
|---|---|---|---|---|---|
| **A** | **GCT** | TCT: S | 14.7 | GTT: V | 11.0 |
| | | CCT: P | 17.3 | GAT: D | 21.9 |
| | | ACT: T | 13.0 | GGT: G | 10.8 |
| | **GCC** | TCC: S | 17.6 | GTC: V | 14.6 |
| | | CCC: P | 20.1 | GAC: D | 25.6 |
| | | ACC: T | 19.4 | GGC: G | 22.5 |
| | **GCA** | TCA: S | 12.0 | GTA: V | 7.2 |
| | | CCA: P | 16.7 | GAA: E | 29.0 |
| | | ACA: T | 15.1 | GGA: G | 16.4 |
| | **GCG** | TCG: S | 4.4 | GTG: V | 28.4 |
| | | CCG: P | 6.9 | GAG: E | 39.9 |
| | | ACG: T | 6.1 | GGG: G | 16.3 |
| | **S P T V D G E** | | | | |

**Table 3**

| | original code | Mutation of first character | Frequency of usage | Mutation of second character | Frequency of usage |
|---|---|---|---|---|---|
| **p** | **CCT** | TCT: S | 14.7 | CTT: L | 13.0 |
| | | ACT: T | 13.0 | CAT: H | 10.5 |
| | | GCT: A | 18.6 | CGT: R | 4.6 |
| | **CCC** | TCC: S | 17.6 | CTC: L | 19.8 |
| | | ACC: T | 19.4 | CAC: H | 15.0 |
| | | GCC: A | 28.4 | CGC: R | 10.7 |
| | **CCA** | TCA: S | 12.0 | CTA: L | 7.8 |
| | | ACA: T | 15.1 | CAA: Q | 12.0 |
| | | GCA: A | 16.1 | CGA: R | 6.3 |
| | **CCG** | TCG: S | 4.4 | CTG: L | 39.8 |
| | | ACG: T | 6.1 | CAG: Q | 34.1 |
| | | GCG: A | 7.5 | CGG: R | 11.6 |
| | **S T A L H R Q** | | | | |

| | original code | Mutation of first character | Frequency of usage | Mutation of second character | Frequency of usage |
|---|---|---|---|---|---|
| **V** | **GTT** | TTT: F | 17.0 | GCT: A | 18.6 |
| | | CTT: L | 13.0 | GAT: D | 21.9 |
| | | ATT: I | 16.1 | GGT: G | 10.8 |
| | **GTC** | TTC: F | 20.6 | GCC: A | 28.4 |
| | | CTC: L | 19.8 | GAC: D | 25.6 |
| | | ATC: I | 21.6 | GGC: G | 22.5 |
| | **GTA** | TTA: F | 7.5 | GCA: A | 16.1 |
| | | CTA: L | 7.8 | GAA: E | 29.0 |
| | | ATA: I | 7.7 | GGA: G | 16.4 |
| | **GTG** | TTG: F | 12.6 | GCG: A | 7.5 |
| | | CTG: L | 39.8 | GAG: E | 39.9 |
| | | ATG: M | 22.2 | GGG: G | 16.3 |
| | **F L I M A O G E** | | | | |

**Table 4**

| | original code | Mutation of first character | Frequency of usage | Mutation of second character | Frequency of usage |
|---|---|---|---|---|---|
| **T** | **ACT** | TCT: S | 14.7 | ATT: I | 16.1 |
| | | CCT: P | 17.3 | AAT: N | 16.7 |
| | | GCT: A | 18.6 | AGT: S | 11.9 |
| | **ACC** | TCC: S | 17.6 | ATC: I | 26.6 |
| | | CCC: P | 20.1 | AAC: N | 19.5 |
| | | GCC: A | 19.4 | AGC: S | 19.3 |
| | **ACA** | TCA: S | 12.0 | ATA: I | 7.7 |
| | | CCA: P | 16.7 | AAA: K | 24.1 |
| | | GCA: A | 16.1 | AGA: R | 11.5 |
| | **ACG** | TCG: S | 4.4 | ATG: M | 22.2 |
| | | CCG: P | 6.9 | AAG: K | 32.2 |
| | | GCG: A | 7.5 | AGG: R | 11.4 |
| | **S P A I N K R M** | | | | |

**Table 5**

| | original code | Mutation of first character | Frequency of usage | Mutation of second character | Frequency of usage |
|---|---|---|---|---|---|
| **C** | **TGT** | CGT: R | 4.6 | TTT: F | 17.1 |
| | | AGT: S | 11.9 | TCT: S | 14.7 |
| | | GGT: G | 10.8 | TAT: Y | 12.1 |
| | **TGC** | CGC: R | 10.7 | TTC: F | 20.6 |
| | | AGC: S | 19.3 | TCC: S | 17.6 |
| | | GGC: G | 22.5 | TAC: Y | 15.5 |
| | | TAG: STOP | 1.5 | TGG: W | 12.7 |
| | **R S G F Y W STOP** | | | | |

| | original code | Mutation of first character | Frequency of usage | Mutation of second character | Frequency of usage |
|---|---|---|---|---|---|
| **D** | **GAT** | TAT: Y | 12.1 | GTT: V | 11.0 |
| | | CAT: H | 10.5 | GCT: A | 18.6 |
| | | AAT: N | 16.7 | GGT: G | 10.8 |
| | **GAC** | TAC: Y | 15.5 | GTC: V | 14.6 |
| | | CAC: H | 15.0 | GCC: A | 28.4 |
| | | AAC: N | 19.5 | GGC: G | 22.5 |
| | | GAA: E | 29.0 | GAG: E | 39.9 |
| | **Y H N E V A G** | | | | |

| | original code | Mutation of first character | Frequency of usage | Mutation of second character | Frequency of usage |
|---|---|---|---|---|---|
| **N** | **AAT** | TAT: Y | 12.1 | ATT: I | 16.1 |
| | | CAT: H | 10.5 | ACT: T | 13.0 |
| | | GAT: D | 21.9 | AGT: S | 11.9 |
| | **AAC** | TAC: Y | 15.5 | ATC: I | 21.6 |
| | | CAT: H | 15.0 | ACC: T | 19.4 |
| | | GAC: D | 25.6 | AGC: S | 19.3 |
| | | AAA: K | 24.1 | AAG: K | 32.2 |
| | **Y H D N K I T S** | | | | |

**Table 6**

| | original code | Mutation of first character | Frequency of usage | Mutation of second character | Frequency of usage |
|---|---|---|---|---|---|
| **E** | **GAA** | TAA: STOP | 0.7 | GTA: V | 7.2 |
| | | CAA: Q | 12.0 | GCA: A | 16.1 |
| | | AAA: K | 24.1 | GGA: G | 16.4 |
| | **GAG** | TAG: STOP | 0.6 | GTG: V | 28.4 |
| | | CAG: Q | 34.1 | GCG: A | 7.5 |
| | | AAG: K | 32.2 | GGG: G | 16.3 |
| | | GAT: D | 21.9 | GAC: D | 25.6 |
| | **Q K D V A G STOP** | | | | |

| | original code | Mutation of first character | Frequency of usage | Mutation of second character | Frequency of usage |
|---|---|---|---|---|---|
| **K** | **AAA** | TAA: STOP | 0.7 | ATA: I | 7.7 |
| | | CAA: Q | 12.0 | ACA: A | 15.1 |
| | | GAA: E | 29.0 | AGA: R | 11.5 |
| | **AAG** | TAG: STOP | 0.6 | ATG: M | 22.2 |
| | | CAG: Q | 34.1 | ACG: T | 6.1 |
| | | GAG: E | 39.9 | AGG: R | 11.4 |
| | | AAT: N | 16.7 | AAC: N | 19.5 |
| | **Q E N I T R M STOP** | | | | |

| | original code | Mutation of first character | Frequency of usage | Mutation of second character | Frequency of usage |
|---|---|---|---|---|---|
| **Q** | **CAA** | TAA: STOP | 0.7 | CTA: L | 7.8 |
| | | AAA: K | 24.1 | CCA: P | 16.7 |
| | | GAA: E | 29.0 | CGA: R | 6.3 |
| | **CAG** | TAG: STOP | 0.6 | CTG: L | 39.8 |
| | | AAG: K | 32.2 | CCG: P | 6.9 |
| | | GAG: E | 39.9 | CGG: R | 11.6 |
| | | CAT: H | 10.5 | CAC: H | 15.0 |
| | **K E H L P R STOP** | | | | |

**Table 7**

| | original code | Mutation of first character | Frequency of usage | Mutation of second character | Frequency of usage |
|---|---|---|---|---|---|
| **H** | **CAT** | TAT: Y | 12.1 | CTT: L | 13.0 |
| | | AAT: N | 16.7 | CCT: P | 17.3 |
| | | GAT: D | 21.9 | CGT: R | 4.6 |
| | **CAC** | TAC: Y | 15.5 | CTC: L | 19.8 |
| | | AAC: N | 19.5 | CCC: P | 20.1 |
| | | GAC: D | 25.6 | CGC: R | 10.7 |
| | | CAA: Q | 12.0 | CAG: Q | 34.1 |
| | **Y N D Q P R L** | | | | |

| | original code | Mutation of first character | Frequency of usage | Mutation of second character | Frequency of usage |
|---|---|---|---|---|---|
| **F** | **TTT** | CTT: L | 13.0 | TAT: Y | 14.7 |
| | | ATT: I | 16.1 | TCT: S | 12.1 |
| | | GTT: V | 11.0 | TGT: C | 10.0 |
| | **TTC** | CTC: L | 19.8 | TAC: Y | 17.6 |
| | | ATC: I | 21.6 | TCC: S | 15.5 |
| | | GTC: V | 14.6 | TGC: C | 12.2 |
| | | TTA: L | 7.5 | TTG: L | 12.6 |
| | **L I V S Y C** | | | | |

| | original code | Mutation of first character | Frequency of usage | Mutation of second character | Frequency of usage |
|---|---|---|---|---|---|
| **Y** | **TAT** | CAT: H | 10.5 | TTT: F | 17.1 |
| | | AAT: N | 16.7 | TCT: S | 14.7 |
| | | GAT: D | 21.9 | TGT: C | 10.0 |
| | **TAC** | CAC: H | 15.0 | TTC: F | 20.6 |
| | | AAC: N | 19.5 | TCC: S | 17.6 |
| | | GAC: D | 25.6 | TGC: C | 12.2 |
| | | TAA: STOP | 0.7 | TAG: STOP | 0.6 |
| | **H N D F S C STOP** | | | | |

**Table 8**

| | original code | Mutation of first character | Frequency of usage | Mutation of second character | Frequency of usage |
|---|---|---|---|---|---|
| **S** | **TCT** | CCT: P | 17.3 | TTT: F | 17.1 |
| | | ACT: T | 13.0 | TAT: Y | 12.1 |
| | | GCT: G | 18.6 | TGT: C | 10.0 |
| | **TCC** | CCC: P | 20.1 | TTC: F | 20.6 |
| | | ACC: T | 19.4 | TAC: Y | 15.5 |
| | | GCC: A | 28.4 | TGC: C | 21.2 |
| | **TCA** | CCA: P | 16.7 | TTA: L | 7.5 |
| | | ACA: T | 15.1 | TAA: STOP | 0.7 |
| | | GCA: A | 16.1 | TGA: STOP | 1.5 |
| | **TCG** | CCG: P | 6.9 | TTG: L | 12.6 |
| | | ACG: T | 6.1 | TAG: STOP | 0.6 |
| | | GCG: A | 7.5 | TGG: W | 12.7 |
| | **AGT** | TGT: C | 10.0 | ATT: I | 16.1 |
| | | CGT: R | 4.6 | ACT: T | 13.0 |
| | | GGT: G | 10.8 | AAT: N | 16.7 |
| | **AGC** | TGC: C | 12.2 | ATC: I | 21.6 |
| | | CGC: R | 10.7 | ACC: T | 19.4 |
| | | GGC: G | 22.5 | AAC: N | 19.5 |
| | | AGA: R | 11.5 | AGG: R | 11.4 |
| | **P T G A C R F Y L W I N STOP** | | | | |

**Table 9**

| | original code | Mutation of first character | Frequency of usage | Mutation of second character | Frequency of usage |
|---|---|---|---|---|---|
| **L** | **CTT** | TTT: F | 17.1 | CCT: P | 17.3 |
| | | ATT: I | 16.1 | CAT: H | 10.5 |
| | | GTT: V | 11.0 | CGT: R | 4.6 |
| | **CTC** | TTC: F | 20.6 | CCC: P | 20.1 |
| | | ATC: I | 21.6 | CAC: H | 15.0 |
| | | GTC: V | 14.6 | CGC: R | 10.7 |
| | **CTA** | TTA: L | 7.5 | CCA: P | 16.7 |
| | | ATA: I | 7.7 | CAA: Q | 12.0 |
| | | GTA: V | 7.2 | AGA: R | 6.3 |
| | **CTG** | TTG: L | 12.6 | CCG: P | 6.9 |
| | | ATG: M | 22.2 | CAG: Q | 34.1 |
| | | GTG: V | 28.4 | CGG: R | 11.6 |
| | **TTA** | CTA: L | 7.8 | TCA: S | 12.0 |
| | | ATA: I | 7.7 | TAA: STOP | 0.7 |
| | | GTA: V | 7.2 | TGA: STOP | 1.5 |
| | **TTG** | CTG: L | 39.8 | TCG: S | 4.4 |
| | | ATG: M | 22.2 | TAG: STOP | 0.6 |
| | | GTG: V | 28.4 | TGG: W | 12.7 |
| | | TTT: F | 17.1 | TTC: F | 20.6 |
| | **F I V (L) M P H R Q S W STOP** | | | | |

**Table 10**

| | original code | Mutation of first character | Frequency of usage | Mutation of second character | Frequency of usage |
|---|---|---|---|---|---|
| **R** | **CGT** | TGT: C | 10.0 | CTT: L | 13.0 |
| | | AGT: S | 11.9 | CCT: P | 17.3 |
| | | GGT: G | 10.8 | CAT: H | 10.5 |
| | **CGC** | TGC: C | 12.2 | CTC: L | 19.8 |
| | | AGC: S | 19.3 | CCC: P | 20.1 |
| | | GGC: G | 22.5 | CAC: H | 15.0 |
| | **CGA** | TGA: STOP | 1.5 | CTA: L | 7.8 |
| | | AGA: T | 11.5 | CCA: P | 16.7 |
| | | GGA: G | 16.4 | CAA: Q | 12.0 |
| | **CGG** | TGG: W | 12.7 | CTG: L | 39.8 |
| | | AGG: R | 11.4 | CCG: P | 6.9 |
| | | GGG: G | 16.3 | CAG: Q | 34.1 |
| | **AGA** | TGA: STOP | 1.5 | ATA: I | 7.7 |
| | | CGA: R | 6.3 | ACA: T | 15.1 |
| | | GGA: G | 16.4 | AAA: K | 24.1 |
| | **AGG** | TGG: W | 12.7 | ATG: M | 22.2 |
| | | CGG: R | 11.6 | ACG: T | 6.1 |
| | | GGG: G | 16.3 | AAG: K | 32.2 |
| | | AGT: S | 11.9 | AGC: S | 19.3 |
| | **C S G T W (R) L P Q I K M H STOP** | | | | |

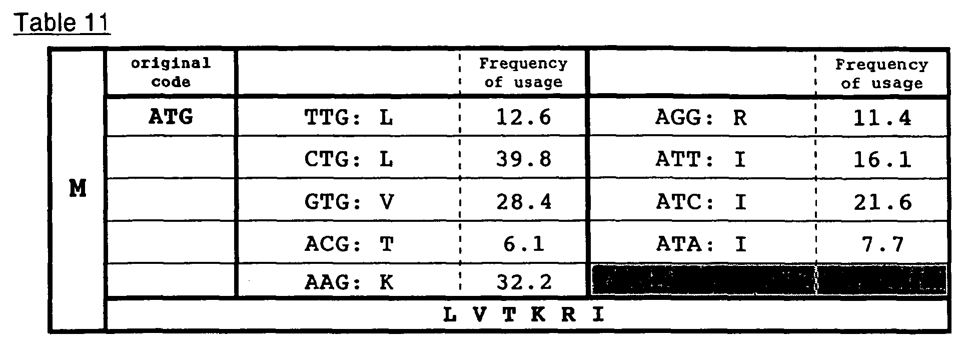

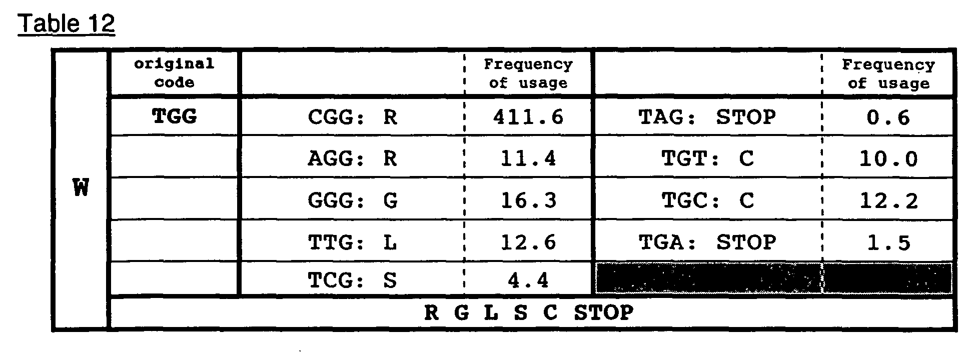

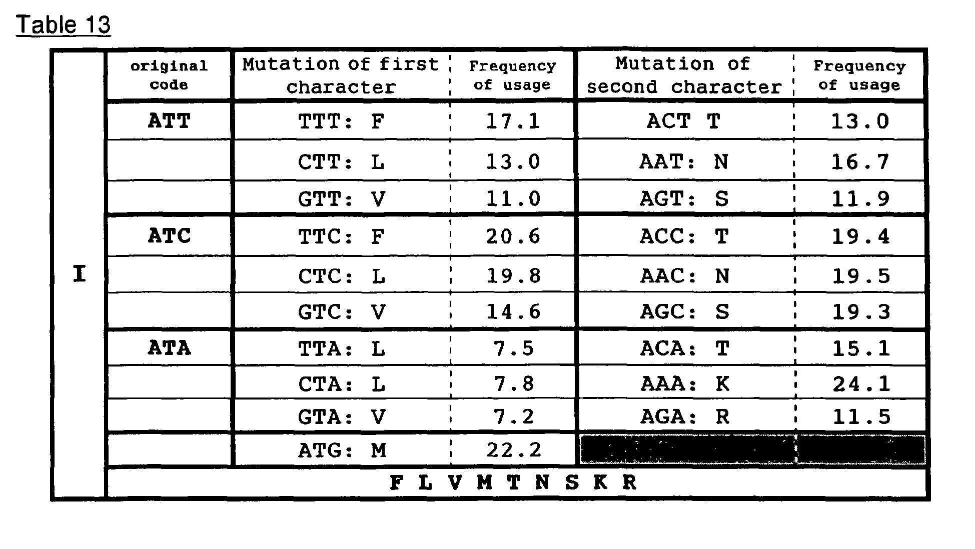

**Table 14 Possible amino acid mutation caused by single nucleotide mutation**

| | G | A | S | P | V | T | C | L | I | D | N | E | K | Q | M | H | F | Y | R | W | TE R | |
|---|---|---|---|---|---|---|---|---|---|---|---|---|---|---|---|---|---|---|---|---|---|---|
| G | | ● | ● | | ● | | ● | | | ● | | ● | | | | | | | ● | ● | ● | G |
| A | ● | | ● | ● | ● | ● | | | | ● | | ● | | | | | | | | | | A |
| S | ● | ● | | ● | | ● | ● | ● | ● | | ● | | | | | | ● | ● | ● | ● | ● | S |
| P | | ● | ● | | | ● | | ● | | | | | | ● | | ● | | | ● | | | P |
| V | ● | ● | | | | | | ● | ● | ● | | ● | | | ● | | ● | | | | | V |
| T | | ● | ● | ● | | | | | ● | | ● | | ● | | ● | | | | ● | | | T |
| C | ● | | ● | | | | | | | | | | | | | | ● | ● | ● | ● | ● | C |
| L | | | ● | ● | ● | | | | ● | | | | | ● | ● | ● | ● | | ● | ● | ● | L |
| I | | | ● | | ● | ● | | ● | | | ● | | ● | | ● | | ● | | ● | | | I |
| D | ● | ● | | | ● | | | | | | ● | ● | | | | ● | | ● | | | | D |
| N | | | ● | | | ● | | | ● | ● | | | ● | | | ● | | ● | | | | N |
| E | ● | ● | | | ● | | | | | ● | | | ● | ● | | | | | | | ● | E |
| K | | | | | | ● | | | ● | | ● | ● | | ● | ● | | | | ● | | ● | K |
| Q | | | | ● | | | | ● | | | | ● | ● | | | ● | | | ● | | ● | Q |
| M | | | | | ● | ● | | ● | ● | | | | ● | | | | | | ● | | | M |
| H | | | | ● | | | | ● | | ● | ● | | | ● | | | | ● | ● | | | H |
| F | | | ● | | ● | | ● | ● | ● | | | | | | | | | ● | | | | F |
| Y | | | ● | | | | ● | | | ● | ● | | | | | ● | ● | | | | ● | Y |
| R | ● | | ● | ● | | ● | ● | ● | ● | | | | ● | ● | ● | ● | | | | ● | ● | R |
| W | ● | | ● | | | | ● | ● | | | | | | | | | | | ● | | ● | W |
| TE R | ● | | ● | | | | ● | ● | | | | ● | ● | ● | | | | ● | ● | ● | | TE R |
| | G | A | S | P | V | T | C | L | I | D | N | E | K | Q | M | H | F | Y | R | W | TE R | |

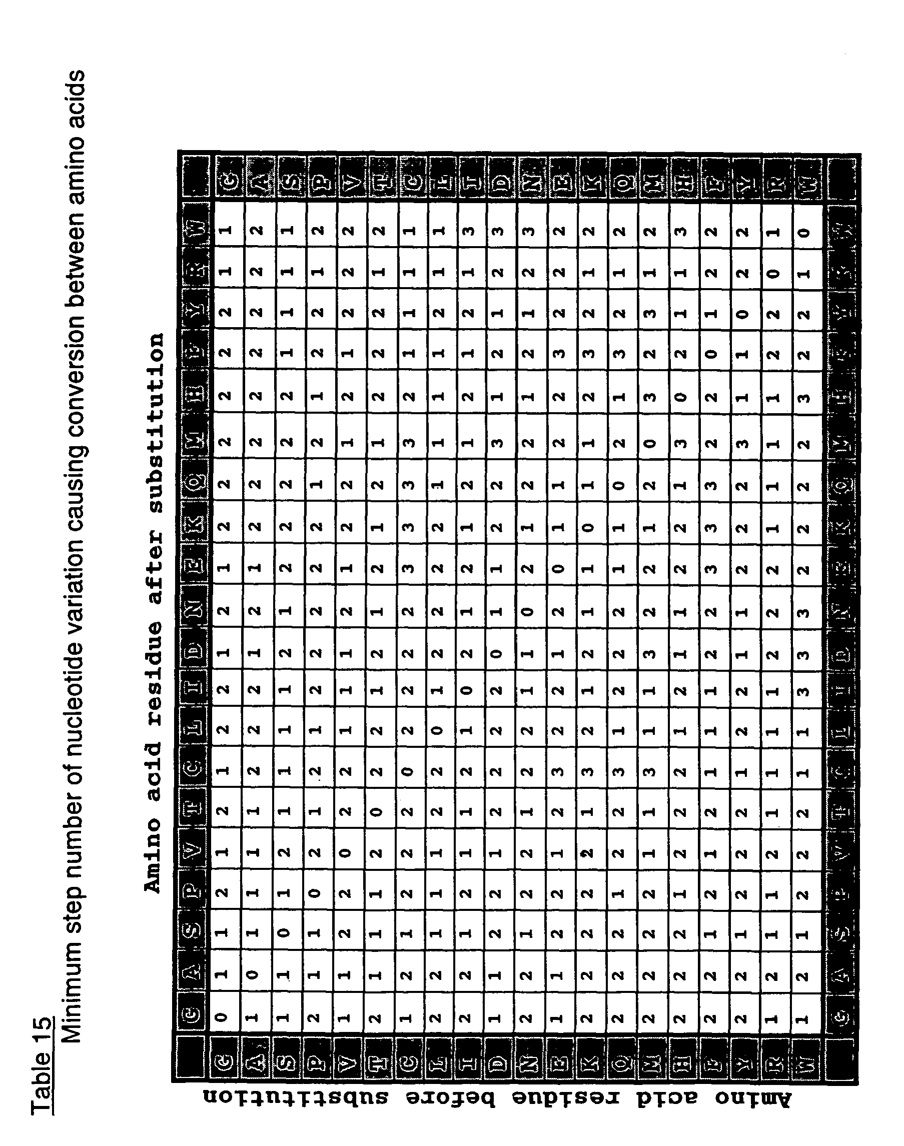

**Table 16**

| *d* | Type of replacement | *d* | *d* | Type of replacement | *d* | *d* | Type of replacement | *d* |
|---|---|---|---|---|---|---|---|---|
| 1 | LN, **IN**, **ND**, (**KE**),**QE** | -1 | 27 | **SN**,(**TK**),TQ,(ER) | -27 | 58 | **GD**,**AE**,QW,(KW) | -58 |
| 2 | PV,VT,TC,LD,ID,EM | -2 | 28 | **AV**,SD,TE,CM,(**KR**),(**QR**) | -28 | 59 | (**PR**) | -59 |
| 3 | (**KM**), QM | -3 | 29 | (VK),VQ | -29 | 60 | AM,**SF**,**CY** | -60 |
| 4 | **PT**,VC | -4 | 30 | **GS**,**AT**,**VE**,**TM**,(**RW**) | -30 | 62 | TY | -62 |
| 6 | PC,MH | -6 | 31 | (PK),**PQ** | -31 | 64 | VY | -64 |
| 7 | (RY) | -7 | 32 | AC,PE,**VM**,DF,FY | -32 | 66 | AH,PY | -66 , |
| 8 | EH | -8 | 33 | NF | -33 | **69** | **(SR)** | **-69** |
| 9 | QH,(FR),(KH) | -9 | 34 | PM,CH,**LF**,**IF**,EY | -34 | **71** | **GK,GQ,DW** | **-71** |
| 10 | S**P**,CL,CI,HF | -10 | 35 | (KY),QY | -35 | **72** | **GE,NW** | **-72** |
| 11 | CN | -11 | 36 | TH,FW | -36 | **73** | **LW,IW** | **-73** |
| 12 | SV,TL,**TI**,CD | -12 | 38 | VH | -38 | 74 | GM | -74 |
| 13 | **TN**,(DK),DQ | -13 | 40 | GP,**PH** | -40 | 76 | AF,SY | -76 |
| 14 | GA,ST,VL,VI,TD, DE,(NK),NQ | -14 | 41 | (SK),SQ,(DR) | -41 | 80 | GH | -80 |
| 15 | VN,(LK),**LQ**,(**IK**),IQ,NE | -15 | 42 | **GV**,AL,AI,SE,(NR) | -42 | 83 | CW | -83 |
| 16 | **AS**,**SC**,PL,PI,VD LE,IE,DM,MF,**FY** | -16 | 43 | AN,(**LR**),(**IR**) | -43 | 85 | (AR) ,TW | -85 |
| 17 | PN,NM | -17 | 44 | GT,**AD**,SM,**CF** | -44 | 87 | VW | -87 |
| 18 | PD,LM,IM | -18 | 46 | **GC,**TF | -46 | 89 | PW | -89 |
| 19 | EF | -19 | 48 | **VF**,**DY** | -48 | 90 | GF | -90 |
| 22 | DH | -22 | 50 | **KY**,HW | -50 | 92 | AY | -92 |
| 23 | NH,YW | -23 | 53 | SH,PF,LY,IY,(**CR**) | -53 | **99** | **SW,(GR)** | **-99** |
| 24 | **LH**,IH | -24 | 55 | (**TR**) | -55 | 106 | GY | -106 |
| 25 | (CK),CQ,(**MR**) | -25 | 56 | GL,GI | -56 | 115 | AW | -115 |
| 26 | **AP**,SL,S**I**,CE,HY | -26 | 57 | GN,(AK),AQ,(VR),EW | -57 | **129** | **GW** | **-129** |

| | | | | | | | | |
|---|---|---|---|---|---|---|---|---|
| Amino acid replacement causing each molecular weight change * In this list, "XY" represents amino acid replacement X⇔Y. Positive numbers represent a mass difference in the replacement X→Y "read from left to right", and negative numbers represent a mass difference in the replacement X←Y "read from right to left". * Underlined parts represent possible amino acid replacement caused by single nucleotide replacement. * Parentheses "( )" represent amino acid replacement between a trypsin cleavage site: arginine or lysine and a different amino acid. | | | | | | | | |

**Table 17**

| Mass differen oe | Type of amino acid replacement | Mass differen ce |
|---|---|---|
| 1 | ND ,IN, QE | -1 |
| 16 | PL,AS,SC,VD,FY | -16 |
| 26 | SL,HY,AP,SI | -26 |
| 30 | TM,GS,AT,VE | -30 |
| 34 | LF,IF | -34 |
| 44 | AD,CF | -44 |
| 48 | VF,DY | -48 |
| 58 | GD,AE | -58 |
| 60 | SF,CY | -60 |

| | | |
|---|---|---|
| * In the list, "XY" represents amino acid replacement X⇔Y. Positive numbers represent a mass difference in the replacement X→Y "read from left to right", and negative numbers represent a mass difference in the replacement X ←Y "read from right to left". | | |

**Table 18**

| **Mass differen ce** | Conversion attributed to transition base pair substation | Conversion attributed to transversion base pair substation | **Mass differen ce** |
|---|---|---|---|
| **1** | ND | IN,QE | **-1** |
| **16** | PL | **AS>SC,VD,FY** | **-16** |
| **26** | **SL,HY** | **SI>AP** | **-26** |
| **30** | **TM>GS,AT** | VE | **-30** |
| **34** | LF | IF | **-34** |
| **44** | | **AD>CF** | **-44** |
| **48** | | VF,DY | **-48** |
| **58** | | GD,AE | **-58** |
| **60** | **SF>CY** | **-** | **-60** |

| | | | |
|---|---|---|---|
| * In the list, "XY" represents amino acid replacement X⇔Y. Positive numbers represent a mass difference in the replacement X→Y "read from left to right", and negative numbers represent a mass difference in the replacement X ←Y "read from right to left". | | | |

The analysis method according to the present invention basically adopts an approach whereby peptide fragments fragmented by subjecting a peptide chain of a target protein to be analyzed to site-specific proteolytic treatment are subjected to mass spectrometry to judge whether or not the target protein to be analyzed and known proteins recorded in a database are identical, based on a result of molecular weights of the peptide fragments measured by mass spectrometry as molecular weights (M+H/Z; Z=1) of corresponding monovalent "parent cation species" or as molecular weights (M-H/Z; Z=1) of corresponding monovalent "parent anion species". To be more specific, because the method of the present invention compares the molecular weights exhibited by peptide fragments of assumed amino acid sequences with the molecular weights of the actually measured peptide fragments, it is preferred to use a Time-of-Flight mass spectrometer, for example a MALDI-TOF-MS apparatus, more suitable for measurement under conditions that prevent some atomic groups from missing from amino acid residues constituting peptide fragments in the ionization process of the utilized mass spectrometry. Moreover, a measurement result of molecular weights of a variety of daughter ion species generated in MS/MS analysis by the fragmentation of the "parent cation species" or the "parent anion species" is utilized as a second mass spectrometric result. In this case, information about partial structures of the respective peptide fragments is also available by utilizing MS/MS method such as TOF-SIMS method whereby ion species separated with the use of a Time-of-Flight mass spectrometer, for example a MALDI-TOF-MS apparatus, are further irradiated with electron beams to analyze masses of second ion species generated therefrom. For example, the N-terminal and C-terminal sequences of peptide fragments can be identified according to circumstances by utilizing these MS/MS methods.

On the other hand, peptide fragmentation treatment with protease is available as means of the site-specific proteolytic treatment used in peptide fragmentation. Examples of preferably available protease can include protease widely used for peptide fragmentation treatment such as trypsin that cleaves the C-terminal peptide bond of lysine and arginine residues, V8 enzyme that cleaves the C-terminal peptide bond of a glutamic acid residue, and thermolysin that cleaves the N-terminal peptide bond of leucine, isoleucine, valine, and phenylalanine residues.

The site-specific proteolytic treatment can be performed by the protease digestion having specificity to cleavage sites of amino acid sequences and may also be performed by utilizing a cleavage approach using a chemical reagent such as CNBr having specificity to the cleavage of the C-terminal amide bond of a methionine residue.

It is desirable that a plurality of peptide fragments obtained from a long peptide chain in amino acid length by applying the protease digestion or the chemical cleavage approach thereto should fall within the range of amino acid length preferable for achieving desired mass precision according to the utilized mass spectrometry. Namely, it is desirable that all the plurality of peptide fragments prepared from the target protein to be analyzed should contain, for example approximately 15 to 2 cleavage sites, preferably approximately 10 to 3 cleavage sites, per 100 amino acids for the protease digestion or the chemical cleavage on their "parent cation species" or "parent anion species". If cleavage sites are present with this frequency, the obtained peptide fragments can have an average amino acid length of 7 to 50 amino acids, preferably 10 to 35 amino acids and can attain the range of amino acid length measurable with sufficient precision.

For the purpose of preventing the Cys-Cys bond from being regenerated from the sulfanyl (-SH) group on the reduced Cys side chain in practicing peptide fragmentation with the use of means such as the protease digestion, selective introduction of a protecting group for the sulfanyl (-SH) group on the Cys side chain can also be performed on the linearized peptide chain. In this context, the sulfanyl (-SH) group on the Cys side chain is protected in advance by subjecting it to, for example selective carboxymethylation or pyridylethylation. The protecting groups selectively introduced onto the Cys side chain can also be utilized as labeling atomic groups for confirming the presence of Cys in mass spectrometry.

In the method for identifying a protein with the use of mass spectrometry according to the present invention, the target protein to be analyzed is enzymatically digested in advance with protease having specificity to cleavage sites, for example trypsin, and individual molecular weights of generated peptide fragments are determined by mass spectrometry. Then, based on this information of the first mass spectrometry, predicted molecular weights of peptide fragments presumptively generated by similar peptide fragmentation performed on the known proteins are calculated from sequence information about their (deduced) full-length amino acid sequences recorded in the database and compared with the individual molecular weights of the actually measured peptide fragments to select a candidate of identification. On the other hand, in the approach called peptide mass fingerprinting (PMF) method, when individual actually measured molecular weight values of peptide fragments generated by enzymatically digesting known proteins with protease having specificity to cleavage sites, for example trypsin, are determined in advance as molecular weights of peptide fragments for reference, an isolated target protein to be analyzed is usually subjected to peptide fragmentation by the same enzymatic digestion to measure with the use of mass spectrometry, respective molecular weights of the peptide fragments, which are then compared with the individual molecular weights of the peptide fragments recorded in the database to verify identify between them. Meanwhile, when the identification method by this peptide mass fingerprinting (PMF) method is expanded even to a case in which individual actually measured molecular weight values of peptide fragments of known proteins are not actually available, the present invention serves as means for highly maintaining the accuracy of a candidate of the identification.

Specifically, when the target protein to be analyzed corresponds to a splicing variant having difference in post-translational modification or exhibits the replacement of a few amino acids attributed to "single nucleotide polymorphism" in its comparison with the known proteins to be compared, the present invention serves as means for highly maintaining the accuracy of a candidate of identification by using the selection of a first candidate known protein as the candidate of identification based on the first comparison operation in combination with the second comparison operation that judges the presence or absence of variation derived from a variety of factors described above.

Hereinafter, an example of individual analysis procedures performed in the second comparison operation on unidentified actually measured peptide fragments derived from the target protein to be analyzed will be described more fully.

In this embodiment,

Not only molecular weights (M+H/Z; Z=1) of corresponding monovalent "parent cation species" and molecular weights (M-H/Z; Z=1) of corresponding monovalent "parent anion species" measured by MALDI-TOF-MS method for a plurality of peptide fragments obtained by peptide fragmentation treatment described below but also a result of MS/MS method using TOS-SIMS method that analyzes masses of second ion species (daughter ion species) generated from the "parent ion species" by further subjecting the "parent ion species" separated with the MALDI-TOF-MS apparatus to electron beam irradiation is used as MS data on the target protein to be analyzed.

In addition, the C-terminal amino acid sequence of a peptide obtained by successively excising the C-terminal amino acids thereof with the use of the approach of "METHOD OF ANALYZING PEPTIDE FOR DETERMINING C-TERMINAL AMINO ACID SEQUENCE" disclosed in the pamphlet of international publication WO 03/081255A1 is also utilized as additional MS data.
(1) Peptide fragmentation treatment
   The target protein to be analyzed isolated in advance is supplemented with a reducing reagent such as the reduction conditions: 2-sulfanylethanol (HS-C₂H₄-OH: 2-mercaptoethanol) or DTT (dithiothreitol:
   threo-1,4-disulfanyl-2,3-butanediol) and electrophoresed in the reduction state to confirm a visible single spot and its apparent molecular weight (Mapp).
   After reduction treatment and denaturation treatment to a chain peptide chain, peptide fragmentation is performed by cleaving the C-terminal peptide bonds of lysine and arginine residues by trypsin digestion.
(2) Mass spectrometry
   Molecular weights (M+H/Z; Z=1) of corresponding monovalent "parent cation species" and molecular weights (M-H/Z; Z=1) of corresponding monovalent "parent anion species" measured by MALDI-TOF-MS method for a plurality of peptide fragments obtained by the peptide fragmentation treatment, and a result of MS/MS method using TOS-SIMS method that analyzes masses of second ion species (daughter ion species) generated from the "parent ion species" by further subjecting the "parent ion species" separated with the MALDI-TOF-MS apparatus to electron beam irradiation are obtained.
   In addition, the C-terminal amino acid sequence of a peptide obtained by successively excising the C-terminal amino acids thereof with the use of the approach of "METHOD OF ANALYZING PEPTIDE FOR DETERMINING C-TERMINAL AMINO ACID SEQUENCE" disclosed in the pamphlet of international publication WO 03/081255A1 is also utilized as additional MS data.
   Thus, the actually measured mass values (Mex) of the peptide fragments derived from the target protein to be analyzed are determined as Mex (Pi) for the total number (Nex) of the peptide fragments {Pi: i=1 to Nex}. Masses of second ion species (daughter ion species) measured by MS/MS method for the respective peptide fragments {Pi: i=1 to Nex} are used as a second MS result.
(3) Calculation of predicted molecular weights (Mref) of predicted peptide fragments predicted for each known protein based on (deduced) full-length amino acid sequence
   On the assumption that for each known protein recorded in a database, the C-terminal peptide bonds of lysine and arginine residues would be cleaved by trypsin digestion, molecular weights of peptide fragments {Prefj: j=1 to Nref} predicted based on its (deduced) full-length amino acid sequence are calculated and used as a data set of predicted molecular weights (Mref) of predicted peptide fragments. Namely, a line of the predicted peptide fragments: Pref1 ... from the N terminus is defined, and a set of their predicted molecular weights Mref (Pref1) ... is constructed.
   When the cleavage sites are in proximity within a few amino acids, it is assumed that some cleavages do not occur. Therefore, an additional data set of predicted molecular weights (Mref) of predicted peptide fragments is also created based on this hypothesis.
(4) First comparison operation
   For each known protein, its data set of the predicted molecular weights (Mref) of the predicted peptide fragments is compared with the actually measured mass values (Mex) of the peptide fragments derived from the target protein to be analyzed to select peptide fragments having a match within measurement precision of the mass spectrometry.
   The number (Nex-id) of the actually measured peptide fragments derived from the target protein to be analyzed and the number (Nref-id) of the known protein-derived predicted peptide fragments judged as having a match (identified) are determined. At the same time, an ensemble of the actually measured mass values (Mex) of the actually measured peptide fragments derived from the target protein to be analyzed and an ensemble of the predicted molecular weights (Mref) of the known protein-derived predicted peptide fragments judged as having a match are determined. An ensemble of the actually measured mass values (Mex) of unidentified actually measured peptide fragments derived from the target protein to be analyzed and an ensemble of the predicted molecular weights (Mref) of known protein-derived unidentified predicted peptide fragments are determined.
   Similar comparison operation is performed on all the known proteins recorded in the database to create a group of known protein(s) exhibiting the highest number (Nref-id) of the generally-known protein-derived predicted peptide fragments, which is used as a group of first candidate known protein(s) as a candidate of identification for the target protein to be analyzed. At this stage, if the group of first candidate known protein(s) comprises one type of known protein, the one type of known protein is tentatively judged as being a single candidate of identification for the target protein to be analyzed.
   Simultaneously, portions occupied by the known protein-derived predicted peptide fragments corresponding to the actually measured mass values (Mex) of the identified actually measured peptide fragments derived from the target protein to be analyzed are all determined on the (deduced) full-length amino acid sequence of this one type of known protein.
   In this procedure,
   (i) in the case where the "identified regions" constitute consecutive amino acid sequence portions on the (deduced) full-length amino acid sequence of this known protein, the judgment of the "single candidate of identification" is recognized to be more highly accurate;
   (ii) in the case where fractionation into three portions occurs so that the identified regions are divided into an N-terminal portion and a C-terminal portion, between which the "unidentified regions" are located as a series of regions, the judgment of the "single candidate of identification" is also recognized to be more highly accurate; or
   (iii) in the case where there exist the known protein-derived unidentified predicted peptide fragments but no actually measured mass value (Mex) of the unidentified actually measured peptide fragment derived from the target protein to be analyzed, the judgment of the "single candidate of identification" is also recognized to be more highly accurate.

   If the group of first candidate known protein(s) comprises plural types of known proteins, the presence or absence of a candidate that satisfies either of the criterion (i) or (ii) is judged. If one type of known protein satisfies the criterion, this one type of known protein is judged as being a single candidate of identification for the target protein to be analyzed.
   When no known protein satisfies this secondary judgment, validity between the second MS result of masses of second ion species (daughter ion species) measured by MS/MS method for the temporarily identified actually measured peptide fragments derived from the target protein to be analyzed and the amino acid sequences of the corresponding predicted peptide fragments derived from the known protein is judged to determine a single candidate of identification. If necessary, a single candidate of identification is determined by referring to the additional MS data of the C-terminal amino acid sequences of the temporarily identified actually measured peptide fragments derived from the target protein to be analyzed.
(5) Individual analysis practiced in second comparison operation on unidentified actually measured peptide fragments derived from the target protein to be analyzed
   The actually measured peptide fragments derived from the target protein to be analyzed that are unidentified in the first comparison operation are analyzed according to procedures described below for the reason why they do not match to the predicted molecular weights (Mref) of the unidentified predicted peptide fragments derived from the known protein as a "single candidate of identification".
   Individual information may be obtained particularly about the possibility of
   1. post-translational modification;
   2. splicing; and
   3. amino acid replacement.

   (5-1) Post-translational modification
      At first, the unidentified actually measured peptide fragments derived from the target protein to be analyzed are analyzed for the possibility of post-translational modification.
      The possibility of phosphorylation, methylation, acetylation, hydroxylation, formylation, and pyroglutamylation, which are main modifications likely to be found in mammals, is analyzed.
      On the assumption that for the ensemble of the predicted molecular weights (Mref) of the known protein-derived unidentified predicted peptide fragments, there would exist the modification, predicted molecular weights (Mref-mod) of predicted peptide fragments having this hypothetical post-translational modification are calculated and used as a second data set.
      A data set of the predicted molecular weights (Mref-mod) of the known protein-derived unidentified predicted peptide fragments each having one added modifying group is compared with the actually measured mass values (Mex) of the unidentified peptide fragments derived from the target protein to be analyzed to select peptide fragments having a match within measurement precision of the mass spectrometry.
      If the respective actually measured mass values (Mex) of the unidentified peptide fragments derived from the target protein to be analyzed exhibit a match to one of the predicted molecular weights (Mref-mod) of the predicted peptide fragments each having one added modifying group, whether or not this predicted peptide fragment has an amino acid undergoing the addition of the modifying group is judged by referring to the amino acid sequence of the predicted peptide fragment. When the addition of the modifying group is possible, validity between the second MS result of masses of second ion species (daughter ion species) measured by MS/MS method for the temporarily identified actually measured peptide fragment derived from the target protein to be analyzed and the amino acid sequence of the corresponding predicted peptide fragment having the addition of the modifying group is judged. When no irrationality is observed, the actually measured mass value (Mex) of this unidentified peptide fragment derived from the target protein to be analyzed is judged to be equivalent to the predicted peptide fragment having one added modifying group.
      Simultaneously, the actually measured mass value (Mex) of the peptide fragment derived from the target protein to be analyzed and the predicted molecular weight (Mref) of the known protein-derived predicted peptide fragment additionally identified in the second comparison operation are excluded from the unidentified ensembles.
   (5-2) N-terminally truncated protein or C-terminally truncated protein
      In the case where the portions occupied by the known protein-derived predicted peptide fragments corresponding to the actually measured mass values (Mex) of the identified actually measured peptide fragments derived from the target protein to be analyzed are consecutive from the N-terminus on the (deduced) full-length amino acid sequence of the known protein as a "single candidate of identification" in the first comparison operation of the paragraph (4), and that there remains one unidentified actually measured peptide fragment derived from the target protein to be analyzed, the target protein to be analyzed is highly likely to be a C-terminally truncated protein. Alternatively, in the case where these portions are consecutive from the C-terminus, and that there remains one unidentified actually measured peptide fragment derived from the rotein analyte, the target protein to be analyzed is highly likely to be an N-terminally truncated protein.
      When the target protein to be analyzed is predicted to be a C-terminally truncated protein, predicted molecular weights (Mref-c-truncated) of a series of C-terminally truncated predicted peptide fragments obtained by successively removing C-terminal amino acids from the amino acid sequence of the predicted peptide fragment corresponding to a portion immediately after the consecutive identified regions in the ensemble of the predicted molecular weights (Mref) of the known protein-derived unidentified predicted peptide fragments are calculated and used as a second data set. The actually measured mass value (Mex) of the unidentified peptide fragment derived from the target protein to be analyzed is compared with the predicted molecular weights (Mref-c-truncated) of the series of C-terminally truncated predicted peptide fragments. When the actually measured mass value (Mex) exhibits a match to one of them, the unidentified peptide fragment derived from the target protein to be analyzed is judged to be equivalent to this C-terminally truncated predicted peptide fragment.
      When the target protein to be analyzed is predicted to be an N-terminally truncated protein, predicted molecular weights (Mref-n-truncated) of a series of N-terminally truncated predicted peptide fragments by successively removing N-terminal amino acids from the amino acid sequence of the predicted peptide fragment corresponding to a portion immediately after the consecutive identified regions in the ensemble of the predicted molecular weights (Mref) of the known protein-derived unidentified predicted peptide fragments are calculated and used as a second data set. The actually measured mass value (Mex) of the unidentified peptide fragment derived from the target protein to be analyzed is compared with the predicted molecular weights (Mref-n-truncated) of the series of N-terminally truncated predicted peptide fragments. When the actually measured mass value (Mex) exhibits a match to one of them, the unidentified peptide fragment derived from the target protein to be analyzed is judged to be equivalent to this N-terminally truncated predicted peptide fragment.
   (5-3) Protein splicing-type or splicing variant-type protein
      In the case where fractionation into three portions occurs so that the identified regions occupied by the known protein-derived predicted peptide fragments corresponding to the actually measured mass values (Mex) of the identified actually measured peptide fragments derived from the target protein to be analyzed are divided into an N-terminal portion and a C-terminal portion, between which the "unidentified regions" are located as a series of regions, on the (deduced) full-length amino acid sequence of the known protein as a "single candidate of identification" in the first comparison operation of the above case (4) while there remains one unidentified actually measured peptide fragment derived from the target protein to be analyzed, the target protein to be analyzed is highly likely to be a protein splicing-type protein or a splicing variant-type protein.
      In this case, predicted molecular weights (Mref) of a group of a series of fragment-linkage-type predicted peptide fragments obtained by linking the amino acid sequences of the known protein-derived unidentified predicted peptide fragments located at the N-terminus and C-terminus of the "unidentified regions" and successively removing amino acids from this linked portion are calculated and used as a second data set. The actually measured mass value (Mex) of the unidentified peptide fragment derived from the target protein to be analyzed is compared with the predicted molecular weights of the series of fragment-linkage-type predicted peptide fragments. When the actually measured mass value (Mex) exhibits a match to one of them, the unidentified peptide fragment derived from the target protein to be analyzed is judged to be equivalent to this fragment-linkage-type predicted peptide fragment.
      In the end, the target protein to be analyzed is deduced to be a splicing variant-type protein if the linkage site matches to the junction of exons by referring to the amino acid sequence of the temporarily identified fragment-linkage-type predicted peptide fragment, while the target protein to be analyzed is deduced to be a protein splicing-type protein if the linkage site does not match to the junction of exons by referring to the amino acid sequence of the temporarily identified fragment-linkage-type predicted peptide fragment.
      When a database for reference has an identification error in exons, resulting in an error in the (deduced) full-length amino acid sequence, there is also a case in which fractionation into three portions occurs so that the identified regions occupied by the known protein-derived predicted peptide fragments corresponding to the actually measured mass values (Mex) of the identified actually measured peptide fragments derived from the target protein to be analyzed are divided into an N-terminal portion and a C-terminal portion, between which the "unidentified regions" are located as a series of regions, on the (deduced) full-length amino acid sequence of the known protein as a "single candidate of identification" in the first comparison operation of the above case (4) while there remains one unidentified actually measured peptide fragment derived from the target protein to be analyzed. In this case, the possibility is very low that the actually measured mass value (Mex) of the peptide fragment derived from the target protein to be analyzed that is unidentified in the second comparison operation exhibits a match to one of the predicted molecular weights of the series of fragment-linkage-type predicted peptide fragments in comparison between them. On the contrary, when matching fragments can not be identified, this can be judge as the strong supporting evidence of the identification error in exons.
   (5-4) Variant protein having amino acid replacement attributed to "single nucleotide polymorphism"
      In the case where the unidentified actually measured peptide fragment derived from the target protein to be analyzed still exists after the second comparison operation described above, the possibility of amino acid replacement attributed to "single nucleotide polymorphism" is analyzed.
      Specifically, the possibility that one amino acid replacement attributed to "single nucleotide polymorphism" is contained in the peptide fragment is analyzed. Given that one amino acid replacement occurs in the amino acid sequences of those still contained in the ensemble of the predicted molecular weights (Mref) of the unidentified predicted peptide fragments among the still unidentified predicted peptide fragments derived from the known protein as a "single candidate of identification", a group of assumed predicted peptide fragments and their predicted molecular weights (Mref) are calculated.
      A mass difference varying by one amino acid replacement attributed to "single nucleotide polymorphism" is first investigated. Based on the result shown in Table 16, ensembles such as:
      - an ensemble of possible mass differences caused by amino acid replacement: D;
      - an ensemble of mass differences caused by amino acid replacement attributed to single nucleotide replacement: D₁; and
      - an ensemble of mass differences caused by amino acid replacement attributed to the replacement of two or more nucleotides: D₂ $D = {D}_{1} ∪ {D}_{2}$ ${D}_{1} = { \pm 1 , \pm 3 , \pm 4 , \pm 9 , \pm 10 , \pm 12 , \pm 13 , \pm 14 , \pm 16 , \pm 18 , \pm 19 , \pm 22 , \pm 23 , \pm 24 , \pm 25 , \pm 26 , \pm 27 , \pm 28 , \pm 30 , \pm 31 , \pm 32 , \pm 34 , \pm 40 , \pm 42 , \pm 43 , \pm 44 , \pm 46 , \pm 48 , \pm 49 , \pm 53 , \pm 55 , \pm 58 , \pm 59 , \pm 60 , \pm 69 , \pm 72 , \pm 73 , \pm 76 , \pm 83 , \pm 99 , \pm 129 }$ ${D}_{2} = { \pm 2 , \pm 6 , \pm 7 , \pm 8 , \pm 11 , \pm 17 , \pm 29 , \pm 33 , \pm 35 , \pm 36 , \pm 38 , \pm 41 , \pm 50 , \pm 56 , \pm 57 , \pm 62 , \pm 62 , \pm 64 , \pm 66 , \pm 71 , \pm 74 , \pm 80 , \pm 87 , \pm 89 , \pm 90 , \pm 92 , \pm 106 , \pm 115 }$ are defined
         (i) Assume that one amino acid replacement attributed to "single nucleotide polymorphism" occurs in the amino acid sequences of known protein-derived unidentified predicted peptide fragments.
            As illustrated in Figure 6, an ensemble Pref-nf={Pnf} of known protein-derived predicted peptide fragments still unidentified after each step of the second comparison operation and an ensemble Pex-ni≡{Pni} of actually measured peptide fragments derived from the target protein to be analyzed that are still unidentified after each step of the second comparison operation are contemplated.
            Step i-1:
               Based on the predicted molecular weights Mref (Pnf) of the predicted peptide fragments Pnf belonging to the ensemble Pref-nf≡{Pnf} of the known protein-derived unidentified predicted peptide fragments,
               an ensemble of possible predicted molecular weights Mref on the assumption that one amino acid replacement would occur in the predicted peptide fragments is defined as Cref-rep (Pnf)={(Mref (Pnf)+d); d∈D} for each Pnf ∈ Pref-nf≡{Pnf}.
            Step i-2:
               On the other hand, an ensemble of actually measured mass values (Mex) in the ensemble Pex-ni≡{Pni} of the unidentified actually measured peptide fragments derived from the target protein to be analyzed is defined as Cex-ni={Mex (Pni); Pni∈Pex-ni}.
            Step i-3:
               For each Pnf? Pref-nf≡{Pnf},
               a product set of the ensemble Cref-rep (Pnf) and the ensemble Cex-ni is determined. In this procedure, whether or not a substantial match is obtained between them is determined in consideration of measurement precision of the utilized mass spectrometry.
               (a) In the case of product set Cref-rep (Pnf) ∩Cex-ni=φ (empty set)
                  The peptide fragment generated by one amino acid replacement from the known protein-derived unidentified predicted peptide fragment Pnf does not exist in the ensemble of the unidentified actually measured peptide fragments derived from the target protein to be analyzed.
               (b) In the case of product set Cref-rep (Pnf)∩Cex-ni≠φ (not empty set)

               The peptide fragment generated by one amino acid replacement from the known protein-derived unidentified predicted peptide fragment Pnf is likely to exist in the ensemble of the unidentified actually measured peptide fragments derived from the target protein to be analyzed.
               In regard to a possible mass difference d caused by the amino acid replacement that gives this product set Cref-rep (Pnf)∩Cex-ni, a group of combinations of an amino acid X before replacement and an amino acid Y after replacement is determined by referring to the result shown in Table 16.
               Whether or not the amino acid X before replacement contained in this group exists in the amino acid sequence of the known protein-derived unidentified predicted peptide fragment Pnf is verified.
               In the case where the amino acid X does not exist in the amino acid sequence, the peptide fragment generated by one amino acid replacement from the known protein-derived unidentified predicted peptide fragment Pnf does not exist in the ensemble of the unidentified actually measured peptide fragments derived from the target protein to be analyzed.
               In the case where the amino acid X exists in the amino acid sequence, the peptide fragment generated by one amino acid replacement from the known protein-derived unidentified predicted peptide fragment Pnf is more likely to exist in the ensemble of the unidentified actually measured peptide fragments derived from the target protein to be analyzed.
               When the product set Cref-rep (Pnf) ∩ Cex-ni contains a plurality of elements, one element having higher possibility is generally selected by performing the verification described above. When two or more elements remain even after this verification, whether or not the possible mass difference d caused by amino acid replacement belongs to the ensemble D₁ is verified to select an element belonging to the ensemble D₁ as an element having further higher possibility.
               It is assumed, but rarely, that as a result of the comparison operation of the step i-3, one actually measured peptide fragment Pni in the ensemble Pex-ni≡{Pni} of the unidentified actually measured peptide fragments derived from the target protein to be analyzed is judged to be more highly likely to be a plurality of peptide fragments generated by one amino acid replacement from the known protein-derived unidentified predicted peptide fragments Pnf.
               Thus, if one actually measured peptide fragment Pni in the ensemble Pex-ni≡{Pni} of the unidentified actually measured peptide fragments derived from the target protein to be analyzed is judged as being the peptide fragment generated by one amino acid replacement from the known protein-derived unidentified predicted peptide fragment Pnf, its predicted amino acid sequence containing replacement is compared with the second mass spectrometric result obtained by MS/MS method for the actually measured peptide fragment to verify the correspondence between them. Alternatively, the predicted amino acid sequence containing replacement is compared with the result of analysis of the C-terminal amino acid sequence of the actually measured peptide fragment to verify the correspondence between them.
               The steps i-1 to i-3 shown above are suitable when the number of elements in the ensemble Pref-nf≡{Pnf} of the known protein-derived unidentified predicted peptide fragments is smaller than the number of elements in the ensemble Pex-ni≡{Pni} of the unidentified actually measured peptide fragments derived from the target protein to be analyzed. Conversely, when the number of elements in the ensemble Pex-ni≡{Pni} of the unidentified actually measured peptide fragments derived from the target protein to be analyzed is smaller than the number of elements in the ensemble Pref-nf={Pnf} of the known protein-derived unidentified predicted peptide fragments, steps can be adopted by which the presence or absence of the known protein-derived unidentified predicted peptide fragments having the possibility of giving the actually measured mass values (Mex) to the respective actually measured peptide fragments Pni derived from the target protein to be analyzed by amino acid replacement is judged.
               Specifically, an ensemble of molecular weights predicted before replacement on the assumption that their actually measured mass values (Mex) would be given by one amino acid replacement is defined as Cex-rep (Pni)={(Mex (Pni)? d); d ∈ D} for each Pni ∈ Pex-ni={Pni}. On the other hand, an ensemble of predicted molecular weights (Mref) in the ensemble Pref-nf= {Pnf} of the known protein-derived unidentified predicted peptide fragments is defined as Cref-nf={Mref (Pnf); Pnf E Pref-nf}.
               Subsequently, the same comparison operation as in the step i-3 is practiced.
         (ii) Assume that one amino acid replacement attributed to "single nucleotide polymorphism" occurs in the amino acid sequences of the known protein-derived unidentified predicted peptide fragments to newly generate a trypsin cleavage site.
            In this case, two partial fragments are predicted to be generated from the known protein-derived unidentified predicted peptide fragments, as illustrated in Figure 4. In terms of an N-terminal partial fragment of them, it has become a partial fragment in which the amino acid X before replacement is converted to lysine K or arginine R by amino acid replacement. Therefore, a possible molecular weight of this kind of N-terminal partial fragment is predicted. Simultaneously, a molecular weight of the corresponding C-terminal partial fragment is also predicted.
            Step ii-1:
               Based on amino acid sequences X₁ (Pnf), ... Xₙ (Pnf) of the predicted peptide fragments Pnf belonging to the ensemble Pref-nf≡{Pnf} of the known protein-derived unidentified predicted peptide fragments and on formula weights m₁, ... mₙ of the amino acid residues thereof,
               a group of predicted molecular weights Mref-N (Pnf; Xₖ→K)=(m₁+...+ mₖ₋₁)+m_{K}+18 of the N-terminal partial fragment assumed from the conversion of Xₖ (Pnf) to K;
               a group of predicted molecular weights Mref-N (Pnf; Xₖ→R)=(m₁+...+ mₖ₋₁)+mR+18 of the N-terminal peptide fragment assumed from the conversion of Xₖ (Pnf) to R; and
               a group of predicted molecular weights Mref-C (Pnf; Xₖ→K or R)=(mₖ₊₁+...mₙ)+18 of the corresponding C-terminal partial fragment are calculated for each Pnf ∈ Pref-nf≡{Pnf}.
               Respective ensembles of these newly calculated groups of predicted molecular weights {Mref-N (Pnf; Xₖ→K); k=1, ... n-1}, {Mref-N (Pnf; Xₖ→R); k=1, ... n-1}, and {Mref-C (Pnf; Xₖ→K or R); k=1, ... n-1} are defined.
            Step ii-2:
               On the other hand, an ensemble of actually measured mass values (Mex) in the ensemble Pex-ni≡{Pni} of the unidentified actually measured peptide fragments derived from the target protein to be analyzed is defined as Cex-ni={Mex (Pni); Pni∈Pex-ni}.
            Step ii-3:
               For each Pnf ∈ Pref-nf≡{Pnf},
               a product set of each of the ensembles {Mref-N (Pnf; Xₖ→K); k=1, ... n-1}, {Mref-N (Pnf; Xₖ→R); k=1, ... n-1}, and {Mref-C (Pnf; Xₖ→K or R); k=1, ... n
               -1} and the ensemble Cex-ni is determined. In this procedure, whether or not a substantial match is obtained between them is determined in consideration of measurement precision of the utilized mass spectrometry.
         (c) In the case of product set [{Mref-N (Pnf; Xₖ→K); k=1, ... n-1}∪ {Mref-N (Pnf; Xₖ→R); k=1, ... n-1}∩Cex-ni=φ (empty set)
            The N-terminal peptide fragment derived due to the trypsin cleavage site generated by one amino acid replacement from the known protein-derived unidentified predicted peptide fragment Pnf does not exist in the ensemble of the unidentified actually measured peptide fragments derived from the target protein to be analyzed.
         (d) In the case of product set [{Mref-N (Pnf; Xₖ→K); k=1, ... n-1}∪ {Mref-N (Pnf; Xₖ→R); k=1, ... n―1}∩Cex-ni≠φ (not empty set)
            The N-terminal peptide fragment derived due to the trypsin cleavage site generated by one amino acid replacement from the known protein-derived unidentified predicted peptide fragment Pnf is likely to exist in the ensemble of the unidentified actually measured peptide fragments derived from the target protein to be analyzed.
            However, a case can not be excluded in which the actually measured mass value (Mex) is not obtained such that the predicted molecular weight of this N-terminal peptide fragment derived is smaller than a proper measurement region of the mass spectrometry. Therefore, similar comparison is performed on the C-terminal peptide fragment likely to be derived.
         (e) In the case of product set {Mref-C (Pnf; Xₖ→K or R); k=1, ... n-1}∩ Cex-ni=φ (empty set)
            The C-terminal peptide fragment derived due to the trypsin cleavage site generated by one amino acid replacement from the known protein-derived unidentified predicted peptide fragment Pnf does not exist in the ensemble of the unidentified actually measured peptide fragments derived from the target protein to be analyzed.
         (f) In the case of product set {Mref-C (Pnf; Xₖ→K or R); k=1, ... n―1}∩ Cex-ni≠φ (not empty set)
            The C-terminal peptide fragment derived due to the trypsin cleavage site generated by one amino acid replacement from the known protein-derived unidentified predicted peptide fragment Pnf is likely to exist in the ensemble of the unidentified actually measured peptide fragments derived from the target protein to be analyzed.
            The comparison operation described above is practiced on all the predicted peptide fragments Pnf belonging to the ensemble Pref-nf≡{Pnf} of the known protein-derived unidentified predicted peptide fragments. In this procedure, the unidentified actually measured peptide fragment derived from the target protein to be analyzed may be judged accidentally to be likely to be partial fragments derived from two or more unidentified predicted peptide fragments Pnf derived from the known protein. In this case, each of their predicted partial amino acid sequences is compared with the second mass spectrometric result obtained by MS/MS method for the actually measured peptide fragment to verify the correspondence between them. Alternatively, each of the predicted partial amino acid sequences is compared with the result of analysis of the C-terminal amino acid sequence of the actually measured peptide fragment to verify the correspondence between them.
            Ideally, the cases (d) and (f) suggest the possibility that one amino acid replacement attributed to "single nucleotide polymorphism" occurs in the amino acid sequences of the known protein-derived unidentified predicted peptide fragments to newly generate a trypsin cleavage site, resulting in two partial fragments derived therefrom. According to circumstances, either of the cases (d) and (f) suggests this possibility. In any case, the predicted partial amino acid sequence is compared with the second mass spectrometric result obtained by MS/MS method for the actually measured peptide fragment to verify the correspondence between them. Alternatively, the predicted partial amino acid sequence is compared with the result of analysis of the C-terminal amino acid sequence of the actually measured peptide fragment to verify the correspondence between them.
            (iii) Assume that one amino acid replacement attributed to "single nucleotide polymorphism" occurs in the amino acid sequences of the known protein-derived unidentified predicted peptide fragments to delete one trypsin cleavage site.

            In this case, two of the predicted peptide fragments Pnf belonging to the ensemble Pref-nf≡{Pnf} of the known protein-derived unidentified predicted peptide fragments should occupy consecutive positions on the (deduced) full-length amino acid sequence of the known protein.
            Assume that lysine or arginine, the trypsin cleavage site between these two predicted peptide fragments Pnf consecutive to each other, is substituted by a different amino acid, with the result that no cleavage occurs.
            An ensemble D_{K→} of mass number changes caused by the replacement of lysine to a different amino acid other than arginine and an ensemble D_{R→} of mass number changes caused by the replacement of arginine to a different amino acid other than lysine are defined by referring to Table 16. ${D}_{K \to } = { - 71 , - 57 , - 31 , - 29 , - 27 , - 25 , - 15 , - 14 , - 13 , + 1 , + 3 , + 9 , + 19 , + 35 , + 58 }$ ${D}_{R \to } = { - 99 , - 85 , - 69 , - 57 , - 55 , - 53 , - 43 , - 42 , - 41 , - 27 , - 25 , - 19 , - 9 , + 7 , + 30 }$
            Step iii-1:
               Based on the amino acid sequences of two adjacent predicted peptide fragments Pnf1 and Pnf2 belonging to the ensemble Pref-nf≡{Pnf} of the known protein-derived unidentified predicted peptide fragments, the amino acid of the trypsin cleavage site can be identified to be either lysine or arginine.
               In this procedure, a group of predicted molecular weights of a linked peptide fragment on the assumption that as a result of conversion of lysine or arginine to a different amino acid, no cleavage would occur is calculated. ${ ( Mref ( Pnf 1 ) + Mref ( Pnf 2 ) - 18 + d ) ; d ∈ {D}_{K \to } }$ ${ ( Mref ( Pnf 1 ) + Mref ( Pnf 2 ) - 18 + d ) ; d ∈ {D}_{R \to } }$
            Step iii-2:
               On the other hand, an ensemble of actually measured mass values (Mex) in the ensemble Pex-ni≡{Pni} of the unidentified actually measured peptide fragments derived from the target protein to be analyzed is defined as Cex-ni={Mex (Pni); Pni ∈ Pex-ni}.
            Step iii-3:
               For each combination of consecutive predicted peptide fragments Pnf1 and Pnf2,
               a product set of either of an ensemble {(Mref (Pnf1)+Mref (Pnf2)―18+d); d∈D_{K→}} or an ensemble {(Mref (Pnf1)+Mref (Pnf2)―18+d); d∈D_{R→}} defined in advance and the ensemble Cex-ni is determined. In this procedure, whether or not a substantial match is obtained between them is determined in consideration of measurement precision of the utilized mass spectrometry.
         (g) In the case of product set {(Mref (Pnf1)+Mref (Pnf2)―18+d); d ∈ D_{K→}} ∩Cex-ni=φ (empty set) or product set {(Mref (Pnf1)+Mref (Pnf2)―18+d); d ∈ D_{R→}} ∩ Cex-ni=φ (empty set)
            The peptide fragment linked due to the deletion of the trypsin cleavage site generated by one amino acid replacement from the known protein-derived unidentified predicted peptide fragment Pnf does not exist in the ensemble of the unidentified actually measured peptide fragments derived from the target protein to be analyzed.
         (h) In the case of product set {(Mref (Pnf1)+Mref (Pnf2)―18+d); d∈D_{K→}} ∩Cex-ni≠φ (not empty set) or product set {(Mref (Pnf1)+Mref (Pnf2)―18+d); d∈D_{R?} }∩Cex-ni≠φ (not empty set)
            The peptide fragment linked due to the deletion of the trypsin cleavage site generated by one amino acid replacement from the known protein-derived unidentified predicted peptide fragment Pnf is likely to exist in the ensemble of the unidentified actually measured peptide fragments derived from the target protein to be analyzed.
            In this case, its predicted partial amino acid sequence is compared with the second mass spectrometric result obtained by MS/MS method for the actually measured peptide fragment to verify the correspondence between them. Alternatively, the predicted partial amino acid sequence is compared with the result of analysis of the C-terminal amino acid sequence of the actually measured peptide fragment to verify the correspondence between them.
            Simultaneously, it is possible to determine what kind of different amino acid is substituted for lysine or arginine from a value of the mass difference d giving this linked peptide fragment by referring to Table 16.
   (5-5) Use of de novo sequencing
      In a series of procedures of the second comparison operation, a highly possible candidate of identification for the unidentified peptide fragment derived from the target protein to be analyzed is predicted based on the (deduced) full-length amino acid sequence of the one type of known protein selected in the first comparison operation as a single candidate of identification for the target protein to be analyzed.
      In this prediction, significant identification with high accuracy is possible as described above, based on the result of PMF method and MS/MS analysis utilizing the predicted peptide fragments. However, for these unidentified peptide fragments, the possibility of local amino acid replacement or modifying group addition can be investigated with higher accuracy by utilizing the result of fragment ion species obtained in MS/MS analysis and comparing the respective identified sequences with the prediction result obtained by de novo sequencing as much as possible for the partial amino acid sequences contained in the unidentified peptide fragments and the analysis result of the C-terminal amino acid sequences of the actually measured peptide fragments. When it is actually confirmed that partial difference exists between the result of de novo sequencing and the sequence predicted from the known protein as a single candidate of identification, and that this different portion corresponds to the amino acid replacement determined by the second comparison operation, the reliability of the identification is rendered further higher.
      When post-translational modification and amino acid replacement occur at the same time, they are not identified in the series of procedures in the second comparison operation. However, in some cases, it is possible to identify them by utilizing the prediction result of the partial amino acid sequences obtained by de novo sequencing and even the analysis result of the C-terminal amino acid sequences of the actually measured peptide fragments.
      For example, misjudgment of "noise peaks" as being peaks of the actually measured peptide fragments derived from the target protein to be analyzed in mass spectrometry can also be excluded by practicing de novo sequencing based on MS/MS analysis. Specifically, although the target protein to be analyzed is isolated in advance, the target protein to be analyzed, even after separated by, for example two-dimensional electrophoresis, is often contaminated with slight amounts of other proteins that give very adjacent spots. The total amounts of these contaminating other proteins are small. However, when peptide fragments with high ionization efficiency are generated in mass spectrometry, peaks resulting from peptide fragments derived from the contaminating proteins might be misidentified as those with low ionization efficiency of peaks of the actually measured peptide fragments derived from the target protein to be analyzed. This kind of misidentification can be avoided by practicing de novo sequencing based on MS/MS analysis.
      Although corresponding monovalent "parent cation species" (M+H/Z; Z=1) or monovalent "parent anion species" (M-H/Z; Z=1) derived from peptide fragments are mainly generated in MALDI-TOF-MS method, ion species (Z?2) ionized more highly are also generated slightly. Alternatively, there is also a phenomenon called "PSD (post source decay)" in which the monovalent "parent cation species" (M+H/Z; Z=1) or monovalent "parent anion species" (M-H/Z; Z=1) once generated initiate fragmentation. According to circumstances, peaks of derivative ion species generated by this PSD phenomenon are also observed. These peaks of the derivative ion species resulting from the peptide fragments derived from the target protein to be analyzed usually have small peak intensity and however, might be confused with the corresponding monovalent "parent cation species" (M+H/Z; Z=1) or monovalent "parent anion species" (M-H/Z; Z=1) derived from the peptide fragments. This kind of confusion can be excluded by practicing de novo sequencing based on MS/MS analysis.
(6) Suggestion of disease-associated post-translational modification, splicing variant, and amino acid replacement of "single nucleotide polymorphism"
   When the judgment that suggests the presence of post-translational modification, a splicing variant, and amino acid replacement of "single nucleotide polymorphism" is obtained by the series of procedures in the second comparison operation, a powerful guide is considered to be given to the studies of the relationship between these variations and diseases.
   When differential analysis is conducted on samples from normal individuals and samples from patients with disease to judge the same known protein as being a candidate of identification for them but to suggest the presence of post-translational modification, a splicing variant, or amino acid replacement of "single nucleotide polymorphism" in target proteins derived from the samples from patients with disease, the possibility of the disease-specific post-translational modification, splicing variant, or amino acid replacement of "single nucleotide polymorphism" is considered to be suggested.
   In many cases, the post-translational modification and the splicing variant appear as spots two-dimensionally separated from each other in two-dimensional electrophoresis. Therefore, it can be judged that there is some difference. However, information obtained by the second comparison operation in the identification method according to the present invention is considered to be of great value for concretely judging this difference.
   In this regard, the possibility is pointed out that if a splicing mechanism has abnormality, a protein that has lost its function is expressed and involved in the onset of a variety of diseases (especially intractable neurological disorders). Many intractable neurological disorders typified by frontotemporal dementia (tau gene), spinal muscular atrophy (SMN1 gene), and amyotrophic lateral sclerosis (glutamate transporter EAAT2 gene) have been reported as diseases developed by the splicing abnormality. In regard to the protein derived from this kind of splicing abnormality, as long as exon-intron structures of a normal protein is recorded in nucleotide sequence information of the genomic gene in a database used in the method of the present invention, this abnormality can be suggested independently of differential analysis by utilizing the method of the present invention, as described above.

### Industrial Applicability

Particularly in the case where a peptide chain constituting a target protein to be analyzed has specific variations and modifications attributed to a variety of factors described above when compared with a peptide chain having a full-length amino acid sequence encoded by the corresponding genomic gene recorded in a database, a method for identifying a protein with the use of mass spectrometry according to the present invention serves as a method which in regard to known individual proteins recorded in a database on known proteins, refers to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence, and selects with high accuracy, one of the known proteins recorded in the database that is assessed as equivalent to the target protein to be analyzed, based on information obtained in mass spectrometry for the target protein to be analyzed. Thus, in the case where variation, modification abnormality, or the like in an expressed protein has correlation with the onset and progression of the disease, the present invention allows for the identification with high accuracy of a corresponding normal protein or of a corresponding gene required for detailed analysis of the variant protein or modification abnormality and allows for the prediction with high accuracy of the presence or absence of the variation or modification abnormality.

## Claims

1. A method for identifying a protein with the use of mass spectrometry,
**characterized in that**
the method is a method in which by referring to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence in regard to known individual proteins, which information is recorded in a database on known proteins, one of the known proteins recorded in the database which is assessed to correspond to a target protein to be analyzed is selected therefor, based on a mass spectrometric result actually measured for the target protein to be analyzed,
wherein
(1) the mass spectrometric result actually measured for the target protein is a result obtained from mass spectrometric analysis comprising at least a set of respective actually measured mass values (Mex) of a plurality of peptide fragments determined by
subjecting a peptide chain isolated in advance that constitutes the target protein to be analyzed to reduction treatment capable of cleaving disulfide (S-S) bond in Cys-Cys bond present therein and to treatment that unfolds folding of the target protein to linearize the peptide chain constituting the target protein,
further carrying out treatment for site-specific proteolysis that selectively cleaves a peptide chain at a particular amino acid or amino acid sequence to evenly and selectively prepare a plurality of peptide fragments derived from the linearized peptide chain collected from the target protein, and
determining the respective actually measured mass values (Mex) of the plurality of peptide fragments, based on a result for masses (M) of the plurality of the peptide fragments produced that is measured by mass spectrometry as molecular weights (M+H/Z; Z=1) of corresponding monovalent "parent cation species" or as molecular weights (M-H/Z; Z=1) of corresponding monovalent "parent anion species";
(2) in regard to known individual proteins recorded in said database on known proteins, referring to sequence information about a nucleotide sequence of a genomic gene encoding a full-length amino acid sequence of a peptide chain constituting the known protein, about a nucleotide sequence of a reading frame in mRNA enabling translation of the full-length amino acid sequence, and about a (deduced) full-length amino acid sequence encoded by the nucleotide sequence,
calculating predicted molecular weights (Mref) of a plurality of peptide fragments derived from a peptide chain having said full-length amino acid sequence, presumably produced by subjecting the peptide chain having the full-length amino acid sequence that is translated according to the genomic gene encoding the known protein to the reduction treatment for a sulfanyl (-SH) group on a Cys side chain and to the treatment of site-specific proteolysis to create a set of the predicted molecular weights (Mref) of the plurality of predicted peptide fragments derived from the known protein, and
employing as a reference standard database, a data set of the predicted molecular weights (Mref) of the plurality of peptide fragments, wherein the data set is composed of total sets of the predicted molecular weights (Mref) of the plurality of known protein-derived predicted peptide fragments calculated for all the known individual proteins recorded in the database on known proteins;
(3) performing a first comparison operation whereby the set of the respective actually measured mass values (Mex) of the plurality of peptide fragments determined for the target protein to be analyzed is compared with each of the sets of the predicted molecular weights (Mref) of the plurality of known protein-derived predicted peptide fragments calculated for the known individual proteins recorded in the database on known proteins, and
the number of the actually measured peptide fragments derived from the target protein to be analyzed and the number of the known protein-derived predicted peptide fragments judged as having a substantial match between the respective actually measured mass values (Mex) and the predicted molecular weights (Mref) of the plurality of predicted peptide fragments in each of the sets derived from the known proteins in consideration of a measurement error attributed to the utilized mass spectrometry itself are determined each individually for the known proteins comprised in the reference standard database, and
selecting from among the known proteins determined in the first comparison operation, known proteins in decreasing order of the number of the actually measured peptide fragments derived from the target protein to be analyzed and the number of the known protein-derived predicted peptide fragments judged as having a match to classify a known protein exhibiting the highest number of the match into a group of first candidate known protein(s) as a candidate of identification for the target protein to be analyzed; and
(4) when the group of the first candidate known protein(s) comprises one type of known protein, judging the one type of known protein selected from the database as being a single candidate of identification for the target protein to be analyzed.

2. The method according to claim 1, **characterized in that**
in the case where in referring to sequence information about the selected known protein judged in the step (4) as being a single candidate of identification for the target protein to be analyzed,
the number of actually measured peptide fragments that are derived from the target protein to be analyzed, which are not judged in the first comparison operation of the step (3) as having a match to the predicted molecular weights (Mref) of the plurality of predicted peptide fragments in the set derived from the known protein judged as being a candidate of identification, is zero,
the selected known protein judged in the step (4) as being a single candidate of identification for the target protein to be analyzed is judged as being a highly accurate single candidate of identification.

3. The method according to claim 1, **characterized in that**
in the case where in referring to sequence information about the selected known protein judged in the step (4) as being a single candidate of identification for the target protein to be analyzed,
when arranging the plurality of the actually measured peptide fragments derived from the target protein to be analyzed that are judged in the first comparison operation of the step (3) as having a match to the predicted molecular weights (Mref) of the plurality of predicted peptide fragments in the set derived from the known protein judged as being a candidate of identification, in positions to be occupied by the corresponding predicted peptide fragments derived from the known protein, a group of the actually measured peptide fragments that are judged as having a match constitutes consecutive amino acid sequences that is contained in the full-length amino acid sequence of the known protein,
the selected known protein judged in the step (4) as being a single candidate of identification for the target protein to be analyzed is judged as being a highly accurate single candidate of identification.

4. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, there would exist post-translational modification attributed to modifying group addition to a side chain of an amino acid residue present in the unidentified predicted peptide fragments, calculating predicted molecular weights (Mref) of predicted peptide fragments having the post-translational modification attributed to modifying group addition to a side chain of an amino acid residue; and
performing a second comparison operation whereby the presence or absence of the unidentified actually measured peptide fragment having the actually measured mass value (Mex) matching to any of the predicted molecular weights (Mref) of the predicted peptide fragments having the post-translational modification attributed to modifying group addition is judged, wherein
when at least one unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is selected,
the selected known protein judged in the step (4) as being a single candidate of identification for the target protein to be analyzed is judged as being a highly accurate single candidate of identification.

5. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for an N-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of N-terminal truncation would occur to convert the known protein to a mature protein, calculating predicted molecular weights (Mref) of a plurality of predicted peptide fragments derived from the post-translational N-terminal processing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the post-translational N-terminal processing is judged, wherein
when at least one unidentified actually measured peptide fragment derived from the target protein to be analyzed having the actually measured mass value (Mex) matching to any of the predicted molecular weights (Mref) of the predicted peptide fragments derived from the post-translational N-terminal processing is selected,
the selected known protein judged in the step (4) as being a single candidate of identification for the target protein to be analyzed is judged as being a highly accurate single candidate of identification.

6. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a C-terminal portion of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, post-translational processing of C-terminal truncation would occur to convert the known protein to a C-terminally truncated protein, calculating predicted molecular weights (Mref) of a plurality of predicted peptide fragments derived from the post-translational processing of C-terminal truncation, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the post-translational processing of C-terminal truncation is judged, wherein
when at least one unidentified actually measured peptide fragment derived from the target protein to be analyzed having the actually measured mass value (Mex) matching to any of the predicted molecular weights (Mref) of the predicted peptide fragments derived from the post-translational C-terminal processing is selected,
the selected known protein judged in the step (4) as being a single candidate of identification for the target protein to be analyzed is judged as being a highly accurate single candidate of identification.

7. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in genomic gene portions encoding portions of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, splicing different from presumable RNA splicing in a plurality of exons contained in the genomic gene portions would occur, calculating predicted molecular weights (Mref) of a plurality of predicted peptide fragments derived from the alternative splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the alternative splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the alternative splicing is selected,
the selected known protein judged in the step (4) as being a single candidate of identification for the target protein to be analyzed is judged as being a highly accurate single candidate of identification.

8. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in portions of a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, protein splicing that removes a portion of an amino acid sequence thereof would occur, calculating predicted molecular weights (Mref) of a plurality of predicted peptide fragments derived from the protein splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the protein splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the protein splicing is selected,
the selected known protein judged in the step (4) as being a single candidate of identification for the target protein to be analyzed is judged as being a highly accurate single candidate of identification.

9. The method according to claim 3, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for genomic gene portions encoding a group of predicted peptide fragments which are linked to the consecutive amino acid sequence portions contained in the full-length amino acid sequence of the known protein, which are derived from the known protein judged as being a candidate of identification, and which are unidentified by the corresponding actually measured peptide fragments, one replacement of a translated amino acid attributed to single nucleotide polymorphism would occur in an exon contained in the genomic gene portions, calculating predicted molecular weights (Mref) of a plurality of predicted peptide fragments derived from the amino acid replacement of single nucleotide polymorphism, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is judged, wherein
when at least one unidentified actually measured peptide fragment derived from the target protein to be analyzed having the actually measured mass value (Mex) matching to any of the predicted molecular weights (Mref) of the predicted peptide fragments derived from the amino acid replacement of single nucleotide polymorphism is selected,
the selected known protein judged in the step (4) as being a single candidate of identification for the target protein to be analyzed is judged as being a highly accurate single candidate of identification.

10. The method according to claim 1, **characterized in that**
in the case where in referring to sequence information about the selected known protein judged in the step (4) as being a single candidate of identification for the target protein to be analyzed, and
arranging the plurality of the actually measured peptide fragments derived from the target protein to be analyzed that are judged in the first comparison operation of the step (3) as having a match to the predicted molecular weights (Mref) of the plurality of predicted peptide fragments in the set derived from the known protein judged as being a candidate of identification, in positions to be occupied by the corresponding predicted peptide fragments derived from the known protein,
a group of the actually measured peptide fragments that is judged as having a match constitutes consecutive amino acid sequences contained in the full-length amino acid sequence of the known protein except for positions to be occupied by some predicted peptide fragments,
the selected known protein judged in the step (4) as being a single candidate of identification for the target protein to be analyzed is judged as being a highly accurate single candidate of identification.

11. The method according to claim 10, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for a group of predicted peptide fragments which are located within the consecutive amino acid sequences portions contained in the full-length amino acid sequence of the known protein, which are derived from the known protein judged as being a candidate of identification, and which are unidentified by the corresponding actually measured peptide fragments, there would exist post-translational modification attributed to modifying group addition to a side chain of an amino acid residue present in the unidentified predicted peptide fragments, calculating predicted molecular weights (Mref) of predicted peptide fragments having the post-translational modification attributed to modifying group addition to a side chain of an amino acid residue; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is judged, wherein
when at least one unidentified actually measured peptide fragment derived from the target protein to be analyzed having the actually measured mass value (Mex) matching to any of the predicted molecular weights (Mref) of the predicted peptide fragments having the post-translational modification attributed to modifying group addition is selected,
the selected known protein judged in the step (4) as being a single candidate of identification for the target protein to be analyzed is judged as being a highly accurate single candidate of identification.

12. The method according to claim 10, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in genomic gene portions encoding portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, splicing different from presumable RNA splicing in a plurality of exons contained in the genomic gene portions would occur, calculating predicted molecular weights (Mref) of a plurality of predicted peptide fragments derived from the alternative splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the different splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the alternative splicing is selected,
the selected known protein judged in the step (4) as being a single candidate of identification for the target protein to be analyzed is judged as being a highly accurate single candidate of identification.

13. The method according to claim 10, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that in portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, protein splicing that removes a portion of an amino acid sequence thereof would occur, calculating predicted molecular weights (Mref) of a plurality of predicted peptide fragments derived from the protein splicing, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the protein splicing is judged, wherein
when at least one unidentified actually measured peptide fragment derived from the target protein to be analyzed having the actually measured mass value (Mex) matching to any of the predicted molecular weights (Mref) of the predicted peptide fragments derived from the protein splicing is selected,
- the selected known protein judged in the step (4) as being a single candidate of identification for the target protein to be analyzed is judged as being a highly accurate single candidate of identification.

14. The method according to claim 10, **characterized in that**
in the case where there remains a unidentified actually measured peptide fragment derived from the target protein to be analyzed that is not judged in the first comparison operation of the step (3) as having a match to the predicted molecular weights (Mref) of the plurality of predicted peptide fragments in the set derived from the known protein judged as being a candidate of identification, the method further comprises: in regard to the unidentified actually measured peptide fragment derived from the target protein to be analyzed,
on the assumption that for genomic gene portions encoding respective portions of a group of predicted peptide fragments in an internal unidentified region which are located within the consecutive amino acid sequence portions contained in the full-length amino acid sequence of the known protein, which are derived from the known protein judged as being a candidate of identification, and which are unidentified by the corresponding actually measured peptide fragments, one substitution of a translated amino acid attributed to single nucleotide polymorphism would occur in an exon contained in the genomic gene portions, calculating predicted molecular weights (Mref) of a plurality of predicted peptide fragments derived from the amino acid substitution of single nucleotide polymorphism, presumably generated by subjecting an assumed amino acid sequence of the known protein to the introduction treatment of a protecting group and to the site-specific proteolytic treatment; and
performing a second comparison operation whereby the presence or absence of the unidentified actually measured peptide fragment derived from the target protein to be analyzed having the actually measured mass value (Mex) matching to any of the predicted molecular weights (Mref) of the predicted peptide fragments derived from the amino acid substitution of single nucleotide polymorphism is judged, wherein
when at least one unidentified actually measured peptide fragment derived from the target protein to be analyzed having the actually measured mass value (Mex) matching to any of the predicted molecular weights (Mref) of the predicted peptide fragments derived from the amino acid substitution of single nucleotide polymorphism is selected,
the selected known protein judged in the step (4) as being a single candidate of identification for the target protein to be analyzed is judged as being a highly accurate single candidate of identification.

15. The method according to any one of claims 4 to 9 and 11 to 14,
**characterized in that**
the method further comprises: at least in the second comparison operation,
utilizing as the mass spectrometric result actually measured for the target protein to be analyzed,
in addition to the set of the respective actually measured mass values (Mex) of the plurality of peptide fragments that are determined based on a result for masses (M) of the plurality of generated peptide fragments measured by mass spectrometry as molecular weights (M+H/Z; Z=1) of corresponding monovalent "parent cation species" or as molecular weights (M-H/Z; Z=1) of corresponding monovalent "parent anion species",
also at least a result of molecular weights of fragmented derivative ion species measured by MS/MS analysis for the actually measured peptide fragment derived from the target protein to be analyzed that is judged in the first comparison operation as being the unidentified actually measured peptide fragment derived from the target protein to be analyzed as "daughter ion species" derived from the "parent cation species" of the peptide fragment or as "daughter ion species" derived from the "parent anion species" of the peptide fragment;
in regard to the actually measured peptide fragment derived from the target protein to be analyzed newly selected in the second comparison operation as being the unidentified actually measured peptide fragment derived from the target protein to be analyzed having the actually measured mass value (Mex) matching to any of the predicted molecular weights (Mref) of the predicted peptide fragments,
performing comparison whereby molecular weights of fragmented derivative ion species presumably generated in MS/MS analysis due to the assumed amino acid sequence and additional modification group constituting the corresponding predicted peptide fragment are also compared with the actually measured result of the molecular weights of the fragmented derivative ion species for the actually measured peptide fragment derived from the target protein to be analyzed; and
when correspondence relationship is also confirmed at least between the actually measured result of the molecular weights of the fragmented derivative ion species for the actually measured peptide fragment derived from the target protein to be analyzed and the predicted values of the molecular weights of the predicted fragmented derivative ion species for the corresponding predicted peptide fragment,
regarding as judgment with high accuracy, the judgment of the actually measured peptide fragment derived from the target protein to be analyzed selected in the second comparison operation, wherein
the selected known protein judged in the step (4) as being a single candidate of identification for the target protein to be analyzed is judged as being a highly accurate single candidate of identification.

16. The method according to any one of claims 1 to 15, **characterized in that**
the method further comprises prior to the site-specific proteolytic treatment, performing on the linearized peptide chain, selective introduction of a protecting group for the sulfanyl (-SH) group on the Cys side chain, to prepare the resulting linearized peptide chain having the protected Cys.
